# EUROPEAN PATENT APPLICATION

(11) **EP 2 006 095 A2**
(43) Date of publication of application: **24.12.2008**
(21) Application number: 08011158.6
(22) Date of filing: 19.06.2008
(51) Int. Cl.: B41F 9/00, B41F 33/00

(54) **Printing quality control method and apparatus for printing press**

(30) Priority: 21.06.2007 JP 2007163379
(71) Applicant: Komori Corporation, Sumida-ku Tokyo (JP)
(72) Inventor: Kumagai, Norihiro, Noda-shi Chiba (JP); Numauchi, Hiromitsu, Tsukuba-shi Ibaraki (JP); Kusaka, Akehiro, Noda-shi Chiba (JP)
(74) Representative: UEXKÜLL & STOLBERG

(57) **Abstract**

A printing quality control method and apparatus are disclosed for an intaglio printing press including an intaglio cylinder (14) which is supplied with ink, an impression cylinder (13) opposing the intaglio cylinder (14), and holding a sheet (W) which is supplied with the ink from the intaglio cylinder (14), and a motor (45) for adjusting a printing pressure between the intaglio cylinder (14) and the impression cylinder (13). The emboss amount of a printing product of printing by the intaglio printingpress ismeasuredbya face side distance measuring instrument (50) and a reverse side distance measuring instrument (51), and the motor (45) for adjusting the printing pressure between the intaglio cylinder (14) and the impression cylinder (13) is drivingly controlled based on the emboss amount measured.

## Description

### Technical Field

This invention relates to a printing quality control method and apparatus for an intaglio printing press or a relief printing press.

### Background Art

Generally, intaglio printing is often used in expectation of the effect of imparting thickness to ink. By so doing, the resulting printing product of ten becomes pleasing to the touch, giving a feeling of a high grade. With the intaglio printing, an embossing effect by a high printing pressure, or thick application of ink can provide the printing product with a feeling of irregularities. The application of a thick layer of ink also enables varying densities of ink to be expressed.

To inspect the above feeling of irregularities, the use of the existing ink densitometer is conceivable. With intaglioprinting, however, even when the density of a deep color such as black is measured with a densitometer, it shows nearly the highest value, because of a thick ink film. This means that the measurement of the density is substantially impossible. If a color patch of a certain size for density measurement is provided, ink of this portion is scraped off by wiping, thereby producing a difference in density between the color patch and an actual image portion. This has presented the drawback that the density of the actual image portion cannot be measured.

It has been customary practice, therefore, that an operator visually confirms the ink density (ink film thickness) of the image portion of the resulting printing product, or confirms an embossed portion of the printing product by touch. Based on the operator's subjective evaluation, the operator adjusts the nip pressure or printing pressure between an ink fountain roller and an ink form roller, between the ink form roller and a pattern roller, between the pattern roller and a blanket cylinder, between the blanket cylinder and an intaglio cylinder, and between the intaglio cylinder and an impression cylinder, in the case of Orloff printing. In the case of direct printing, on the other hand, the operator adjusts the nip pressure or printing pressure between an ink fountain roller and a pattern cylinder, between the pattern cylinder and an intaglio cylinder, and between the intaglio cylinder and an impression cylinder.

In relief printing, an ink film is so thin that the density of its color, if measured with a densitometer, shows a nearly minimum value, meaning that the measurement of the density is substantially impossible. Thus, an operator visually confirms the ink density (ink film thickness) of the resulting printing product. Based on the operator's subjective evaluation, the operator adjusts the nip pressure or printing pressure between an ink form roller and a plate cylinder, between the plate cylinder and a blanket cylinder, and between the blanket cylinder and an impression cylinder.

JP-UM-A-1-171642, JP-A-2002-1904, and JP-UM-A-3-124838 are examples of documents on the above-mentioned related art.

As statedabove, the operator visually confirms the ink density (ink film thickness), or confirms the embossed portion by touch. Based on the operator's subjective evaluation, the operator adjusts the nip pressure or printing pressure. Thus, the problems have been posed that the operator is burdened, and mis adjustment occurs, causing a defective printing product.

The present invention has been accomplished in light of the above-describedproblems. It is an obj ect of the invention to provide a printing quality control method and apparatus for a printing press whichmeasure the emboss amount or the ink film thickness of a printing product, and can automatically adjust the nip pressure or printing pressure of each part in the printing press in accordance with the emboss amount or the ink film thickness.

### Summary of the Invention

A first aspect of the present invention is a printing quality control method for a printing press, which is an intaglio printing press including
an intaglio cylinder which is supplied with ink,
an impression cylinder opposing the intaglio cylinder, and holding a member to be printed which is supplied with the ink from the intaglio cylinder, and
printing pressure adjusting means for adjusting a printing pressure between the intaglio cylinder and the impression cylinder,
the printing quality control method, comprising:
providing emboss amount measuring means for measuring an emboss amount of a printing product of printing by the intaglio printing press;
measuring the emboss amount of the printingproduct of printing by the intaglio printing press; and
controlling the printing pressure adjusting means based on the emboss amount measured.

A second aspect of the present invention is a printing quality control method for a printing press, which is an intaglio printing press or a relief printing press including
a first rotating part which is supplied with ink,
a second rotating part which is supplied with the ink from the first rotating part, and
contact pressure adjusting means for adjusting a contact pressure between the first rotating part and the second rotating part,
the printing quality control method, comprising:
providing ink film thickness measuring means for measuring an ink film thickness of a printing product of printing by the intaglio printing press or the relief printing press;
measuring the ink film thickness of the printing product of printing by the intaglio printing press or the relief printing press; and
controlling the contact pressure adjusting means based on the ink film thickness measured.

A third aspect of the present invention is a printing quality control method for a printing press, which is an intaglio printing press or a relief printing press including
a first rotating part which is supplied with ink,
a second rotating part opposing the first rotating part, and holding a member to be printed which is supplied with the ink from the first rotating part, and
printing pressure adjusting means for adjusting a printing pressure between the first rotating part and the second rotating part,
the printing quality control method, comprising:
providing ink film thickness measuring means for measuring an ink film thickness of a printing product of printing by the intaglio printing press or the relief printing press;
measuring the ink film thickness of the printing product of printing by the intaglio printing press or the relief printing press; and
controlling the printing pressure adjusting means based on the ink film thickness measured.

A fourth aspect of the present invention is a printing quality control apparatus for a printing press, which is an intaglio printing press including
an intaglio cylinder which is supplied with ink,
an impression cylinder opposing the intaglio cylinder, and holding a member to be printed which is supplied with the ink from the intaglio cylinder, and
printing pressure adjusting means for adjusting a printing pressure between the intaglio cylinder and the impression cylinder,
the printing quality control apparatus, comprising:
emboss amount measuring means for measuring an emboss amount of a printing product of printing by the intaglio printing press; and
control means for controlling the printing pressure adjusting means based on the emboss amount measured by the emboss amount measuring means.

A fifth aspect of the present invention is a printing quality control apparatus for a printing press, which is an intaglio printing press or a relief printing press including
a first rotating part which is supplied with ink,
a second rotating part which is supplied with the ink from the first rotating part, and
contact pressure adjusting means for adjusting a contact pressure between the first rotating part and the second rotating part,
the printing quality control apparatus, comprising:
ink film thickness measuring means for measuring an ink film thickness of a printing product of printing by the intaglio printing press or the relief printing press; and
control means for controlling the contact pressure adjusting means based on the ink film thickness measured by the ink film thickness measuring means.

A sixth aspect of the present invention is a printing quality control apparatus for a printing press, which is an intaglio printing press or a relief printing press including
a first rotating part which is supplied with ink,
a second rotating part opposing the first rotating part, and holding a member to be printed which is supplied with the ink from the first rotating part, and
printing pressure adjusting means for adjusting a printing pressure between the first rotating part and the second rotating part,
the printing quality control apparatus, comprising:
ink film thickness measuring means for measuring an ink film thickness of a printing product of printing by the intaglio printing press or the relief printing press; and
control means for controlling the printing pressure adjusting means based on the ink film thickness measured by the ink film thickness measuring means.

The above-described printing quality control method and apparatus for a printing press according to the present invention measure the emboss amount or the ink film thickness of a printing product, and automatically adjust the nip pressure or printing pressure in each part of the printing press in accordance with the emboss amount or ink film thickness measured. Thus, printing troubles due tomisadjustment of the nippressure or printing pressure can be avoided. Consequently, burden on the operator canbe lessened, and the emboss amount and the ink film thickness can be controlled with high accuracy to decrease defective printing products (wasted sheets).

### Brief Description of the Drawings

The present invention will become more fully understood from the detailed description given hereinbelow and the accompanying drawings which are given by way of illustration only, and thus are not limitative of the present invention, and wherein:
Fig. 1(a) is a control block diagram of a control device showing Embodiment 1 of the present invention;
Fig. 1(b) is a control block diagram of the control device;
Fig. 1(c) is a control block diagram of the control device;
Fig. 2(a) is a motion flow chart of the control device;
Fig. 2(b) is a motion flow chart of the control device;
Fig. 2(c) is a motion flow chart of the control device;
Fig. 2(d) is a motion flow chart of the control device;
Fig. 2(e) is a motion flow chart of the control device;
Fig. 3(a) is a motion flow chart of the control device;
Fig. 3(b) is a motion flow chart of the control device;
Fig. 3(c) is a motion flow chart of the control device;
Fig. 3(d) is a motion flow chart of the control device;
Fig. 3(e) is a motion flow chart of the control device;
Fig. 3(f) is a motion flow chart of the control device;
Fig. 4(a) is a motion flow chart of the control device;
Fig. 4(b) is a motion flow chart of the control device;
Fig. 4(c) is a motion flow chart of the control device;
Fig. 4(d) is a motion flow chart of the control device;
Fig. 5(a) is a motion flow chart of the control device;
Fig. 5(b) is a motion flow chart of the control device;
Fig. 5(c) is a motion flow chart of the control device;
Fig. 5(d) is a motion flow chart of the control device;
Fig. 6(a) is a motion flow chart of the control device;
Fig. 6(b) is a motion flow chart of the control device;
Fig. 7 is a schematic configurational drawing of an Orloff intaglio printing press;
Fig. 8 is an explanation drawing of a nip pressure adjusting mechanism for a nip pressure between an ink fountain roller and an ink form roller;
Fig. 9 is an explanation drawing of a nip pressure adjusting mechanism for a nip pressure between the ink form roller and a pattern roller;
Fig. 10 is an explanation drawing of a nip pressure adjusting mechanism for a nip pressure between the pattern roller and a blanket cylinder;
Fig. 11 is an explanation drawing of a nip pressure and printing pressure adjusting mechanism for a nippressure and a printing pressure between the blanket cylinder and an intaglio cylinder and between the intaglio cylinder and an impression cylinder;
Fig. 12(a) is a plan view of a printing product inspection device;
Fig. 12(b) is a side sectional view of the printing product inspection device;
Fig. 13 is a view of the printing condition of an embossed portion;
Fig. 14 is an explanation drawing of a color patch;
Fig. 15(a) is a control block diagram of a control device showing Embodiment 2 of the present invention;
Fig. 15(b) is a control block diagram of the control device;
Fig. 15(c) is a control block diagram of the control device;
Fig. 16(a) is a motion flow chart of the control device;
Fig. 16(b) is a motion flow chart of the control device;
Fig. 16(c) is a motion flow chart of the control device;
Fig. 17(a) is a motion flow chart of the control device;
Fig. 17(b) is a motion flow chart of the control device;
Fig. 17(c) is a motion flow chart of the control device;
Fig. 17(d) is a motion flow chart of the control device;
Fig. 17(e) is a motion flow chart of the control device;
Fig. 17(f) is a motion flow chart of the control device;
Fig. 18(a) is a motion flow chart of the control device;
Fig. 18(b) is a motion flow chart of the control device;
Fig. 18(c) is a motion flow chart of the control device;
Fig. 18(d) is a motion flow chart of the control device;
Fig. 19(a) is a motion flow chart of the control device;
Fig. 19(b) is a motion flow chart of the control device;
Fig. 20 is a schematic configurational drawing of a direct intaglio printing press;
Fig. 21(a) is a control block diagram of a control device showing Embodiment 3 of the present invention;
Fig. 21(b) is a control block diagram of the control device;
Fig. 21(c) is a control block diagram of the control device;
Fig. 22(a) is a motion flow chart of the control device;
Fig. 22(b) is a motion flow chart of the control device;
Fig. 22(c) is a motion flow chart of the control device;
Fig. 23(a) is a motion flow chart of the control device;
Fig. 23(b) is a motion flow chart of the control device;
Fig. 23(c) is a motion flow chart of the control device;
Fig. 23(d) is a motion flow chart of the control device;
Fig. 23(e) is a motion flow chart of the control device;
Fig. 24(a) is a motion flow chart of the control device;
Fig. 24(b) is a motion flow chart of the control device;
Fig. 24(c) is a motion flow chart of the control device;
Fig. 24(d) is a motion flow chart of the control device;
Fig. 25(a) is a motion flow chart of the control device;
Fig. 25(b) is a motion flow chart of the control device; and
Fig. 26 is a schematic configurational drawing of a relief printing press.

### Detailed Description

The printing quality control method and apparatus for a printing press according to the present invention will be described in detail by preferred embodiments of the invention by reference to the accompanying drawings.

### Embodiment 1

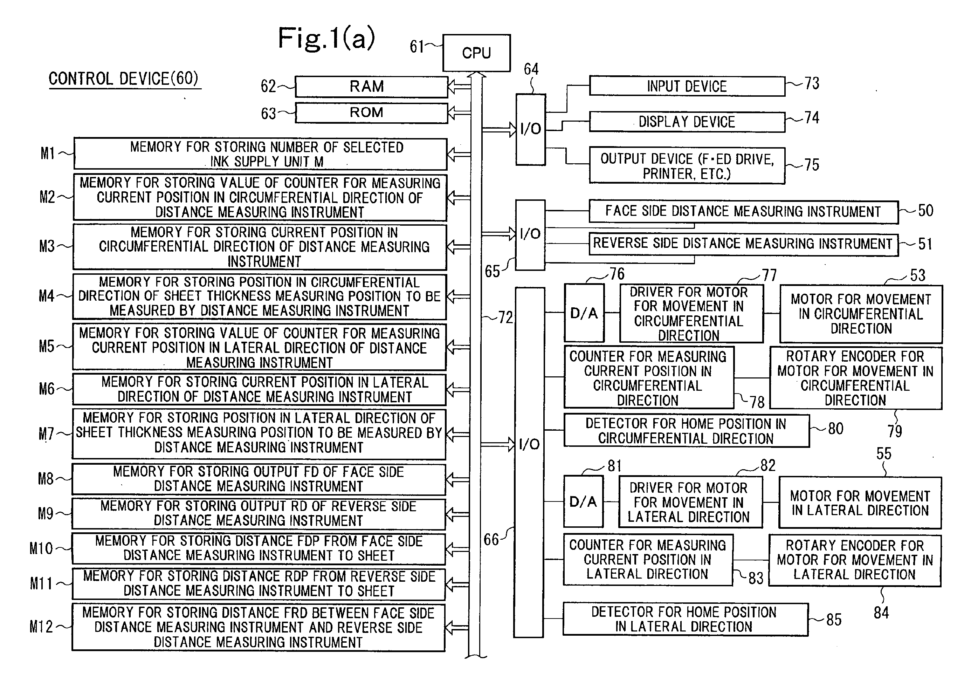

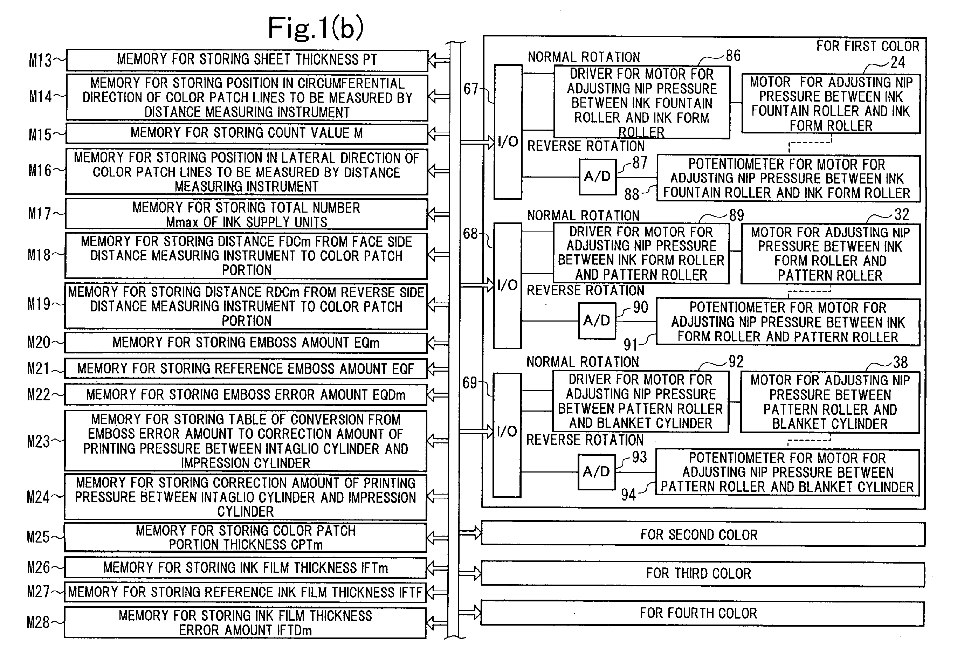

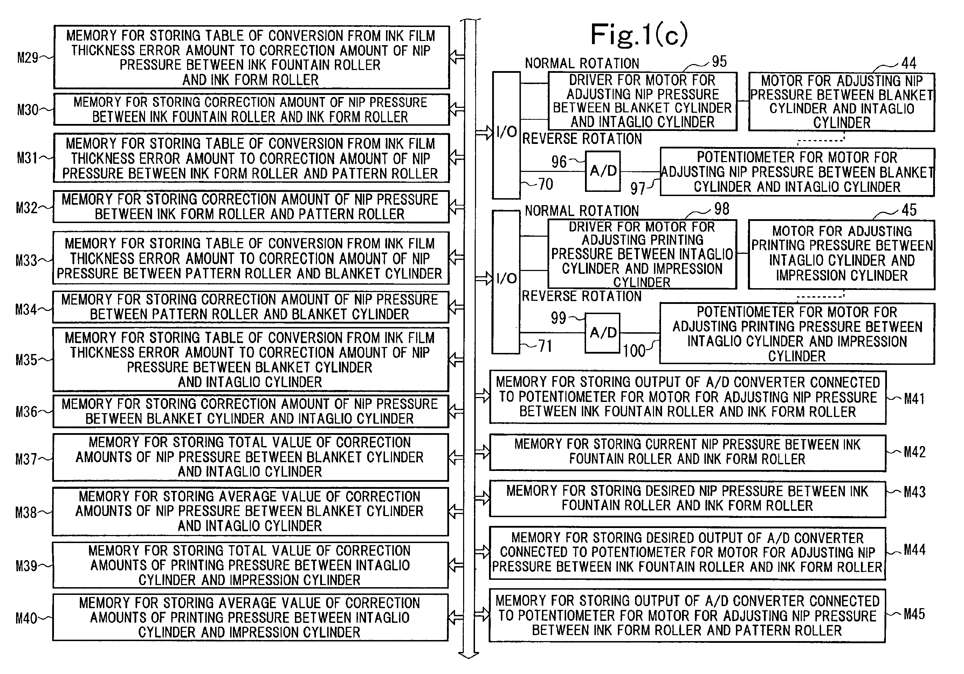

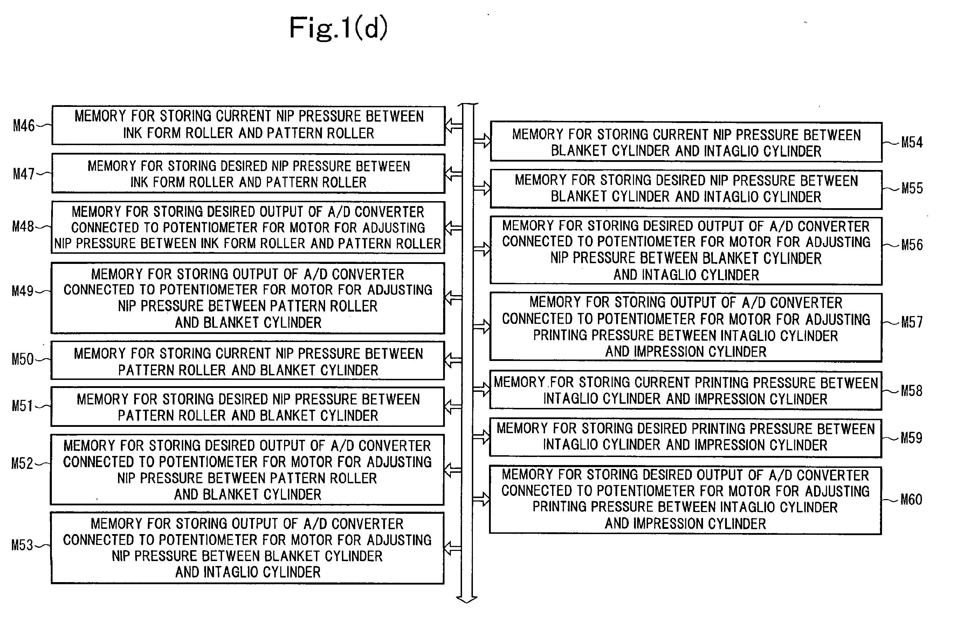

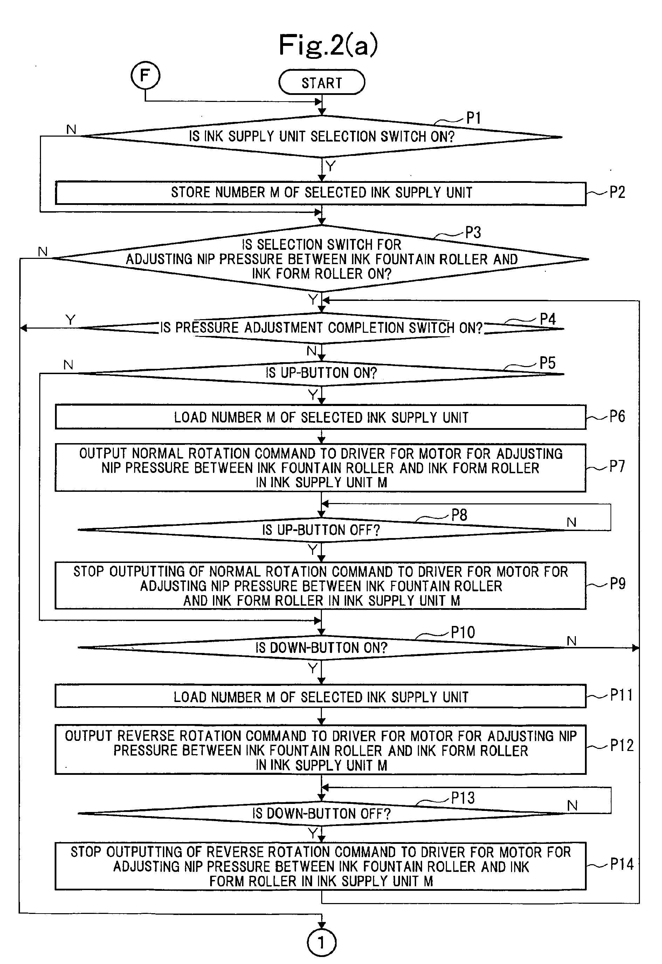

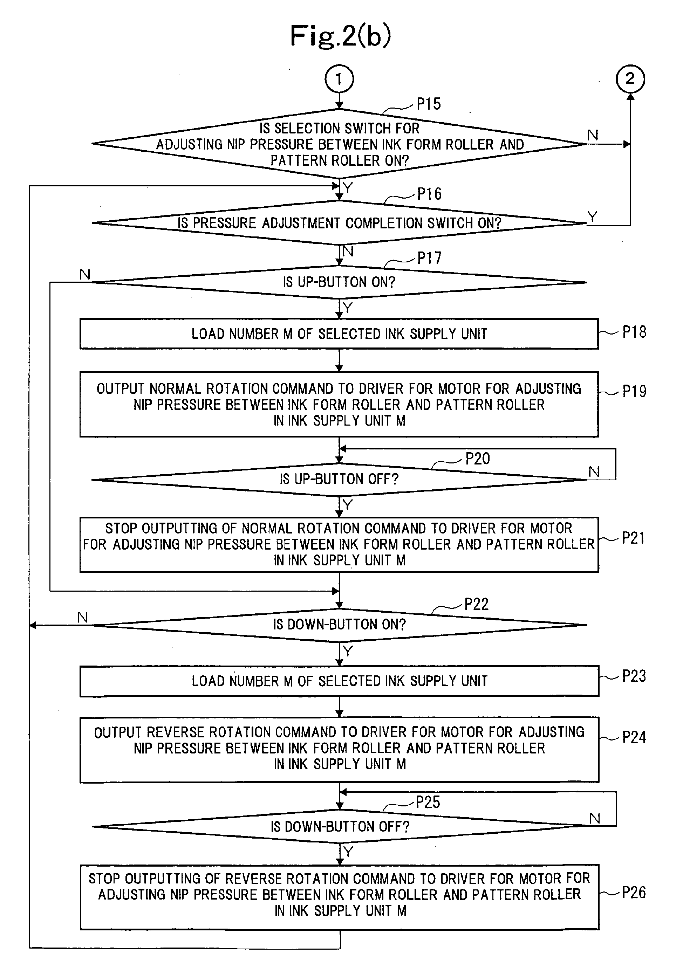

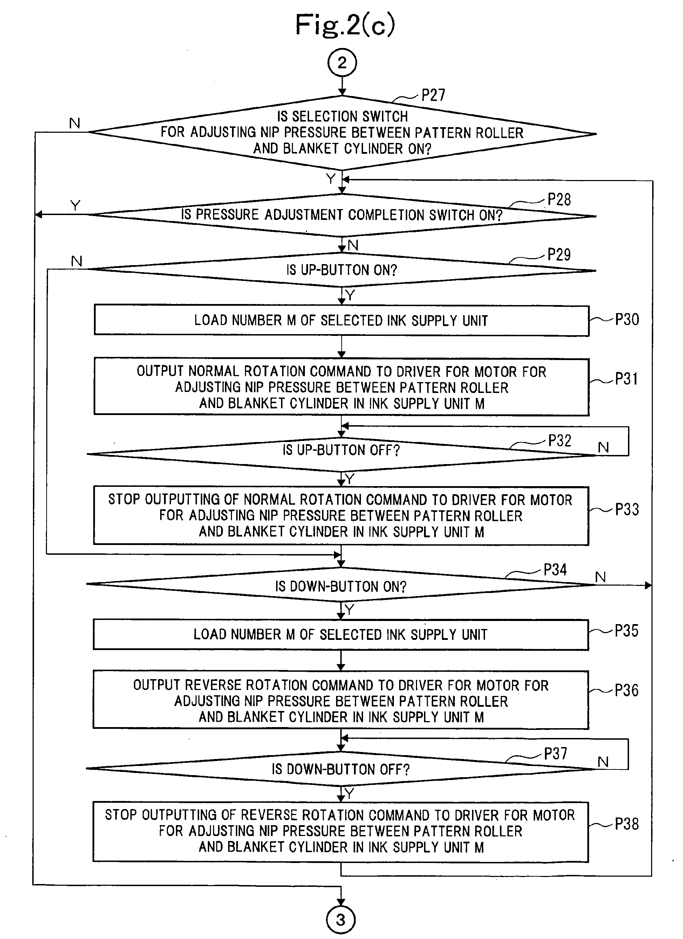

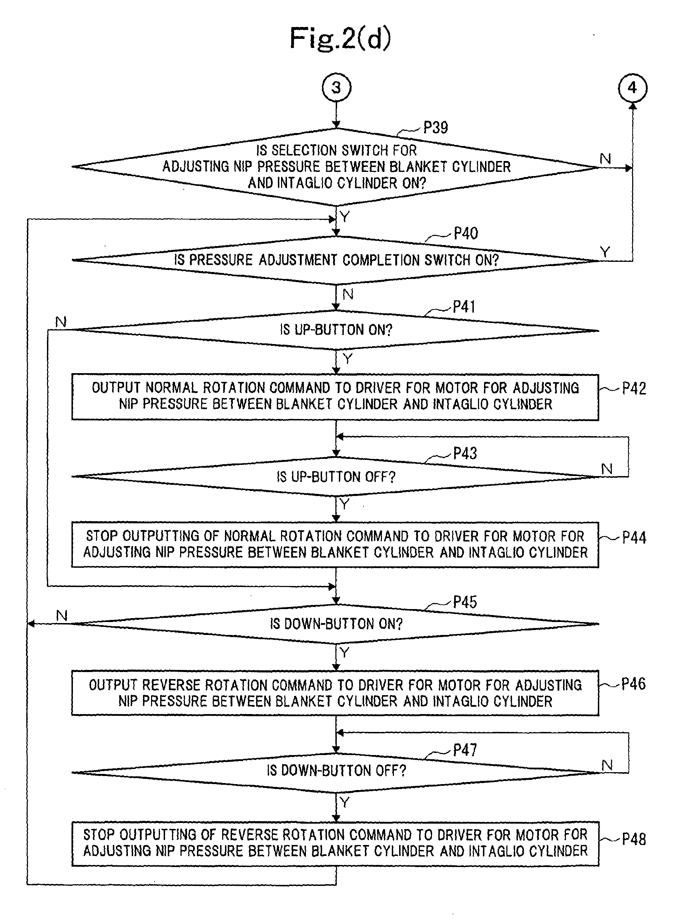

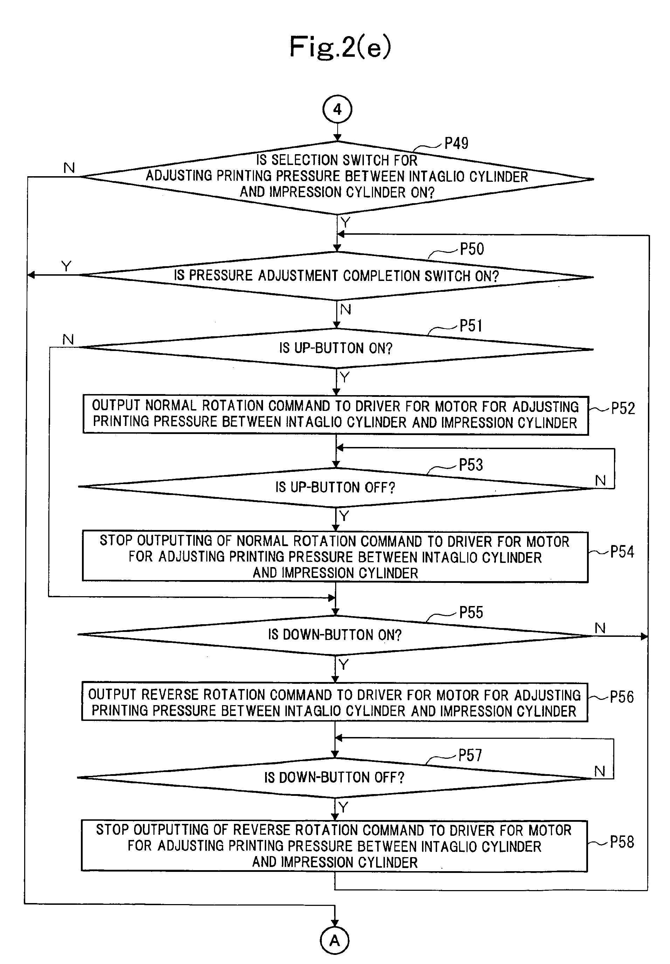

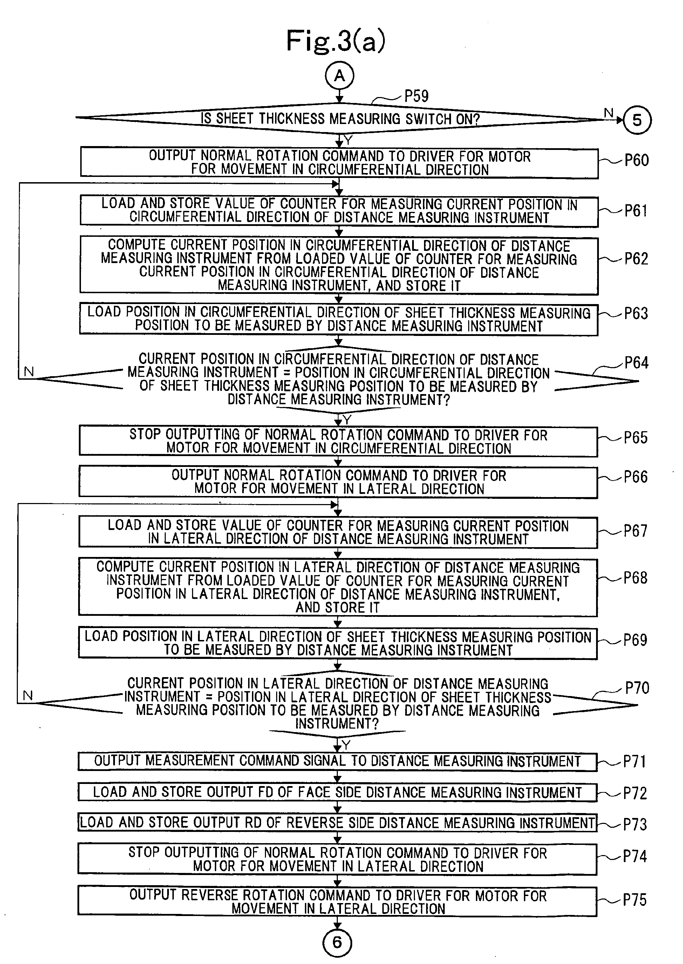

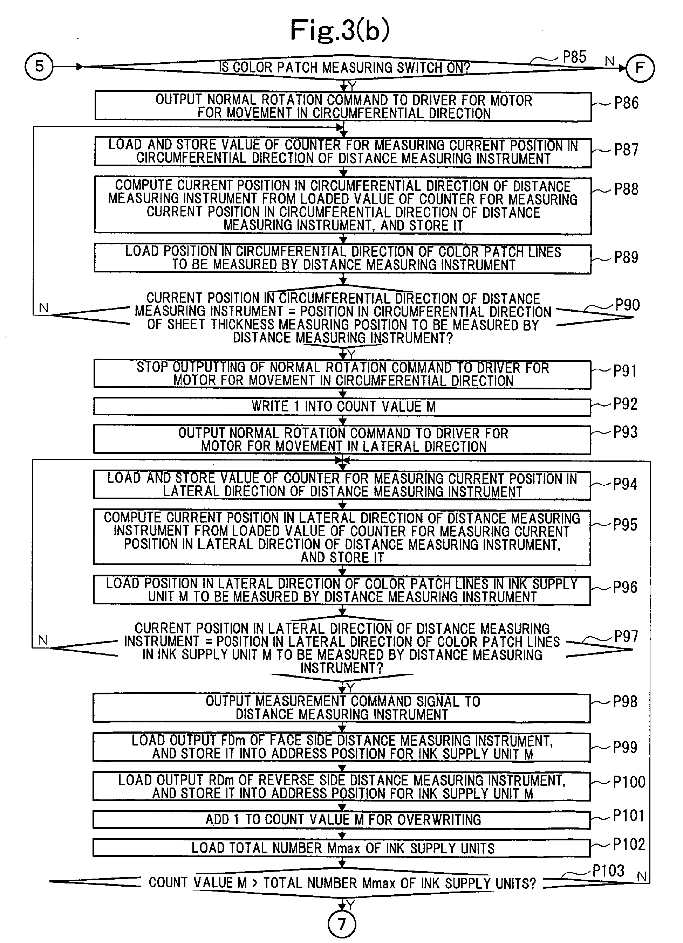

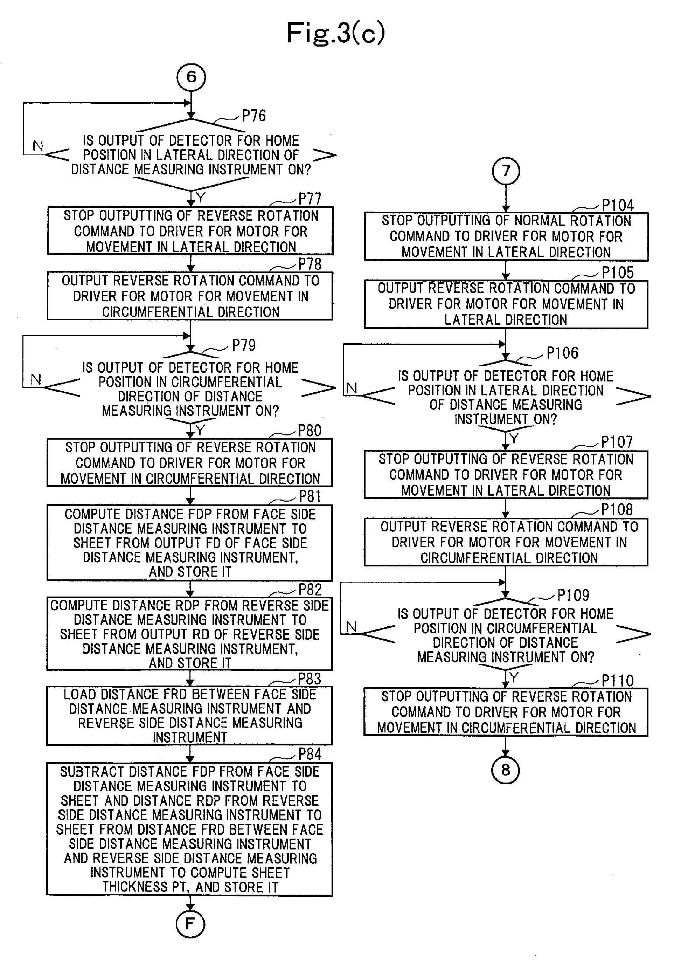

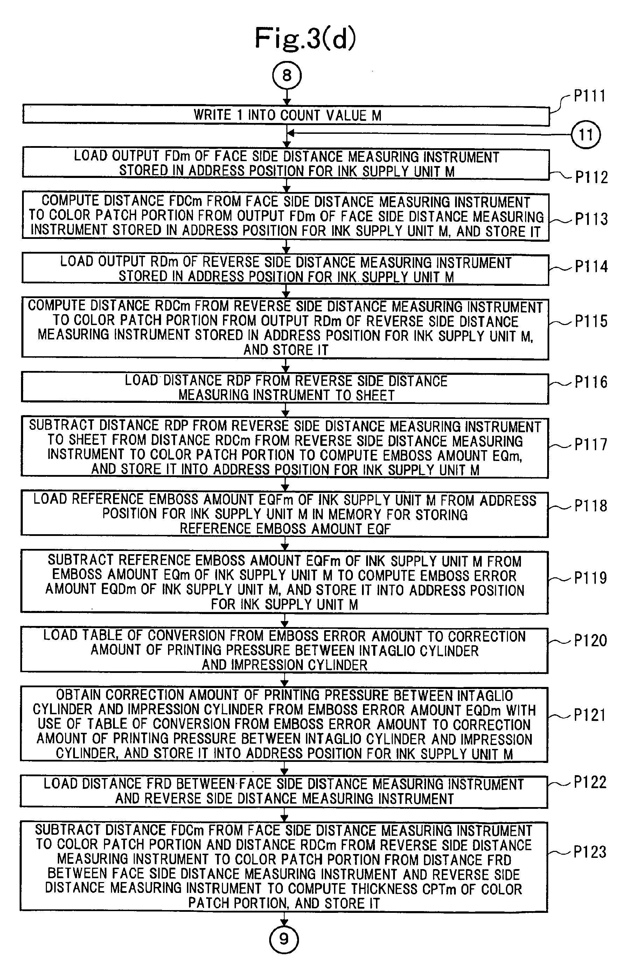

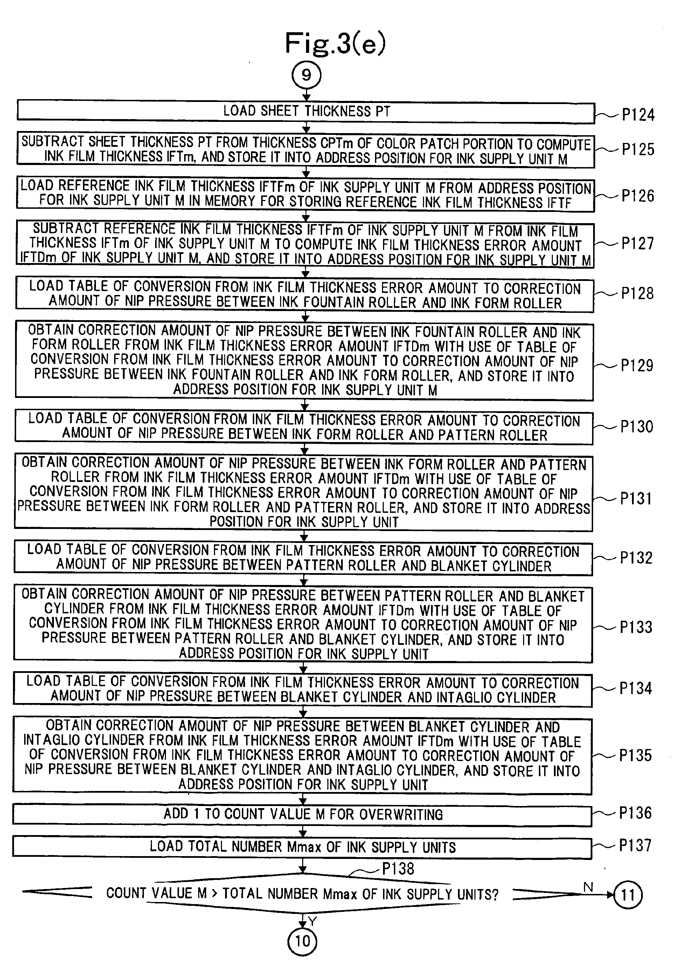

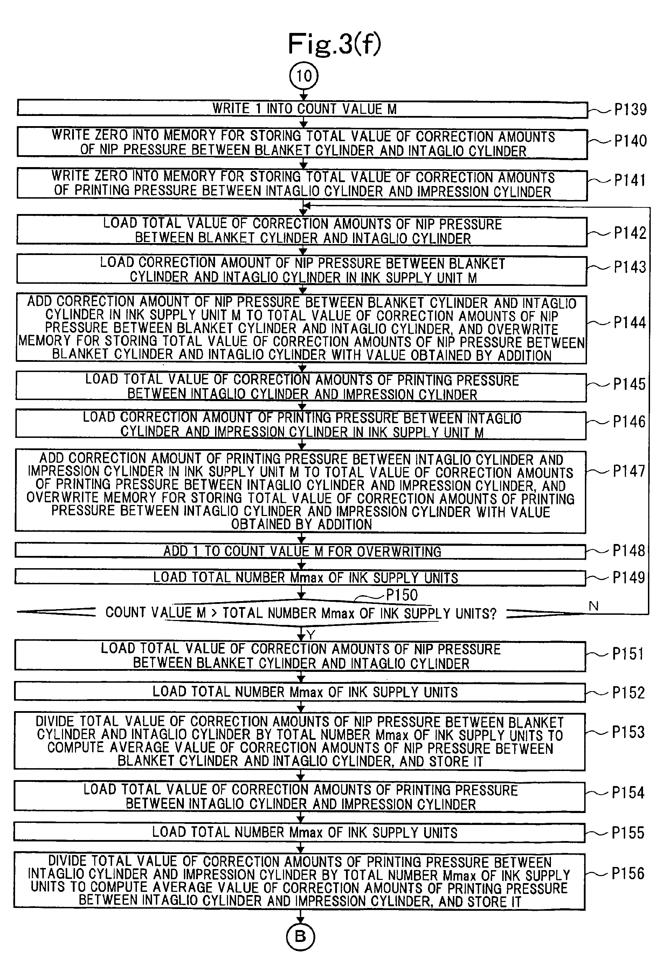

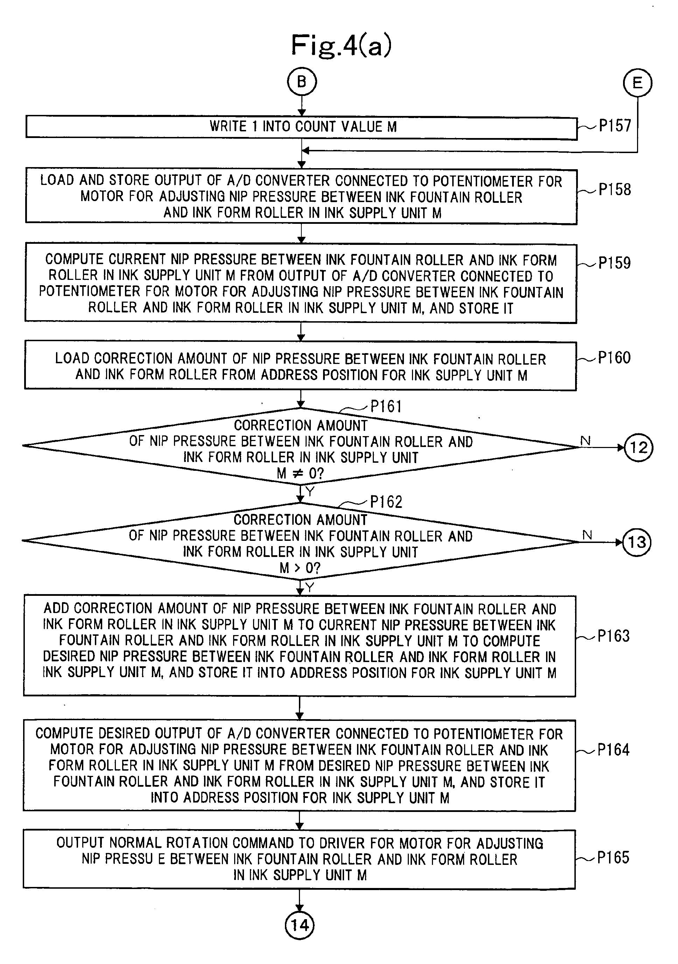

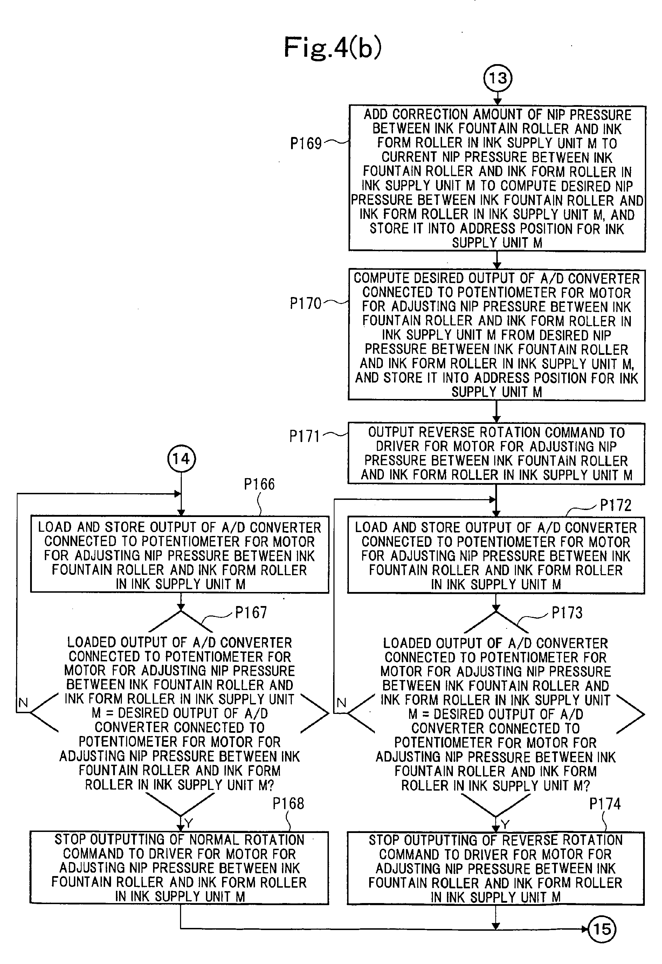

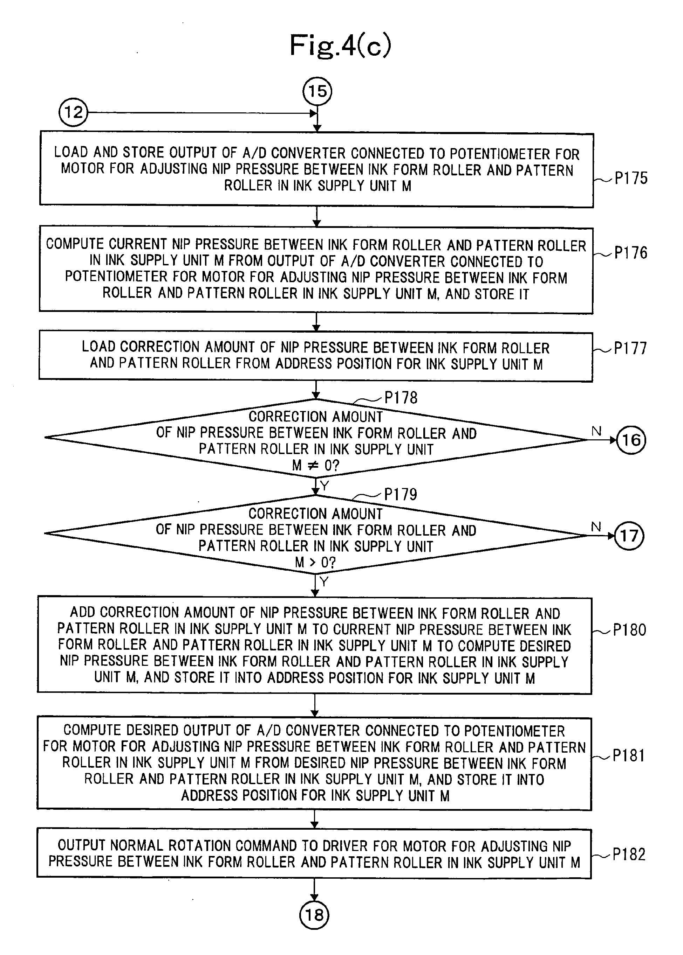

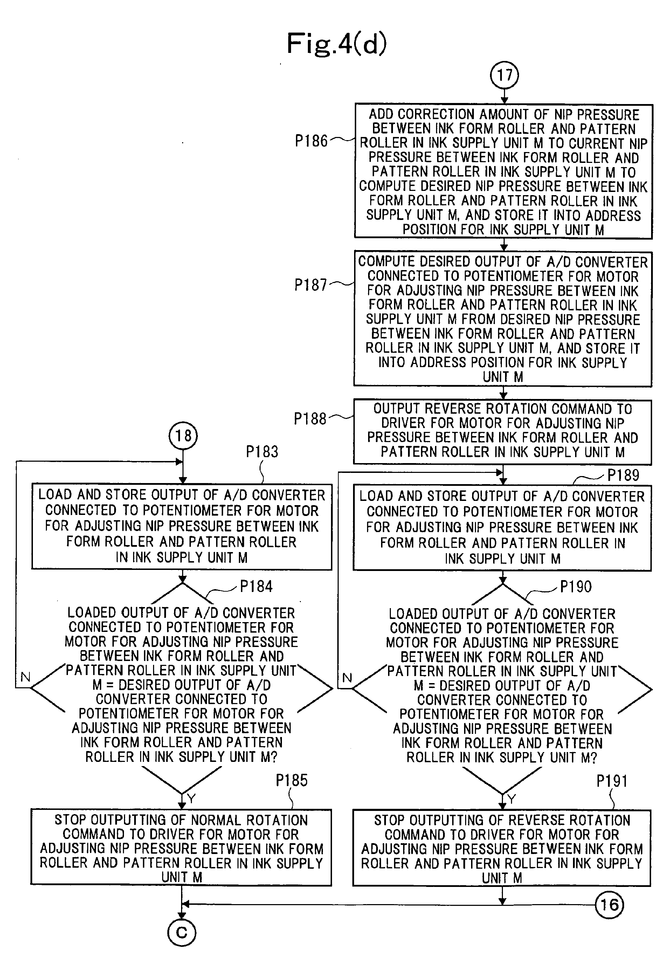

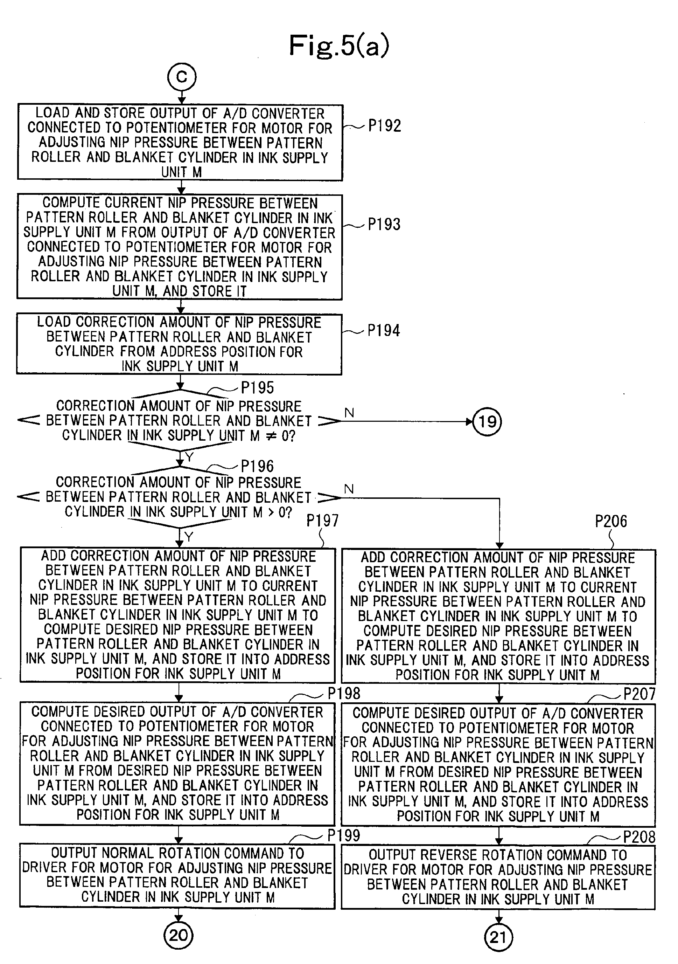

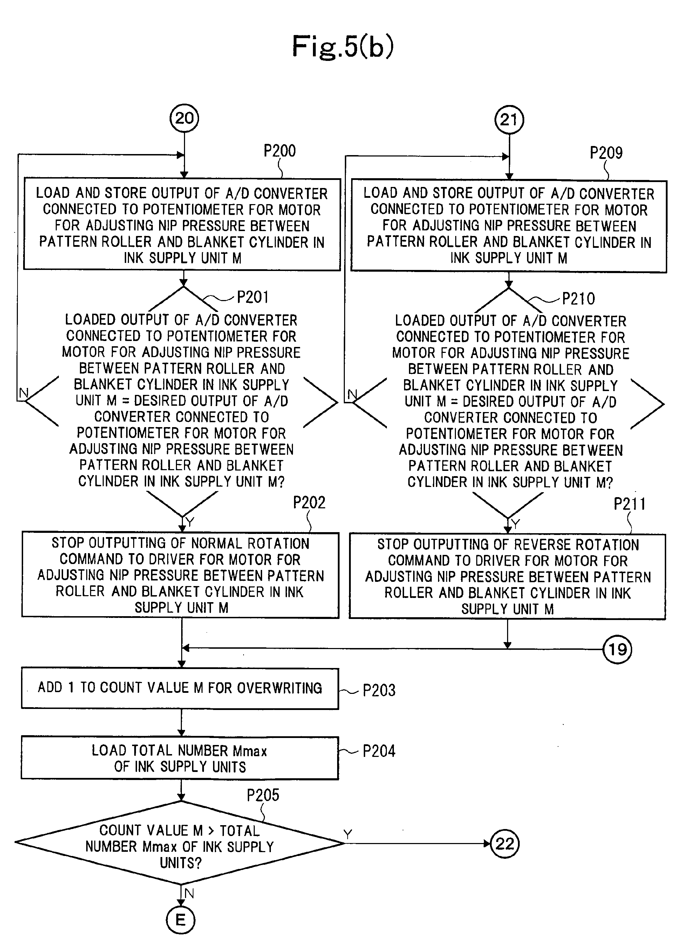

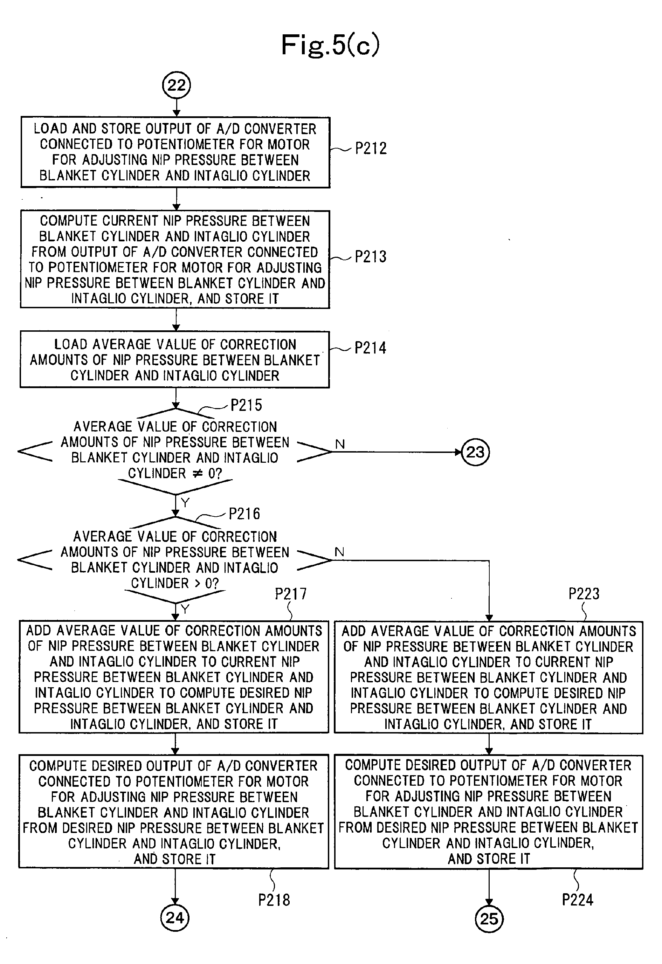

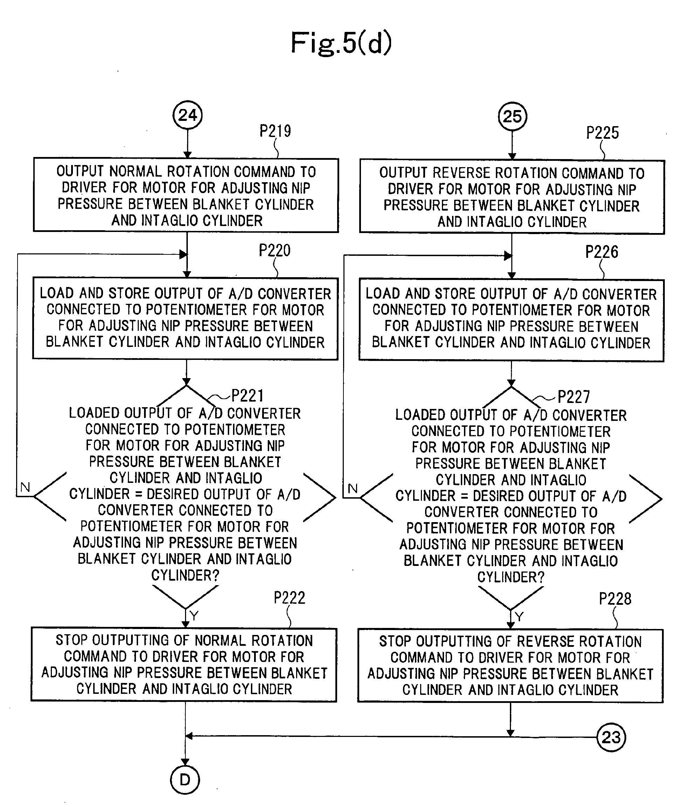

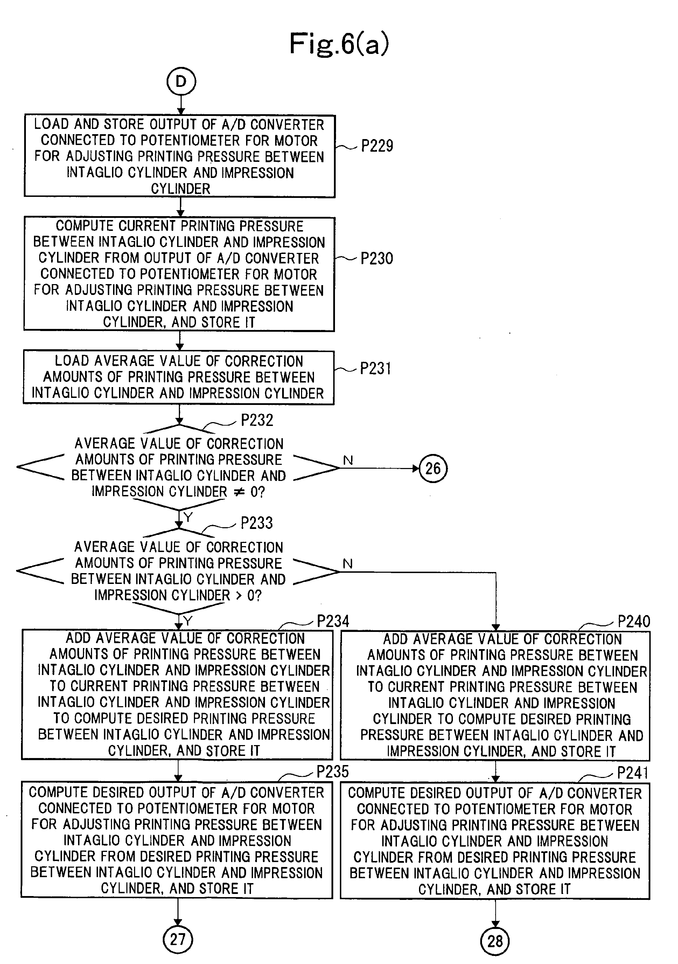

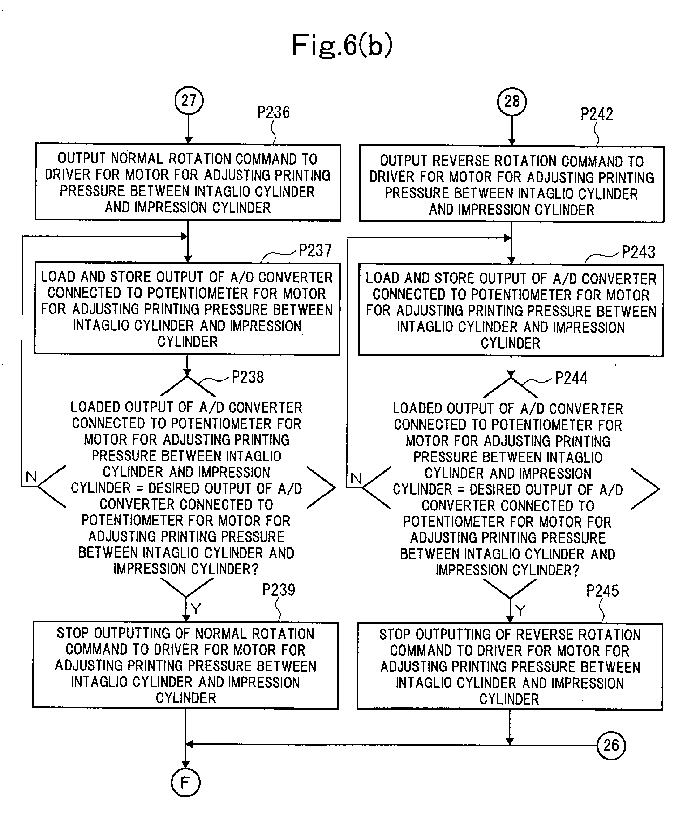

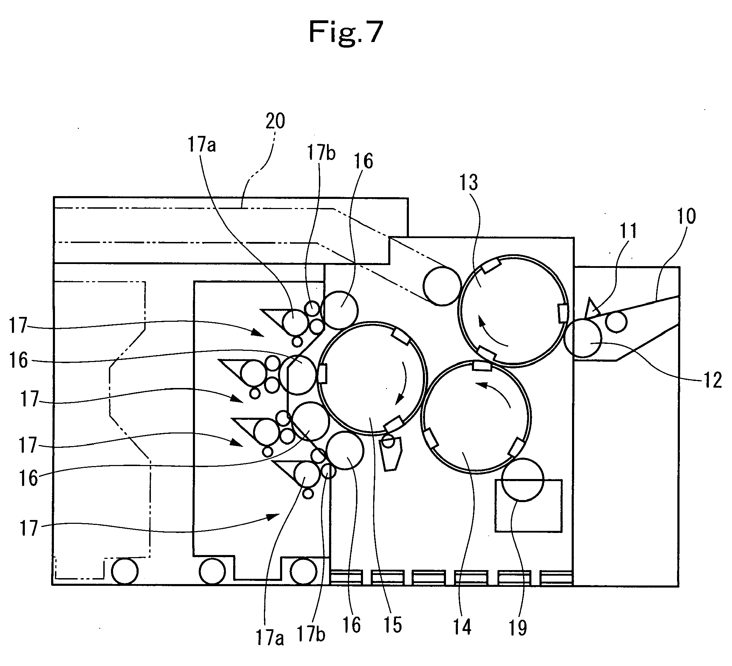

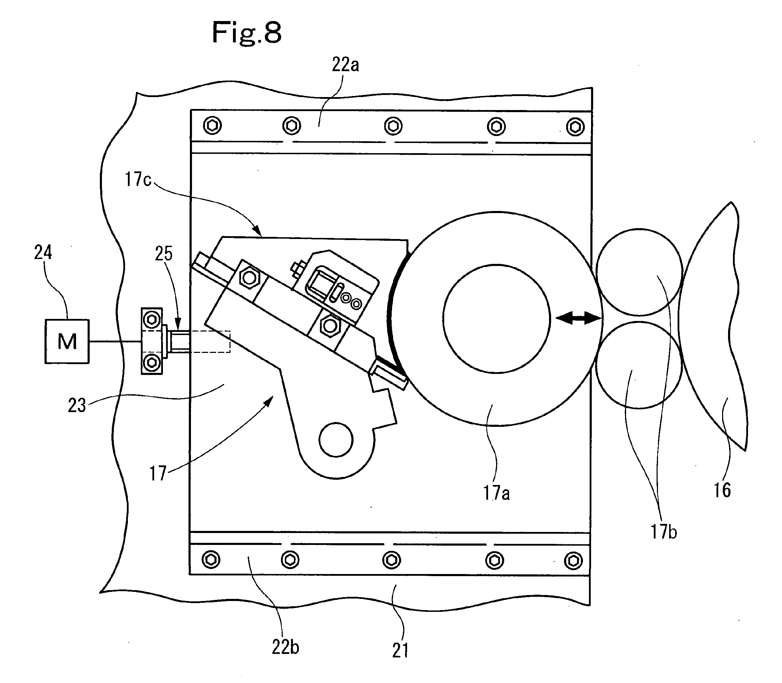

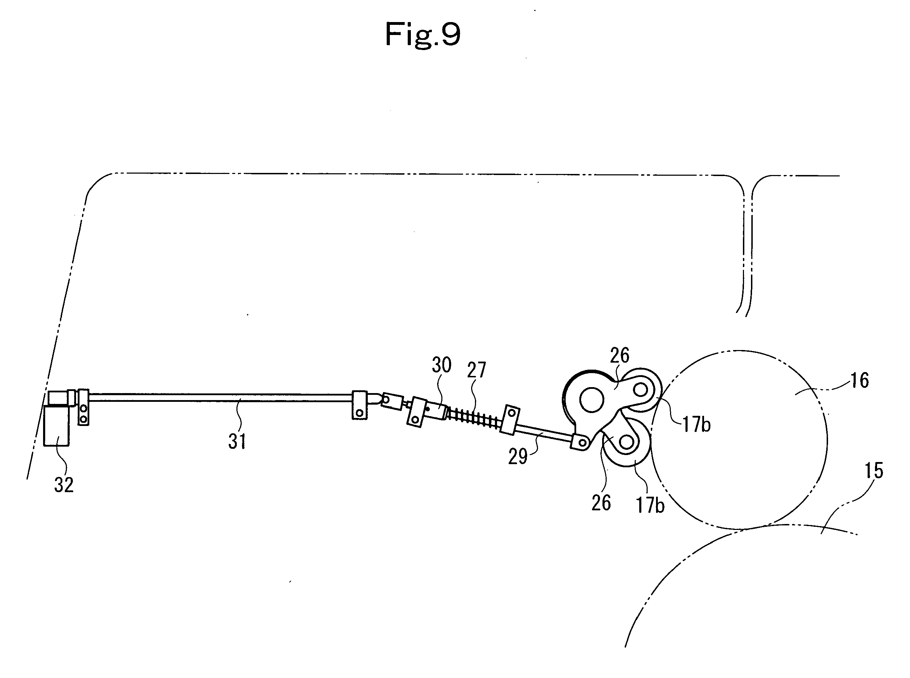

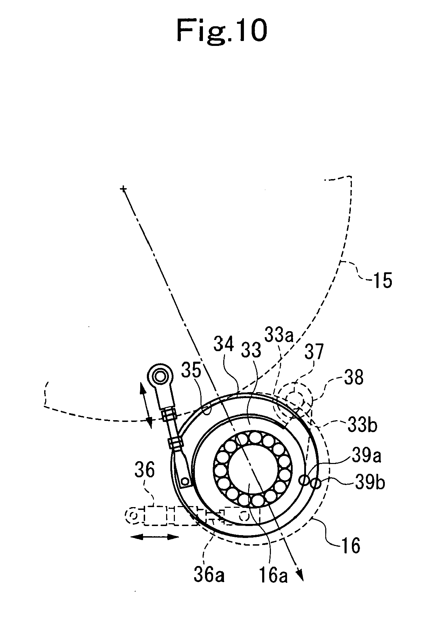

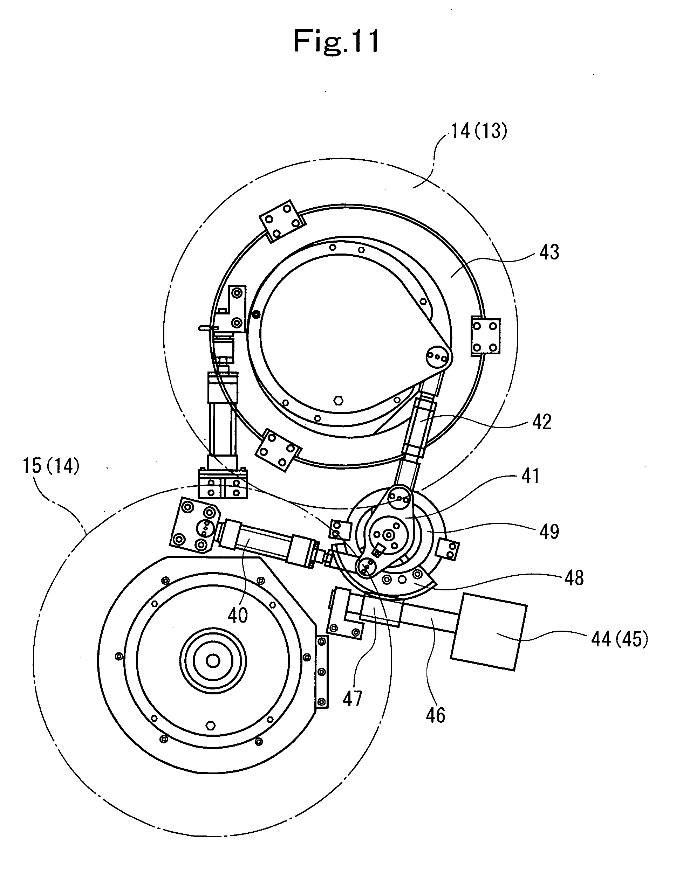

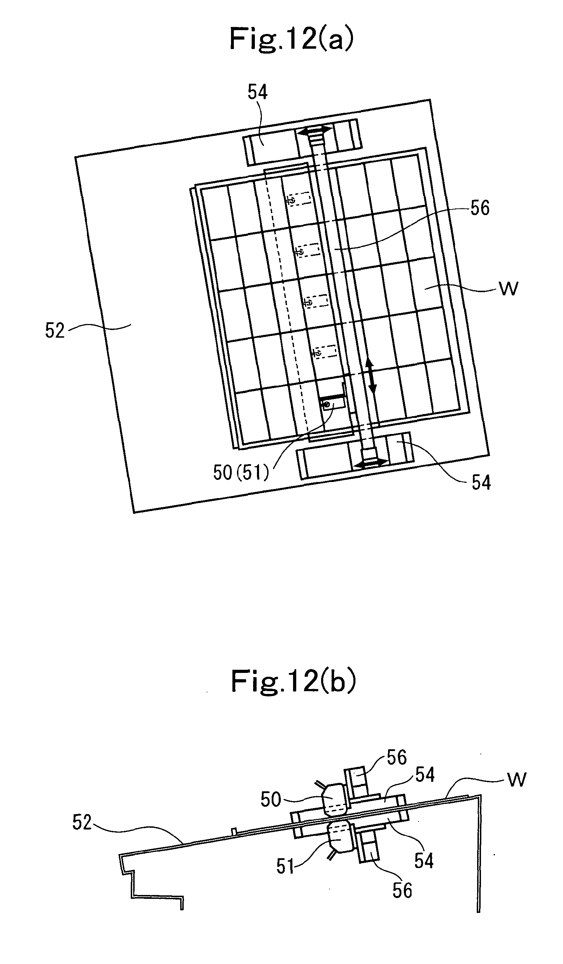

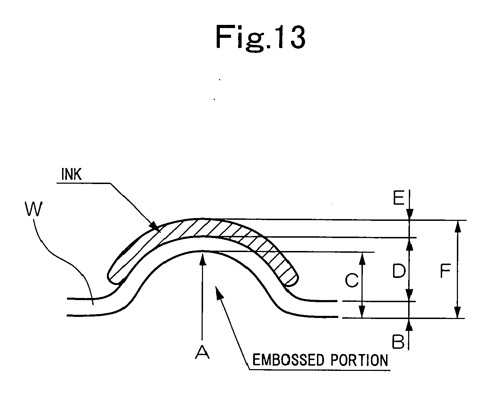

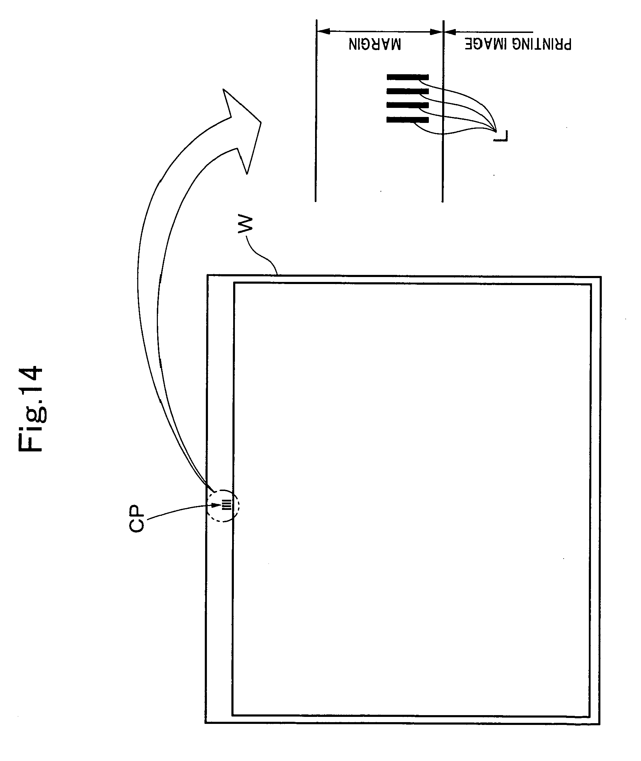

Figs. 1(a) to 1(c) are control block diagrams of a control device showing Embodiment 1 of the present invention. Figs. 2(a) to 2(e) are motion flow charts of the control device. Figs. 3(a) to 3(f) are motion flow charts of the control device. Figs. 4(a) to 4(d) are motion flow charts of the control device. Figs. 5(a) to 5(d) are motion flow charts of the control device. Figs. 6(a) and 6(b) are motion flow charts of the control device. Fig. 7 is a schematic configurational drawing of an Orloff intaglio printing press. Fig. 8 is an explanation drawing of a nip pressure adjusting mechanism for a nip pressure between an ink fountain roller and an ink form roller. Fig. 9 is an explanation drawing of a nip pressure adjusting mechanism for a nip pressure between the ink form roller and a pattern roller. Fig. 10 is an explanation drawing of a nip pressure adjusting mechanism for a nip pressure between the pattern roller and a blanket cylinder. Fig. 11 is an explanation drawing of a nip pressure and printing pressure adjusting mechanism for a nip pressure and a printing pressure between the blanket cylinder and an intaglio cylinder and between the intaglio cylinder and an impression cylinder. Fig. 12(a) is a plan view of a printing product inspectiondevice. Fig. 12(b) is a side sectional view of the printing productinspectiondevice. Fig. 13 is a view of the printing condition of an embossed portion. Fig. 14 is an explanation drawing of a color patch.

In an Orloff (type) intaglio printing press, as shown in Fig. 7, a sheet (amembertobeprinted, or a printing product after printing) fed from a feeding device (outside the drawing) onto a feedboard 10 is passed from a swing arm shaft pregripper 11 on to a gripper of an impression cylinder 13 via a transfer cylinder 12, and gripped by the gripper for transport. Simultaneously, ink of each inking device 17 is transferred to a blanket cylinder (ink collecting cylinder) 15 via a pattern roller 16, and supplied onto the plate surface of an intaglio cylinder 14. A surplus of the supplied ink is removed by a wiping roller 19.

Thus, the sheet gripped and transported by the gripper of the impression cylinder 13 is printed when it passes between the impression cylinder 13 and the intaglio cylinder 14. Then, the sheet is passed on to and gripped by the delivery gripper of a delivery chain 20, transported by the travel of the delivery chain 20, and dropped and piled on a delivery pile board (outside the drawing).

In the present embodiment, a nip pressure (contact pressure) between an ink fountain roller (first rotating part) 17a and an ink form roller (second rotating part) 17b of each inking device 17, a nip pressure (contact pressure) between the ink form roller (first rotating part) 17b and the pattern roller (second rotating part) 16, a nip pressure (contact pressure) between the pattern roller (first rotating part) 16 and the blanket cylinder (second rotating part) 15, a nip pressure (contact pressure) between the blanket cylinder (first rotating part) 15 and the intaglio cylinder (second rotating part) 14, and a printing pressure between the intaglio cylinder (first rotatingpart) 14 and the impression cylinder (second rotating part) 13 can be adjusted automatically.

As a nip pressure adjusting mechanism for the nip pressure between the ink fountain roller 17a and the ink form roller 17b, it is preferred to adopt , for example, the mechanism of a configuration as shown in Fig. 8. In the illustrated mechanism, an ink fountain 17c and the ink fountain roller 17a of each inking device 17 are supported by a subframe 23 which is supported by a main frame 21 via a pair of (upper and lower) frame guides 22a and 22b so as to be movable in a lateral direction in the drawing. The subframe 23 is moved in a reciprocating manner by a feed screw mechanism 25 which is driven by a motor 24.

Thus, the feed screw mechanism 25 is rotated by the motor 24 to reciprocate the subframe 23 in the lateral direction in the drawing. By this motion, the ink fountain roller 17a moves toward and away from the ink form roller 17b to adjust the nip pressure (contact pressure adjusting means).

As a nip pressure adjusting mechanism for the nip pressure between the ink form roller 17b and the pattern roller 16, it is preferred to adopt, for example, the mechanism of a configuration as shown in Fig. 9. The illustrated mechanism comprises swing levers 26 each pivotably holding the ink form roller 17b at one end, a spring 27 for urging the swing lever 26 to press the ink form roller 17b against the pattern roller 16, and a lever angle changing means (a push rod 29, a nut 30, etc.) for changing the angle of the swing lever 26 in opposition to the spring force of the spring 27. The mechanism further has one end of a control rod 31 coupled to the lever angle changing means, and a motor 32 attached to the other end of the control rod 31.

Thus, the control rod 31 is rotated by the motor 32, whereby the swing levers 26 swing via the lever angle changing means to adjust the nip pressure between the ink form rollers 17b and the pattern roller 16 (contact pressure adjusting means). Rotating the control rod 31 of such a constitution manually is made publicly known by JP-UM-A-1-171642, etc.

As a nip pressure adjusting mechanism for the nip pressure between the pattern roller 16 and the blanket cylinder 15, it is preferred to adopt, for example, the mechanism of a configuration as shown in Fig. 10. In the illustrated mechanism, one end shaft 16a of the pattern roller 16 is pivotally supported by a bearing hole 35 of the frame via an inner bearing 33 and an outer bearing 34 which are rendered eccentric. A rod 36a of a cylinder 36 is pivotally mounted on a flange portion of the inner bearing 33. When the rod 36a is moved forward and backward, the pattern roller 16 throws on and off the blanket cylinder 15. An engaging protrusion 33b having an engaging surface 33a is provided in the flange portion of the inner bearing 33. An eccentric cam-shaped abutment portion 37, on which the engaging surface 33a abuts, is provided in the frame. A motor 38 is fitted to a cam shaft (not shown) of the abutment portion 37. When the rod 36a is moved forward to bring the pattern roller 16 into contact with the blanket cylinder 15, the engaging surface 33a abuts on the abutment portion 37, forming pressing portions 39a, 39b.

Thus, the cam shaft of the abutment portion 37 is rotated by the motor 38, whereby the position of the engaging protrusion 33b of the inner bearing 33 abutting on the abutment portion 37 is adjusted to adjust the nip pressure between the pattern roller 16 and the blanket cylinder 15 (contact pressure adjusting means). Manually rotating the cam shaft of the abutment portion 37 in such a configuration is made publicly known by JP-A-2002-1904, etc.

As a nip pressure adjusting mechanism for the nip pressure between the blanket cylinder 15 and the intaglio cylinder 14 and a printing pressure adjusting mechanism for the printing pressure between the intaglio cylinder 14 and the impression cylinder 13, it is preferred to adopt, for example, the mechanism of a configuration as shown in Fig. 11. In the illustrated mechanism, at the time of printing, a hydraulic cylinder 40 is extended, whereby a first jogger bearing 43 is pivoted counterclockwise in the drawing via a lever 41 and a turnbuckle 42. By the eccentric action of the first jogger bearing 43, the great nip pressure (or printing pressure) of the intaglio cylinder 14 (or impression cylinder 13) acts on the blanket cylinder 15 (or intaglio cylinder 14). If the nip pressure (or printing pressure) is adjusted during printing preparation (i.e. make-ready) or during printing, an operating shaft 46 is pivoted by a motor 44 (or 45) to pivot a second jogger bearing 49 upon meshing between a worm gear 47 and a sector gear 48. Thus, the first jogger bearing 43 is also pivoted (in this case, the first jogger bearing 43 is pivoted in the direction opposite to the direction of pivoting of the second jogger bearing 49), so that the nip pressure (or printing pressure) is adjusted (contact pressure adjusting means (or printing pressure adjusting means)). Manually rotating the operating shaft 46 in such a configuration is made publicly known by JP-UM-A-3-124838, etc.

In the present embodiment, the ink film thickness or the emboss amount in the printing image of the printed sheet is measured using a printing product inspection device (ink film thickness measuring means, emboss amount measuring means) placed outside the printing press or machine, and the nip pressure or printing pressure in each of the above-mentioned portions is automatically adjusted in accordance with the measured ink film thickness or emboss amount.

The above printing product inspection device, as shown in Figs. 12(a) and 12(b), has a face side distance measuring instrument 50 and a reverse side distance measuring instrument 51, each of which comprises a laser displacement meter or the like. The face side distance measuring instrument 50 and the reverse side distance measuring instrument 51 are provided on an inspection device body 52 to be movable in a circumferential direction and a lateral direction, respectively, by a pair of (i.e., right and left) electrically operated slide cylinders 54 which are driven by a motor 53 for movement in the circumferential direction (see Fig. 1(a)) and a single electrically operated slide cylinder 56 which is driven by a motor 55 for movement in a lateral direction (see Fig. 1(a)). Thus, the face side distance measuring instrument 50 and the reverse side distance measuring instrument 51 can measure the ink film thickness (IFTm) or emboss amount (EQm) in the printing image of a sheet W placed on the inspection device body 52. The pair of (i.e., right and left) electrically operated slide cylinders 54 and the single electrically operated slide cylinder 56 are provided separately on each of an upper side and a lower side (face side and reverse side), whereas the motor 55 for movement in the lateral direction and the motor 53 for movement in the circumferential direction are provided for one of the upper side and the lower side (face side and reverse side), or may be provided separately for each of the upper side and the lower side (face side and reverse side).

That is, as shown in Fig. 13, the emboss amount (EQm) C is determined by a measurement (A - B) made by the reverse side distance measuring instrument 51. A height (D + E) can be measured by the face side distance measuring instrument 50. If it is assumed that the thickness of the sheet W does not change because of the emboss effect, it holds that C = D. This means that a value obtained by subtracting the measured value on the reverse side and the thickness of the sheet W from the measured value on the face side is the ink film thickness (IFTm) E.

As shown in Fig. 14, at the time of measurement, the printing image of the sheet W is not directly measured, but instead, it is efficient to measure color patch lines L, corresponding to the number of colors, i.e., India ink, indigo, red, and yellow, with the use of a color patch portion CP provided in a margin part in the circumferential direction of the sheet W. The color patch lines L printed by respective ink supply units are printed at the same position in the circumferential direction so as to be arranged in the sequence of the first color, the second color, the third color, and the fourth color, with the same spacing provided in the lateral direction.

The motors 24, 32, 38, 44, 45, 53 and 55 are drivingly controlled by a control device (control means) 60 to be described later, and measurement signals from the face side distance measuring instrument 50 and the reverse side distance measuring instrument 51 are inputted into the control device 60.

The control device 60 comprises CPU 61, RAM 62, ROM 63, and input/output devices 64 to 71 connected together by a BUS line 72, as shown in Figs. 1(a) to 1(c). To the BUS line 72, the following memories are connected: A memory M1 for storing the number of the selected ink supply unit M, a memory M2 for storing the value of a counter for measuring the current position in the circumferential directionof the distance measuring instrument, amemoryM3 for storing the current position in the circumferential direction of the distance measuring instrument, a memory M4 for storing the position in the circumferential direction of a sheet thickness measuring position to be measured by the distance measuring instrument, a memory M5 for storing the value of a counter for measuring the current position in the lateral direction of the distance measuring instrument, a memory M6 for storing the current position in the lateral direction of the distance measuring instrument, a memory M7 for storing the position in the lateral direction of the sheet thickness measuring position to be measured by the distance measuring instrument, a memory M8 for storing the output FD of the face side distance measuring instrument, a memory M9 for storing the output RD of the reverse side distance measuring instrument, and a memory M10 for storing the distance FDP from the face side distance measuring instrument to the sheet.

To the BUS line 72, the following memories are further connected: A memory M11 for storing the distance RDP from the reverse side distance measuring instrument to the sheet, a memory M12 for storing the distance FRD between the face side distance measuring instrument and the reverse side distance measuring instrument, a memory M13 for storing the sheet thickness PT, a memory M14 for storing the position in the circumferential direction of the color patch lines to be measured by the distance measuring instrument, a memory M15 for storing the count value M, a memory M16 for storing the position in the lateral direction of the color patch lines to be measured by the distance measuring instrument, a memory M17 for storing the total number Mmax of the ink supply units, a memory M18 for storing the distance FDCm from the face side distance measuring instrument to the color patch portion, a memory M19 for storing the distance RDCm from the reverse side distance measuring instrument to the color patch portion, and a memory M20 for storing the emboss amount EQm.

To the BUS line 72, the following memories are further connected: A memory M21 for storing the reference emboss amount EQF, a memory M22 for storing the emboss error amount EQDm, a memory M23 for storing a table of conversion from the emboss error amount to the correction amount of the printingpressure between the intaglio cylinder and the impression cylinder, a memory M24 for storing the correction amount of the printing pressure between the intaglio cylinder and the impression cylinder, a memory M25 for storing the color patch portion thickness CPTm, a memory M26 for storing the ink film thickness IFTm, a memory M27 for storing the reference ink film thickness IFTF, a memory M28 for storing the ink film thickness error amount IFTDm, a memory M29 for storing a table of conversion from the ink film thickness error amount to the correction amount of the nip pressure between the ink fountain roller and the ink form roller, and a memory M30 for storing the correction amount of the nip pressure between the ink fountain roller and the ink form roller.

To the BUS line 72, the following memories are further connected: A memory M31 for storing a table of conversion from the ink film thickness error amount to the correction amount of the nip pressure between the ink form roller and the pattern roller, a memory M32 for storing the correction amount of the nip pressure between the ink form roller and the pattern roller, a memory M33 for storing a table of conversion from the ink film thickness error amount to the correction amount of the nip pressure between the pattern roller and the blanket cylinder, a memory M34 for storing the correction amount of the nip pressure between the pattern roller and the blanket cylinder, a memory M35 for storing a table of conversion from the ink film thickness error amount to the correction amount of the nip pressure between the blanket cylinder and the intaglio cylinder, a memory M36 for storing the correction amount of the nip pressure between the blanket cylinder and the intaglio cylinder, a memory M37 for storing the total value of the correction amounts of the nip pressure between the blanket cylinder and the intaglio cylinder, a memory M38 for storing the average value of the correction amounts of the nip pressure between the blanket cylinder and the intaglio cylinder, a memory M39 for storing the total value of the correction amounts of the printing pressure between the intaglio cylinder and the impression cylinder, and a memory M40 for storing the average value of the correction amounts of the printing pressure between the intaglio cylinder and the impression cylinder.

To the BUS line 72, the following memories are further connected: A memory M41 for storing the output of an A/D converter connected to a potentiometer for a motor for adjusting the nip pressure between the ink fountain roller and the ink form roller, a memory M42 for storing the current nip pressure between the ink fountain roller and the ink form roller, a memory M43 for storing the desired nip pressure between the ink fountain roller and the ink form roller, a memory M44 for storing the desired output of the A/D converter connected to the potentiometer for the motor for adjusting the nip pressure between the ink fountain roller and the ink form roller, a memory M45 for storing the output of an A/D converter connected to a potentiometer for a motor for adjusting the nip pressure between the ink form roller and the pattern roller, a memory M46 for storing the current nip pressure between the ink form roller and the pattern roller, a memory M47 for storing the desired nip pressure between the ink form roller and the pattern roller, a memory M48 for storing the desired output of the A/D converter connected to the potentiometer for the motor for adjusting the nip pressure between the ink form roller and the pattern roller, a memory M49 for storing the output of an A/D converter connected to a potentiometer for a motor for adjusting the nip pressure between the pattern roller and the blanket cylinder, and a memory M50 for storing the current nippressure between the pattern roller and the blanket cylinder.

To the BUS line 72, the following memories are further connected: A memory M51 for storing the desired nip pressure between the pattern roller and the blanket cylinder, a memory M52 for storing the desired output of an A/D converter connected to a potentiometer for a motor for adjusting the nip pressure between the pattern roller and the blanket cylinder, a memory M53 for storing the output of an A/D converter connected to a potentiometer for a motor for adjusting the nippressure between the blanket cylinder and the intagliocylinder, a memory M54 for storing the current nip pressure between the blanket cylinder and the intaglio cylinder, a memory M55 for storing the desired nip pressure between the blanket cylinder and the intaglio cylinder, a memory M56 for storing the desired output of an A/D converter connected to a potentiometer for a motor for adjusting the nippressure between the blanket cylinder and the intaglio cylinder, a memory M57 for storing the output of an A/D converter connected to a potentiometer for a motor for adjusting the printing pressure between the intaglio cylinder and the impression cylinder, a memory M58 for storing the current printing pressure between the intaglio cylinder and the impression cylinder, a memory M59 for storing the desired printing pressure between the intaglio cylinder and the impression cylinder, and a memory M60 for storing the desired output of the A/D converter connected to the potentiometer for the motor for adjusting the printing pressure between the intaglio cylinder and the impression cylinder.

To the input/output device 64, the following are connected: An input device 73 such as a keyboard, a display device 74 such as CRT or a display, and an output device 75 such as a printer or a floppy disk (registered trademark) drive. The aforementioned face side distance measuring instrument 50 and rear side distance measuring instrument 51 are connected to the input/output device 65.

To the input/output device 66, the aforementioned motor 53 for movement in the circumferential direction is connected via a D/A converter 76 and a driver 77 for the motor for movement in the circumferential direction, and a rotary encoder 79 for the motor for movement in the circumferential direction, which is drivingly coupled to the motor 53, is connected via a counter 78 for measuring the current position in the circumferential direction. A detector 80 for a home position in the circumferential direction is also connected to the input/output device 66.

To the input/output device 66, the aforementioned motor 55 for movement in the lateral direction is connected via a D/A converter 81 and a driver 82 for the motor for movement in the lateral direction, and a rotary encoder 84 for the motor for movement in the lateral direction, which is drivingly coupled to the motor 55, is connected via a counter 83 for measuring the current position in the lateral direction. A detector 85 for a home position in the lateral direction is also connected to the input/output device 66.

To the input/output device 67, the aforementioned motor 24 for adjusting the nip pressure between the ink fountain roller and the ink form roller is connected via a driver 86 for the motor for adjusting the nip pressure between the ink fountain roller and the ink form roller, and a potentiometer 88 for the motor for adjusting the nip pressure between the ink fountain roller and the ink form roller, which is drivingly coupled to the motor 24, is connected via an A/D converter 87.

To the input/output device 68, the aforementioned motor 32 for adjusting the nip pressure between the ink form roller and the pattern roller is connected via a driver 89 for the motor for adjusting the nip pressure between the ink form roller and the pattern roller, and a potentiometer 91 for the motor for adjusting the nip pressure between the ink form roller and the pattern roller, which is drivingly coupled to the motor 32, is connected via an A/D converter 90.

To the input/output device 69, the aforementioned motor 38 for adjusting the nip pressure between the pattern roller and the blanket cylinder is connected via a driver 92 for the motor for adjusting the nip pressure between the pattern roller and the blanket cylinder, and a potentiometer 94 for the motor for adjusting the nip pressure between the pattern roller and the blanket cylinder, which is drivingly coupled to the motor 38, is connected via an A/D converter 93.

The above-mentioned input/output devices 67 to 69 serve for the ink supply unit for the first color, and the same configuration is adopted for the ink supply units for the second to fourth colors. Thus, duplicate explanations will be omitted.

To the input/output device 70, the aforementioned motor 44 for adjusting the nip pressure between the blanket cylinder and the intaglio cylinder is connected via a driver 95 for the motor for adjusting the nip pressure between the blanket cylinder and the intaglio cylinder, and a potentiometer 97 for the motor for adjusting the nippressure between the blanket cylinder and the intagl io cylinder, which is drivingly coupled to the motor 44, is connected via an A/D converter 96.

To the input/output device 71, the aforementioned motor 45 for adjusting the printing pressure between the intaglio cylinder and the impression cylinder is connected via a driver 98 for the motor for adjusting the printing pressure between the intaglio cylinder and the impression cylinder, and a potentiometer 100 for the motor for adjusting the printing pressure between the intaglio cylinder and the impression cylinder, which is drivingly coupled to the motor 45, is connected via an A/D converter 99.

The aforementioned control device 60 drivingly controls the above-mentioned motors 24, 32, 38, 44 and 45 in accordance with the ink film thickness or emboss amount measured using the aforementioned face side distance measuring instrument 50 and reverse side distance measuring instrument 51, thereby automatically adjusting the nip pressure orprintingpressure ineachof the above-mentionedportions.

The control actions or motions of the control device 60 configured as above will be described in detail based on the motion flow charts of Figs. 2(a) to 2(e), Figs. 3(a) to 3(f), Figs. 4(a) to 4(d), Figs. 5(a) to 5(d), and Figs. 6(a) and 6(b).

In Step P1, it is determined whether an ink supplyuni t selection switch is ON. If the answer is Y (yes), the number M of the selected ink supply unit is stored into the memory M1 in Step P2. Then, in Step P3, it is determined whether a selection switch for adjusting the nip pressure between the ink fountain roller and the ink form roller is ON. If the answer is N (no) in Step P1, the program directly shifts to Step P3.

Then, if the answer is Y in Step P3, it is determined in Step P4 whether a pressure adjustment completion switch is ON. Then, if the answer is N in Step P4, it is determined in Step P5 whether an up-button is ON. If the answer is N in Step P3 and the answer is Y in Step P4, on the other hand, the program shifts to Step P15 to be described later.

If the answer is Y in Step P5, the number M of the selected ink supply unit is loaded from the memory M1 in Step P6. Then, in Step P7, a normal rotation command is outputted to the driver 86 for the motor for adjusting the nip pressure between the ink fountain roller and the ink form roller in the ink supply unit M. If the answer is N in Step P5, the program shifts to Step P10 to be described later.

Then, if the up-button is OFF in Step P8, outputting of the normal rotation command to the driver 86 for the motor for adjusting the nip pressure between the ink fountain roller and the ink form roller in the ink supply unit M is stopped in Step P9.

Then, in Step P10, it is determined whether a down-button is ON. If the answer is Y, the number M of the selected ink supply unit is loaded from the memory M1 in Step P11. Then, in Step P12, a reverse rotation command is outputted to the driver 86 for the motor for adjusting the nip pressure between the ink fountain roller and the ink form roller in the ink supply unit M.

Then, if the down-button is OFF in Step P13, outputting of the reverse rotation command to the driver 86 for the motor for adjusting the nip pressure between the ink fountain roller and the ink form roller in the ink supply unit M is stopped in Step P14. Then, the program returns to Step P4. If the answer is N in Step P10, the program immediately returns to Step P4.

Then, in Step P15, it is determined whether a selection switch for adjusting the nip pressure between the ink form roller and the pattern roller is ON. If the answer is Y in Step P15, it is determined in Step P16 whether a pressure adjustment completion switch is ON. Then, if the answer is N in Step P16, it is determined in Step P17 whether an up-button is ON. If the answer is N in Step P15 and the answer is Y in Step P16, on the other hand, the program shifts to Step P27 to be described later.

Then, if the answer is Y in Step P17, the number M of the selected ink supply unit is loaded from the memory M1 in Step P18. Then, in Step P19, a normal rotation command is outputted to the driver 89 for the motor for adjusting the nip pressure between the ink form roller and the pattern roller in the ink supply unit M. If the answer is N in Step P17, the program shifts to Step P22 to be described later.

Then, if the up-button is OFF in Step P20, outputting of the normal rotation command to the driver 89 for the motor for adjusting the nip pressure between the ink form roller and the pattern roller in the ink supply unit M is stopped in Step P21.

Then, in Step P22, it is determined whether a down-button is ON. If the answer is Y, the number M of the selected ink supply unit is loaded from the memory M1 in Step P23. Then, in Step P24, a reverse rotation command is outputted to the driver 89 for the motor for adjusting the nip pressure between the ink form roller and the pattern roller in the ink supply unit M.

Then, if the down-button is OFF in Step P25, outputting of the reverse rotation command to the driver 89 for the motor for adjusting the nip pressure between the ink form roller and the pattern roller in the ink supply unit M is stopped in Step P26. Then, the program returns to Step P16. If the answer is N in Step P22, the program immediately returns to Step P16.

Then, in Step P27, it is determined whether a selection switch for adjusting the nip pressure between the pattern roller and the blanket cylinder is ON. If the answer is Y, it is determined in Step P28 whether a pressure adjustment completion switch is ON. Then, if the answer is N in Step P28, it is determined in Step P29 whether an up-button is ON. If the answer is N in Step P27 and the answer is Y in Step P28, on the other hand, the program shifts to Step P39 to be described later.

Then, if the answer is Y in Step P29, the number M of the selected ink supply unit is loaded from the memory M1 in Step P30. Then, in Step P31, a normal rotation command is outputted to the driver 92 for the motor for adjusting the nip pressure between the pattern roller and the blanket cylinder in the ink supply unit M. If the answer is N in Step P29, the program shifts to Step P34 to be described later.

Then, if the up-button is OFF in Step P32, outputting of the normal rotation command to the driver 92 for the motor for adjusting the nip pressure between the pattern roller and the blanket cylinder in the ink supply unit M is stopped in Step P33.

Then, in Step P34, it is determined whether a down-button is ON. If the answer is Y, the number M of the selected ink supply unit is loaded from the memory M1 in Step P35. Then, in Step P36, a reverse rotation command is outputted to the driver 92 for the motor for adjusting the nip pressure between the pattern roller and the blanket cylinder in the ink supply unit M.

Then, if the down-button is OFF in Step P37, outputting of the reverse rotation command to the driver 92 for the motor for adjusting the nip pressure between the pattern roller and the blanket cylinder in the ink supply unit M is stopped in Step P38. Then, the program returns to Step P28. If the answer is N in Step P34, the program immediately returns to Step P28.

Then, in Step P39, it is determined whether a selection switch for adjusting the nip pressure between the blanket cylinder and the intaglio cylinder is ON. If the answer is Y, it is determined in Step P40 whether a pressure adjustment completion switch is ON. Then, if the answer is N in Step P40, it is determined in Step P41 whether an up-button is ON. If the answer is N in Step P39 and the answer is Y in Step P40, on the other hand, the program shifts to Step P49 to be described later.

Then, if the answer is Y in Step P41, a normal rotation command is outputted in Step P42 to the driver 95 for the motor for adjusting the nip pres sure between the blanket cylinder and the intaglio cylinder. If the answer is N in Step P41, the program shifts to Step P45 to be described later.

Then, if the up-button is OFF in Step P43, outputting of the normal rotation command to the driver 95 for the motor for adjusting the nippressure between the blanket cylinder and the intagliocylinder is stopped in Step P44.

Then, in Step P45, it is determined whether a down-button is ON. If the answer is Y, in Step P46, a reverse rotation command is outputted to the driver 95 for the motor for adjusting the nip pressure between the blanket cylinder and the intaglio cylinder.

Then, if the down-button is OFF in Step P47, outputting of the reverse rotation command to the driver 95 for the motor for adjusting the nip pressure between the blanket cylinder and the intaglio cylinder is stopped in Step P48. Then, the program returns to Step P40. If the answer is N in Step P45, the program immediately returns to Step P40.

Then, in Step P49, it is determined whether a selection switch for adjusting the printing pressure between the intaglio cylinder and the impression cylinder is ON. If the answer is Y, it is determined in Step P50 whether a pressure adjustment completion switch is ON. Then, if the answer is N in Step P50, it is determined in Step P51 whether an up-button is ON. If the answer is N in Step P49 and the answer is Y in Step P50, on the other hand, the program shifts to Step P59 to be described later.

Then, if the answer is Y in Step P51, Step P52 is executed to output a normal rotation command to the driver 98 for the motor for adjusting the printing pressure between the intaglio cylinder and the impression cylinder. If the answer is N in Step P51, the program shifts to Step P55 to be described later.

Then, if the up-button is OFF in Step P53, outputting of the normal rotation command to the driver 98 for the motor for adjusting the printing pressure between the intaglio cylinder and the impression cylinder is stopped in Step P54.

Then, in Step P55, it is determined whether a down-button is ON. If the answer is Y, in Step P56, a reverse rotation command is outputted to the driver 98 for the motor for adjusting the printing pressure between the intaglio cylinder and the impression cylinder.

Then, if the down-button is OFF in Step P57, outputting of the reverse rotation command to the driver 98 for the motor for adjusting the printing pressure between the intaglio cylinder and the impression cylinder is stopped in Step P58. Then, the program returns to Step P50. If the answer is N in Step P55, the program immediately returns to Step P50.

In accordance with the above-described steps, manual adjustment of each nip pressure or printing pressure by the operator is completed.

Then, in Step P59, it is determined whether a sheet thickness measuring switch is ON. If the answer is Y, in Step P60, a normal rotation command is outputted to the driver 77 for the motor for movement in the circumferential direction. Then, in Step P61, the value of the counter 78 for measuring the current position in the circumferential direction of the distance measuring instrument is loaded, and stored into the memory M2.

Then, in Step P62, the current position in the circumferential direction of the distance measuring instrument is computed from the loaded value of the counter for measuring the current position in the circumferential direction of the distance measuring instrument, and stored into the memory M3. Then, in Step P63, the position in the circumferential direction of the sheet thickness measuring position to be measured by the distance measuring instrument is loaded from the memory M4.

Then, inStepP64, it is determined whether the current position in the circumferential direction of the distance measuring instrument is equal to the position in the circumferential direction of the sheet thickness measuring position to be measured by the distance measuring instrument. If the answer is Y, outputting of the normal rotation command to the driver 77 for the motor for movement in the circumferential direction is outputted in Step P65. If the answer is N, the program returns to Step P61.

Then, in Step P66, a normal rotation command is outputted to the driver 82 for the motor for movement in the lateral direction. Then, in Step P67, the value of the counter 83 for measuring the current position in the lateral direction of the distance measuring instrument is loaded, and stored into the memory M5. Then, in Step P68, the current position in the lateral direction of the distance measuring instrument is computed from the loaded value of the counter for measuring the current position in the lateral direction of the distance measuring instrument, and stored into the memory M6.

Then, in Step P69, the position in the lateral direction of the sheet thickness measuring position to be measured by the distance measuring instrument is loaded from the memory M7. Then, in Step P70, it is determined whether the current position in the lateral direction of the distance measuring instrument is equal to the position in the lateral direction of the sheet thickness measuring position to be measured by the distance measuring instrument. If the answer is Y, in Step P71, a measurement command signal is outputted to the distance measuring instrument. If the answer is N, the program returns to Step P67.

Then, in Step P72, the output FD of the face side distance measuring instrument 50 is loaded, and stored into the memory M8. Then, in Step P73, the output RD of the reverse side distance measuring instrument 51 is loaded, and stored into the memory M9. Then, in Step P74, outputting of the normal rotation command to the driver 82 for the motor for movement in the lateral direction is stopped.

Then, in Step P75, a reverse rotation command is outputted to the driver 82 for the motor for movement in the lateral direction. Then, if the output of the detector 85 for the home position in the lateral direction of the distance measuring instrument is ON in Step P76, outputting of the reverse rotation command to the driver 82 for the motor for movement in the lateral direction is stopped in Step P77.

Then, in Step P78, a reverse rotation command is outputted to the driver 77 for the motor for movement in the circumferential direction. Then, if the output of the detector 80 for the home position in the circumferential direction of the distance measuring instrument is ON in Step P79, outputting of the reverse rotation command to the driver 77 for the motor for movement in the circumferential direction is stopped in Step P80.

Then, in Step P81, the distance FDP from the face side distance measuring instrument to the sheet is computed from the output FD of the face side distance measuring instrument 50, and stored into the memory M10. Then, in Step P82, the distance RDP from the reverse side distance measuring instrument to the sheet is computed from the output RD of the reverse side distance measuring instrument 51, and stored into the memory M11.

Then, in Step P83, the distance FRD between the face side distance measuring instrument and the reverse side distance measuring instrument is loaded from the memory M12. Then, in Step P84, the distance FDP from the face side distance measuring instrument to the sheet and the distance RDP from the reverse side distance measuring instrument to the sheet are subtracted from the distance FRD between the face side distance measuring instrument and the reverse side distance measuring instrument to compute the sheet thickness PT, which is stored into the memory M13. Then, the program returns to Step P1.

In accordance with the above steps, the thickness of the sheet W, which is the object to be measured, is measured. The sheet thickness measuring position is set at a part of the sheet W, where nothing is printed, in other words, a part where neither the emboss nor the ink film is present.

If the answer is N in the aforementioned Step P59, on the other hand, it is determined in Step P85 whether a colorpatchmeasuring switch is ON. If the answer is Y, in Step P86, a normal rotation command is outputted to the driver 77 for the motor for movement in the circumferential direction. If the answer is N, the program returns to Step P1.

Then, in Step P87, the value of the counter 78 for measuring the current position in the circumferential direction of the distance measuring instrument is loaded, and stored into the memory M2. Then, in Step P88, the current position in the circumferential direction of the distance measuring instrument is computed from the loaded value of the counter for measuring the current position in the circumferential direction of the distance measuring instrument, and stored into the memory M3. Then, in Step P89, the position in the circumferential direction of the color patch lines to be measured by the distance measuring instrument is loaded from the memory M14.

Then, in StepP90, it is determined whether the current position in the circumferential direction of the distance measuring instrument is equal to the position in the circumferential direction of the color patch lines to be measured by the distance measuring instrument. If the answer is Y, outputting of the normal rotation command to the driver 77 for the motor for movement in the circumferential direction is stopped in Step P91. If the answer is N, the program returns to Step P87.

Then, in Step P92, 1 is written into the count value M of the memory M15. Then, in Step P93, a normal rotation command is outputted to the driver 82 for the motor for movement in the lateral direction. Then, in Step P94, the value of the counter 83 for measuring the current position in the lateral directionof the distance measuring instrument is loaded, and stored into the memory M5.

Then, in Step P95, the current position in the lateral direction of the distance measuring instrument is computed from the loaded value of the counter for measuring the current position in the lateral direction of the distance measuring instrument, and stored into the memory M6. Then, in Step P96, the position in the lateral direction of the color patch lines in the ink supply unit M to be measured by the distance measuring instrument is loaded from the memory M16.

Then, in Step P97, it is determinedwhether the current position in the lateral direction of the distance measuring instrument is equal to the position in the lateral direction of the color patch lines in the ink supply unit M to be measured by the distance measuring instrument. If the answer is Y, in Step P98, a measurement command signal is outputted to the distance measuring instrument. If the answer is N, the program returns to Step P94.

Then, in Step P99, the output FDm of the face side distance measuring instrument 50 is loaded, and stored into the address position for the ink supply unit M in the memory M8. Then, in Step P100, the output RDm of the reverse side distance measuring instrument 51 is loaded, and stored into the address position for the ink supply unit M in the memory M9.

Then, in Step P101, 1 is added to the count value M of the memory M15 for overwriting. Then, in Step P102, the total number Mmax of the ink supply units is loaded from the memory M17. Then, in Step P103, it is determined whether the count value M is larger than the total number Mmax of the ink supply units. If the answer is Y, outputting of the normal rotation command to the driver 82 for the motor for movement in the lateral direction is stopped in Step P104. If the answer is N, the program returns to Step P94.

Then, in Step P105, a reverse rotation command is outputted to the driver 82 for the motor for movement in the lateral direction. Then, if the output of the detector 85 for the home position in the lateral direction of the distance measuring instrument is ON in Step P106, outputting of the reverse rotation command to the driver 82 for the motor for movement in the lateral direction is stopped in Step P107.

Then, in Step P108, a reverse rotation command is outputted to the driver 77 for the motor for movement in the circumferential direction. Then, if the output of the detector 80 for the home position in the circumferential direction of the distance measuring instrument is ON in Step P109, outputting of the reverse rotation command to the driver 77 for the motor for movement in the circumferential direction is stopped in Step P110.

In accordance with the above steps, the distances from the face side distance measuring instrument 50 and the reverse side distance measuring instrument 51 to the color patch lines L printed with inks supplied from the respective ink supply units are measured.

Then, in Step P111, 1 is written into the count value M of the memory M15. Then, the output FDm of the face side distance measuring instrument 50 stored in the address position for the ink supply unit M in the memory M8 is loaded in Step P112. Then, in Step P113, the distance FDCm from the face side distance measuring instrument to the color patch portion is computed from the output FDm of the face side distance measuring instrument 50 stored in the address position for the ink supply unit M in the memory M8, and the computed distance is stored into the memory M18.

Then, the output RDm of the reverse side distance measuring instrument 51 stored in the address position for the ink supply unit M in the memory M9 is loaded in Step P114. Then, in Step P115, the distance RDCm from the reverse side distance measuring instrument to the color patch portion is computed from the output RDm of the reverse side distance measuring instrument 51 stored in the address position for the ink supply unit M in the memory M9, and the computed distance is stored into the memory M19.

Then, the distance RDP from the reverse side distance measuring instrument to the sheet is loaded in Step P116. Then, in Step P117, the distance RDP from the reverse side distance measuring instrument to the sheet is subtracted from the distance RDCm from the reverse side distance measuring instrument to the color patch portion to compute the emboss amount EQm, which is stored into the address position for the ink supply unit M in the memory M20.

Then, in Step P118, the reference emboss amount EQFm of the ink supply unit M is loaded from the address position for the ink supply unit M in the memory M21 for storing the reference emboss amount EQF. Then, in Step P119, the reference emboss amount EQFm of the ink supply unit M is subtracted from the emboss amount EQm of the ink supply unit M to compute the emboss error amount EQDm of the ink supply unit M, which is stored into the address position for the ink supply unit M in the memory M22.

Then, in Step P120, the table of conversion from the emboss error amount to the correction amount of the printing pressure between the intaglio cylinder and the impression cylinder is loaded from the memory M23. Then, in Step P121, the correction amount of the printing pressure between the intaglio cylinder and the impression cylinder is obtained from the emboss error amount EQDm with the use of the table of conversion from the emboss error amount to the correction amount of the printing pressure between the intaglio cylinder and the impression cylinder, and the obtained correction amount is stored into the address position for the ink supply unit M in the memory M24.

Then, in Step P122, the distance FRD between the face side distance measuring instrument and the reverse side distance measuring instrument is loaded from the memory M12. Then, in Step P123, the distance FDCm from the face side distance measuring instrument to the color patch portion and the distance RDCm from the reverse side distance measuring instrument to the color patch portion are subtracted from the distance FRD between the face side distance measuring instrument and the reverse side distance measuring instrument to compute the thickness CPTm of the color patch portion, which is stored into the memory M25.

Then, in Step P124, the sheet thickness PT is loaded from the memory M13. Then, in Step P125, the sheet thickness PT is subtracted from the thickness CPTm of the color patch portion to compute the ink film thickness IFTm, which is stored into the address position for the ink supply unit M in the memory M26.

Then, in Step P126, the reference ink film thickness IFTFm of the ink supply unit M is loaded from the address position for the ink supply unit M in the memory M27 for storing the reference ink film thickness IFTF. Then, in Step P127, the reference ink film thickness IFTFm of the ink supply unit M is subtracted from the ink film thickness IFTm of the ink supply unit M to compute the ink film thickness error amount IFTDm of the ink supply unit M, which is stored into the address position for the ink supply unit M in the memory M28.

Then, in Step P128, the table of conversion from the ink film thickness error amount to the correction amount of the nip pressure between the ink fountain roller and the ink form roller is loaded from the memory M29. Then, in Step P129, the correction amount of the nip pressure between the ink fountain roller and the ink form roller is obtained from the ink film thickness error amount IFTDm with the use of the table of conversion from the ink film thickness error amount to the correction amount of the nip pressure between the ink fountain roller and the ink form roller, and the obtained correction amount is stored into the address position for the ink supply unit M in the memory M30.

Then, in Step P130, the table of conversion from the ink film thickness error amount to the correction amount of the nip pressure between the ink form roller and the pattern roller is loaded from the memory M31. Then, in Step P131, the correction amount of the nip pressure between the ink form roller and the pattern roller is obtained from the ink film thickness error amount IFTDm with the use of the table of conversion from the ink film thickness error amount to the correction amount of the nip pressure between the ink form roller and the pattern roller, and the obtained correction amount is stored into the address position for the ink supply unit M in the memory M32.

Then, in Step P132, the table of conversion from the ink film thickness error amount to the correction amount of the nip pressure between the pattern roller and the blanket cylinder is loaded from the memory M33. Then, in Step P133, the correction amount of the nip pressure between the pattern roller and the blanket cylinder is obtained from the ink film thickness error amount IFTDm with the use of the table of conversion from the ink film thickness error amount to the correction amount of the nip pressure between the pattern roller and the blanket cylinder, and the obtained correction amount is stored into the address position for the ink supply unit M in the memory M34.

Then, in Step P134, the table of conversion from the ink film thickness error amount to the correction amount of the nip pressure between the blanket cylinder and the intaglio cylinder is loaded from the memory M35. Then, in Step P135, the correction amount of the nip pressure between the blanket cylinder and the intaglio cylinder is obtained from the ink film thickness error amount IFTDm with the use of the table of conversion from the ink film thickness error amount to the correction amount of the nip pressure between the blanket cylinder and the intagliocylinder, and the obtained correction amount is stored into the address position for the ink supply unit M in the memory M36.

Then, in Step P136, 1 is added to the count value M of the memory M15 for overwriting. Then, in Step P137, the total number Mmax of the ink supply units is loaded from the memory M17. Then, in Step P138, it is determined whether the count value M is larger than the total number Mmax of the ink supply units. If the answer is Y, in Step P139, 1 is written into the count value M of the memory M15. If the answer is N, the program returns to Step P112.

Then, in Step P140, zero is written into the memory M37 for storing the total value of the correction amounts of the nip pressure between the blanket cylinder and the intaglio cylinder. Then, in Step P141, zero is written into the memory M39 for storing the total value of the correction amounts of the printing pressure between the intaglio cylinder and the impression cylinder.

Then, in Step P142, the total value of the correction amounts of the nip pressure between the blanket cylinder and the intaglio cylinder is loaded from the memory M37. Then, in Step P143, the correction amount of the nip pressure between the blanket cylinder and the intaglio cylinder in the ink supply unit M is loaded from the memory M36. Then, in Step P144, the correction amount of the nip pressure between the blanket cylinder and the intaglio cylinder in the ink supply unit M is added to the total value of the correction amounts of the nip pressure between the blanket cylinder and the intaglio cylinder, and the memory M37 for storing the total value of the correction amounts of the nip pressure between the blanket cylinder and the intaglio cylinder is overwritten with the value obtained by addition.

Then, in Step P145, the total value of the correction amounts of the printing pressure between the intaglio cylinder and the impression cylinder is loaded from the memory M39. Then, in Step P146, the correction amount of the printing pressure between the intaglio cylinder and the impression cylinder in the ink supply unit M is loaded. Then, in Step P147, the correction amount of the printing pressure between the intaglio cylinder and the impression cylinder in the ink supply unit M is added to the total value of the correction amounts of the printing pressure between the intaglio cylinder and the impression cylinder, and the memory M39 for storing the total value of the correction amounts of the printing pressure between the intaglio cylinder and the impression cylinder is overwritten with the value obtained by addition.

Then, in Step P148, 1 is added to the count value M of the memory M15 for overwriting. Then, in Step P149, the total number Mmax of the ink supply units is loaded from the memory M17. Then, in Step P150, it is determined whether the count value M is larger than the total number Mmax of the ink supply units. If the answer is Y, in Step P151, the total value of the correction amounts of the nip pressure between the blanket cylinder and the intaglio cylinder is loaded from the memory M37. If the answer is N, the program returns to Step P142.

Then, in Step P152, the total number Mmax of the ink supply units is loaded from the memory M17. Then, in Step P153, the total value of the correction amounts of the nip pressure between the blanket cylinder and the intaglio cylinder is divided by the total number Mmax of the ink supply units to compute the average value of the correction amounts of the nip pressure between the blanket cylinder and the intaglio cylinder, followed by storing the average value into the memory M38.

Then, in Step P154, the total value of the correction amounts of the printing pressure between the intaglio cylinder and the impression cylinder is loaded from the memory M39. Then, in Step P155, the total number Mmax of the ink supply units is loaded from the memory M17. Then, in Step P156, the total value of the correction amounts of the printing pressure between the intaglio cylinder and the impression cylinder is divided by the total number Mmax of the ink supply units to compute the average value of the correction amounts of the printing pressure between the intaglio cylinder and the impression cylinder, followed by storing the average value into the memory M40.

In accordance with the above steps, the correction amount of the nip pressure between the ink fountain roller and the ink form roller, the correction amount of the nip pressure between the ink form roller and the pattern roller, and the correction amount of the nip pressure between the pattern roller and the blanket cylinder in each ink supply unit M, the average value of the correction amounts of the nip pressure between the blanket cylinder and the intaglio cylinder, and the average value of the correction amounts of the printing pressure between the intaglio cylinder and the impression cylinder are obtained from the ink film thickness and the emboss amount of the color patch lines L which have been measured.

Then, in Step P157, 1 is written into the count value M of the memory M15. Then, in Step P158, the output of the A/D converter 87 connected to the potentiometer 88 for the motor for adjusting the nip pressure between the ink fountain roller and the ink form roller in the ink supply unit M is loaded, and stored into the memory M41. Then, in Step P159, the current nip pressure between the ink fountain roller and the ink form roller in the ink supply unit M is computed from the output of the A/D converter 87 connected to the potentiometer 88 for the motor for adjusting the nip pressure between the ink fountain roller and the ink form roller in the ink supply unit M, and the computed value is stored into the memory M42.

Then, in Step P160, the correction amount of the nip pressure between the ink fountain roller and the ink form roller is loaded from the address position for the ink supply unit M in the memory M30. Then, in Step P161, it is determined whether the correction amount of the nip pressure between the ink fountain roller and the ink form roller in the ink supply unit M is unequal to zero. If the answer is Y, in Step P162, it is determined whether the correction amount of the nip pressure between the ink fountain roller and the ink form roller in the ink supply unit M is larger than zero. If the answer is N in Step P161, the program shifts to Step P175 to be described later.

If the answer is Y in the above Step P162, Step P163 is executed to add the correction amount of the nip pressure between the ink fountain roller and the ink form roller in the ink supply unit M to the current nip pressure between the ink fountain roller and the ink form roller in the ink supply unit M to compute the desired nip pressure between the ink fountain roller and the ink form roller in the ink supply unit M, and store the desired nip pressure into the address position for the ink supply unit M in the memory M43. Then, inStepP164, the desired output of the A/D converter 87 connected to the potentiometer 88 for the motor for adjusting the nip pressure between the ink fountain roller and the ink form roller in the ink supply unit M is computed from the desired nip pressure between the ink fountain roller and the ink form roller in the ink supply unit M, and stored into the address position for the ink supply unit M in the memory M44.

Then, in Step P165, a normal rotation command is outputted to the driver 86 for the motor for adjusting the nip pressure between the ink fountain roller and the ink form roller in the ink supply unit M. Then, in Step P166, the output of the A/D converter 87 connected to the potentiometer 88 for the motor for adjusting the nip pressure between the ink fountain roller and the ink form roller in the ink supply unit M is loaded, and stored into the memory M41.

Then, in Step P167, it is determined whether the loaded output of the A/D converter 87 connected to the potentiometer 88 for the motor for adjusting the nip pressure between the ink fountain roller and the ink form roller in the ink supply unit M is equal to the desired output of the A/D converter 87 connected to the potentiometer 88 for the motor for adjusting the nippressure between the ink fountain roller and the ink form roller in the ink supply unit M. If the answer is Y, the outputting of the normal rotation command to the driver 86 for the motor for adjusting the nip pressure between the ink fountain roller and the ink form roller in the ink supply unit M is stopped in Step P168. Then, the program shifts to Step P175 to be described later. If the answer is N, the program returns to Step P166.

If the answer is N in the aforementioned Step P162, on the other hand, Step P169 is executed to add the correction amount of the nip pressure between the ink fountain roller and the ink form roller in the ink supply unit M to the current nip pressure between the ink fountain roller and the ink form roller in the ink supply unit M to compute the desired nip pressure between the ink fountain roller and the ink form roller in the ink supply unit M, and store the desired nip pressure into the address position for the ink supply unit M in the memory M43. Then, in Step P170, the desired output of the A/D converter 87 connected to the potentiometer 88 for the motor for adjusting the nip pressure between the ink fountain roller and the ink form roller in the ink supply unit M is computed from the desired nip pressure between the ink fountain roller and the ink form roller in the ink supply unit M, and stored into the address position for the ink supply unit M in the memory M44.

Then, in Step P171, a reverse rotation command is outputted to the driver 86 for the motor for adjusting the nip pressure between the ink fountain roller and the ink form roller in the ink supply unit M. Then, in Step P172, the output of the A/D converter 87 connected to the potentiometer 88 for the motor for adjusting the nip pressure between the ink fountain roller and the ink form roller in the ink supply unit M is loaded, and stored into the memory M41.

Then, in Step P173, it is determined whether the loaded output of the A/D converter 87 connected to the potentiometer 88 for the motor for adjusting the nip pressure between the ink fountain roller and the ink form roller in the ink supply unit M is equal to the desired output of the A/D converter 87 connected to the potentiometer 88 for the motor f or adj ust ing the nip pressure between the ink fountain roller and the ink form roller in the ink supply unit M. If the answer is Y, the outputting of the reverse rotation command to the driver 86 for the motor for adjusting the nip pressure between the ink fountain roller and the ink form roller in the ink supply unit M is stopped in Step P174. Then, the program shifts to Step P175 to be described later. If the answer is N, the program returns to Step P172.

Then, in Step P175 , the output of the A/D converter 90 connected to the potentiometer 91 for the motor for adjusting the nip pressure between the ink form roller and the pattern roller in the ink supply unit M is loaded, and stored into the memory M45. Then, in Step P176, the current nip pressure between the ink form roller and the pattern roller in the ink supply unit M is computed from the output of the A/D converter 90 connected to the potentiometer 91 for the motor for adjusting the nip pressure between the ink form roller and the pattern roller in the ink supply unit M, and the computed value is stored into the memory M46.

Then, in Step P177, the correction amount of the nip pressure between the ink form roller and the pattern roller is loaded from the address position for the ink supply unit M in the memory M32. Then, in Step P178, it is determined whether the correction amount of the nip pressure between the ink form roller and the pattern roller in the ink supply unit M is unequal to zero. If the answer is Y, in Step P179, it is determined whether the correction amount of the nip pressure between the ink form roller and the pattern roller in the ink supply unit M is larger than zero. If the answer is N in Step P178, the program shifts to Step P192 to be described later.

If the answer is Y in the above Step P179, Step P180 is executed to add the correction amount of the nip pressure between the ink form roller and the pattern roller in the ink supply unit M to the current nip pressure between the ink form roller and the pattern roller in the ink supply unit M to compute the desired nip pressure between the ink form roller and the pattern roller in the ink supply unit M, and store the desired nip pressure into the address position for the ink supply unit M in the memory M47. Then, in Step P181, the desired output of the A/D converter 90 connected to the potentiometer 91 for the motor for adjusting the nip pressure between the ink form roller and the pattern roller in the ink supply unit M is computed from the desired nip pressure between the ink form roller and the pattern roller in the ink supply unit M, and stored into the address position for the ink supply unit M in the memory M48.

Then, in Step P182, a normal rotation command is outputted to the driver 89 for the motor for adjusting the nip pressure between the ink form roller and the pattern roller in the ink supply unit M. Then, in Step P183, the output of the A/D converter 90 connected to the potentiometer 91 for the motor for adjusting the nip pressure between the ink form roller and the pattern roller in the ink supply unit M is loaded, and stored into the memory M45.

Then, in Step P184, it is determined whether the loaded output of the A/D converter 90 connected to the potentiometer 91 for the motor for adjusting the nip pressure between the ink form roller and the pattern roller in the ink supply unit M is equal to the desired output of the A/D converter 90 connected to the potentiometer 91 for the motor for adjusting the nip pressure between the ink form roller and the pattern roller in the ink supply unit M. If the answer is Y, the outputting of the normal rotation command to the driver 89 for the motor for adjusting the nip pressure between the ink form roller and the pattern roller in the ink supply unit M is stopped in Step P185. Then, the program shifts to Step P192 to be described later. If the answer is N, the program returns to Step P183.

If the answer is N in the aforementioned Step P179, on the other hand, Step P186 is executed to add the correction amount of the nip pressure between the ink form roller and the pattern roller in the ink supply unit M to the current nip pressure between the ink form roller and the pattern roller in the ink supply unit M to compute the desired nip pressure between the ink form roller and the pattern roller in the ink supply unit M, and store the desired nip pressure into the address position for the ink supply unit M in the memory M47. Then, in Step P187, the desired output of the A/D converter 90 connected to the potentiometer 91 for the motor for adjusting the nip pressure between the ink form roller and the pattern roller in the ink supply unit M is computed from the desired nip pressure between the ink form roller and the pattern roller in the ink supply unit M, and stored into the address position for the ink supply unit M in the memory M48.

Then, in Step P188, a reverse rotation command is outputted to the driver 89 for the motor for adjusting the nip pressure between the ink form roller and the pattern roller in the ink supply unit M. Then, in Step P189, the output of the A/D converter 90 connected to the potentiometer 91 for the motor for adjusting the nip pressure between the ink form roller and the pattern roller in the ink supply unit M is loaded, and stored into the memory M45.

Then, in Step P190, it is determined whether the loaded output of the A/D converter 90 connected to the potentiometer 91 for the motor for adjusting the nip pressure between the ink form roller and the pattern roller in the ink supply unit M is equal to the desired output of the A/D converter 90 connected to the potentiometer 91 for the motor for adjusting the nip pressure between the ink form roller and the pattern roller in the ink supply unit M. If the answer is Y, the outputting of the reverse rotation command to the driver 89 for the motor for adjusting the nip pressure between the ink form roller and the pattern roller in the ink supply unit M is stopped in Step P191. Then, the program shifts to Step P192 to be described later. If the answer is N, the program returns to Step P189.

Then, in Step P192, the output of the A/D converter 93 connected to the potentiometer 94 for the motor for adjusting the nip pressure between the pattern roller and the blanket cylinder in the ink supply unit M is loaded, and stored into the memory M49. Then, in Step P193, the current nip pressure between the pattern roller and the blanket cylinder in the ink supply unit M is computed from the output of the A/D converter 93 connected to the potentiometer 94 for the motor for adjusting the nip pressure between the pattern roller and the blanket cylinder in the ink supply unit M, and the computed value is stored into the memory M50.

Then, in Step P194, the correction amount of the nip pressure between the pattern roller and the blanket cylinder is loaded from the address position for the ink supply unit M in the memory M34. Then, in Step P195, it is determined whether the correction amount of the nip pressure between the pattern roller and the blanket cylinder in the ink supply unit M is unequal to zero. If the answer is Y, in Step P196, it is determined whether the correction amount of the nip pressure between the pattern roller and the blanket cylinder in the ink supply unit M is larger than zero. If the answer is N in Step P195, the program shifts to Step P203 to be described later.

If the answer is Y in the above Step P196, Step P197 is executed to add the correction amount of the nip pressure between the pattern roller and the blanket cylinder in the ink supply unit M to the current nip pressure between the pattern roller and the blanket cylinder in the ink supply unit M to compute the desired nip pressure between the pattern roller and the blanket cylinder in the ink supply unit M, and store the desired nip pressure into the address position for the ink supply unit M in the memory M51. Then, in Step P198, the desired output of the A/D converter 93 connected to the potentiometer 94 for the motor for adjusting the nip pressure between the pattern roller and the blanket cylinder in the ink supply unit M is computed from the desired nip pressure between the pattern roller and the blanket cylinder in the ink supply unit M, and stored into the address position for the ink supply unit M in the memory M52.

Then, in Step P199, a normal rotation command is outputted to the driver 92 for the motor for adjusting the nip pressure between the pattern roller and the blanket cylinder in the ink supply unit M. Then, in Step P200, the output of the A/D converter 93 connected to the potentiometer 94 for the motor for adjusting the nip pressure between the pattern roller and the blanket cylinder in the ink supply unit M is loaded, and stored into the memory M49.

Then, in Step P201, it is determined whether the loaded output of the A/D converter 93 connected to the potentiometer 94 for the motor for adjusting the nip pressure between the pattern roller and the blanket cylinder in the ink supply unit M is equal to the desired output of the A/D converter 93 connected to the potentiometer 94 for the motor for adjusting the nip pressure between the pattern roller and the blanket cylinder in the ink supply unit M. If the answer is Y, the outputting of the normal rotation command to the driver 92 for the motor for adjusting the nip pressure between the pattern roller and the blanket cylinder in the ink supply unit M is stopped in Step P202. Then, the program shifts to Step P203 to be described later. If the answer is N, the program returns to Step P200.

If the answer is N in the aforementioned Step P196, on the other hand, Step P206 is executed to add the correction amount of the nip pressure between the pattern roller and the blanket cylinder in the ink supply unit M to the current nip pressure between the pattern roller and the blanket cylinder in the ink supply unit M to compute the desired nip pressure between the pattern roller and the blanket cylinder in the ink supply unit M, and store the desired nip pressure into the address position for the ink supply unit M in the memory M51. Then, in Step P207, the desired output of the A/D converter 93 connected to the potentiometer 94 for the motor for adjusting the nip pressure between the pattern roller and the blanket cylinder in the ink supply unit M is computed from the desired nip pressure between the pattern roller and the blanket cylinder in the ink supply unit M, and stored into the address position for the ink supply unit M in the memory M52.

Then, in Step P208, a reverse rotation command is outputted to the driver 92 for the motor for adjusting the nip pressure between the pattern roller and the blanket cylinder in the ink supply unit M. Then, in Step P209, the output of the A/D converter 93 connected to the potentiometer 94 for the motor for adjusting the nip pressure between the pattern roller and the blanket cylinder in the ink supply unit M is loaded, and stored into the memory M49.

Then, in Step P210, it is determined whether the loaded output of the A/D converter 93 connected to the potentiometer 94 for the motor for adjusting the nip pressure between the pattern roller and the blanket cylinder in the ink supply unit M is equal to the desired output of the A/D converter 93 connected to the potentiometer 94 for the motor for adjusting the nip pressure between the pattern roller and the blanket cylinder in the ink supply unit M. If the answer is Y, the outputting of the reverse rotation command to the driver 92 for the motor for adjusting the nip pressure between the pattern roller and the blanket cylinder in the ink supply unit M is stopped in Step P211. Then, the program shifts to Step P203 to be described later. If the answer is N, the program returns to Step P209.

Then, in Step P203, 1 is added to the count value M of the memory M15 for overwriting. Then, in Step P204, the total number Mmax of the ink supply units is loaded from the memory M17. Then, in Step P205, it is determined whether the count value M is larger than the total number Mmax of the ink supply units. If the answer is Y, the program shifts to Step P212. If the answer is N, the program returns to Step P158.

Then, in Step P212, the output of the A/D converter 96 connected to the potentiometer 97 for the motor for adjusting the nip pressure between the blanket cylinder and the intaglio cylinder is loaded, and stored into the memory M53. Then, in Step P213, the current nip pressure between the blanket cylinder and the intaglio cylinder is computed from the output of the A/D converter 96 connected to the potentiometer 97 for the motor for adjusting the nip pressure between the blanket cylinder and the intaglio cylinder, and the computed value is stored into the memory M54.

Then, in Step P214, the average value of the correction amounts of the nip pressure between the blanket cylinder and the intaglio cylinder is loaded from the memory M38. Then, in Step P215, it is determined whether the average value of the correction amounts of the nippressure between the blanket cylinder and the intaglio cylinder is unequal to zero. If the answer is Y, in Step P216, it is determined whether the average value of the correction amounts of the nip pressure between the blanket cylinder and the intaglio cylinder is larger than zero. If the answer is N in Step P215, the program shifts to Step P229 to be described later.

If the answer is Y in the above Step P216, Step P217 is executed to add the average value of the correction amounts of the nip pressure between the blanket cylinder and the intaglio cylinder to the current nip pressure between the blanket cylinder and the intaglio cylinder to compute the desired nip pressure between the blanket cylinder and the intaglio cylinder, and store the desired nip pressure into the memory M55. Then, in Step P218, the desired output of the A/D converter 96 connected to the potentiometer 97 for the motor for adjusting the nip pressure between the blanket cylinder and the intaglio cylinder is computed from the desired nip pressure between the blanket cylinder and the intaglio cylinder, and stored into the memory M56.

Then, in Step P219, a normal rotation command is outputted to the driver 95 for the motor for adjusting the nip pressure between the blanket cylinder and the intaglio cylinder. Then, in Step P220, the output of the A/D converter 96 connected to the potentiometer 97 for the motor for adjusting the nip pressure between the blanket cylinder and the intaglio cylinder is loaded, and stored into the memory M53.

Then, in Step P221, it is determined whether the loaded output of the A/D converter 96 connected to the potentiometer 97 for the motor for adjusting the nip pressure between the blanket cylinder and the intaglio cylinder is equal to the desired output of the A/D converter 96 connected to the potentiometer 97 for the motor for adjusting the nip pressure between the blanket cylinder and the intaglio cylinder. If the answer is Y, the outputting of the normal rotation command to the driver 95 for the motor for adjusting the nip pressure between the blanket cylinder and the intaglio cylinder is stopped in Step P222. Then, the program shifts to Step P229 to be described later. If the answer is N, the program returns to Step P220.

If the answer is N in the aforementioned Step P216, on the other hand, Step P223 is executed to add the average value of the correction amounts of the nip pressure between the blanket cylinder and the intaglio cylinder to the current nip pressure between the blanket cylinder and the intaglio cylinder to compute the desired nip pressure between the blanket cylinder and the intaglio cylinder, and store the desired nip pressure into the memory M55. Then, in Step P224, the desired output of the A/D converter 96 connected to the potentiometer 97 for the motor for adjusting the nip pressure between the blanket cylinder and the intaglio cylinder is computed from the desired nip pressure between the blanket cylinder and the intaglio cylinder, and stored into the memory M56.

Then, in Step P225, a reverse rotation command is outputted to the driver 95 for the motor for adjusting the nip pressure between the blanket cylinder and the intaglio cylinder. Then, in Step P226, the output of the A/D converter 96 connected to the potentiometer 97 for the motor for adjusting the nip pressure between the blanket cylinder and the intaglio cylinder is loaded, and stored into the memory M53.

Then, in Step P227, it is determined whether the loaded output of the A/D converter 96 connected to the potentiometer 97 for the motor for adjusting the nip pressure between the blanket cylinder and the intaglio cylinder is equal to the desired output of the A/D converter 96 connected to the potentiometer 97 for the motor for adjusting the nip pressure between the blanket cylinder and the intaglio cylinder. If the answer is Y, the outputting of the reverse rotation command to the driver 95 for the motor for adjusting the nip pressure between the blanket cylinder and the intaglio cylinder is stopped in Step P228. Then, the program shifts to Step P229 to be described later. If the answer is N, the program returns to Step P226.

Then, in Step P229, the output of the A/D converter 99 connected to the potentiometer 100 for the motor for adjusting the printing pressure between the intaglio cylinder and the impression cylinder is loaded, and stored into the memory M57. Then, in Step P230, the current printing pressure between the intaglio cylinder and the impression cylinder is computed from the output of the A/D converter 99 connected to the potentiometer 100 for the motor for adjusting the printingpressure between the intaglio cylinder and the impression cylinder, and the computed value is stored into the memory M58.

Then, in Step P231, the average value of the correction amounts of the printing pressure between the intaglio cylinder and the impression cylinder is loaded from the memory M40. Then, in Step P232, it is determined whether the average value of the correction amounts of the printing pressure between the intaglio cylinder and the impression cylinder is unequal to zero. If the answer is Y, in Step P233, it is determined whether the average value of the correction amounts of the printing pressure between the intaglio cylinder and the impression cylinder is larger than zero. If the answer is N in Step P232, the program returns to Step P1.

If the answer is Y in the above Step P233, Step P234 is executed to add the average value of the correction amounts of the printing pressure between the intaglio cylinder and the impression cylinder to the current printing pressure between the intaglio cylinder and the impression cylinder to compute the desired printing pressure between the intaglio cylinder and the impression cylinder, and store the desired printing pressure into the memory M59. Then, in Step P235, the desired output of the A/D converter 99 connected to the potentiometer 100 for the motor for adjusting the printing pressure between the intaglio cylinder and the impression cylinder is computed from the desired printing pressure between the intaglio cylinder and the impression cylinder, and stored into the memory M60.

Then, in Step P236, a normal rotation command is outputted to the driver 98 for the motor for adjusting the printing pressure between the intaglio cylinder and the impression cylinder. Then, in Step P237, the output of the A/D converter 99 connected to the potentiometer 100 for the motor for adjusting the printing pressure between the intaglio cylinder and the impression cylinder is loaded, and stored into the memory M57.

Then, in Step P238, it is determined whether the loaded output of the A/D converter 99 connected to the potentiometer 100 for the motor for adjusting the printing pressure between the intaglio cylinder and the impression cylinder is equal to the desired output of the A/D converter 99 connected to the potentiometer 100 for the motor for adjusting the printing pressure between the intaglio cylinder and the impression cylinder. If the answer is Y, the outputting of the normal rotation command to the driver 98 for the motor for adjusting the printing pressure between the intaglio cylinder and the impression cylinder is stopped in Step P239. Then, the program returns to Step P1. If the answer is N, the program returns to Step P237.

If the answer is N in the aforementioned Step P233, on the other hand, Step P240 is executed to add the average value of the correction amounts of the printing pressure between the intaglio cylinder and the impression cylinder to the current printing pressure between the intaglio cylinder and the impression cylinder to compute the desired printing pressure between the intaglio cylinder and the impression cylinder, and store the desired printing pressure into the memory M59. Then, in Step P241, the desired output of the A/D converter 99 connected to the potentiometer 100 for the motor for adjusting the printing pressure between the intaglio cylinder and the impression cylinder is computed from the desiredprintingpressure between the intaglio cylinder and the impression cylinder, and stored into the memory M60.

Then, in Step P242, a reverse rotation command is outputted to the driver 98 for the motor for adjusting the printing pressure between the intaglio cylinder and the impression cylinder. Then, in Step P243, the output of the A/D converter 99 connected to the potentiometer 100 for the motor for adjusting the printing pressure between the intaglio cylinder and the impression cylinder is loaded, and stored into the memory M57.

Then, in Step P244, it is determined whether the loaded output of the A/D converter 99 connected to the potentiometer 100 for the motor for adjusting the printing pressure between the intaglio cylinder and the impression cylinder is equal to the desired output of the A/D converter 99 connected to the potentiometer 100 for the motor for adjusting the printing pressure between the intaglio cylinder and the impression cylinder. If the answer is Y, the outputting of the reverse rotation command to the driver 98 for the motor for adjusting the printing pressure between the intaglio cylinder and the impression cylinder is stopped in Step P245. Then, the program returns to Step P1. If the answer is N, the program returns to Step P243.

In accordance with the above steps, the actual nip pressure of the respective portions and the actual printing pressure are corrected in response to the obtained correction amounts of the nip pressure between the ink fountain roller and the ink form roller, the nip pressure between the ink form roller and the pattern roller, and the nip pressure between the pattern roller and the blanket cylinder in each ink supply unit, the obtained average value of the correction amounts of the nip pressure between the blanket cylinder and the intaglio cylinder, and the obtained average value of the correction amounts of the printing pressure between the intaglio cylinder and the impression cylinder.

According to the present embodiment described above, in the Orloff (type) intaglio printing press, the ink film thickness and emboss amount of the printed sheet W are measured using the face side distance measuring instrument 50 and the reverse side distance measuring instrument 51. In accordance with the measured emboss amount, the aforementioned motor 45 is drivingly controlled to adjust the printing pressure between the intaglio cylinder 14 and the impression cylinder 13 automatically. Similarly, in accordance with the measured ink film thickness, the aforementioned motors 24, 32, 38 and 44 are drivingly controlled, whereby the nip pressure between the ink fountain roller 17a and the ink form roller 17b, the nip pressure between the ink form roller 17b and the pattern roller 16, and the nip pressure between the pattern roller 16 and the blanket cylinder 15 in each ink supply unit, and the nip pressure between the blanket cylinder 15 and the intaglio cylinder 14 are automatically adjusted.

Thus, printing troubles due to misadjustment of the nip pressure orprintingpressure owing to the operator's manual operation canbeavoided. Consequently, burden on the operator can be lessened, and the emboss amount and the ink film thickness can be controlled with high accuracy to decrease defective printing products (wasted sheets).

### Embodiment 2

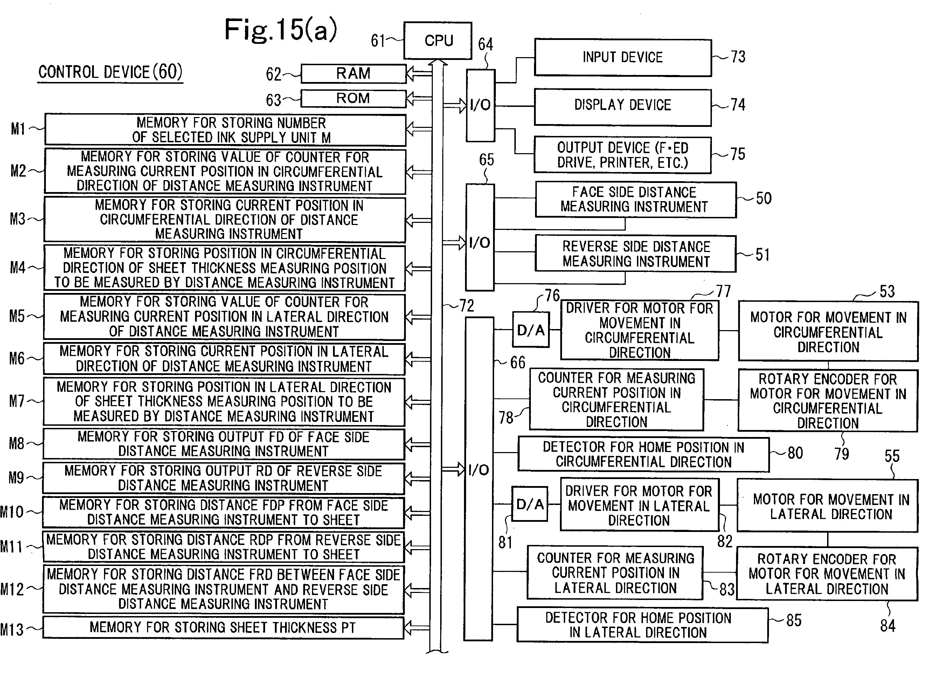

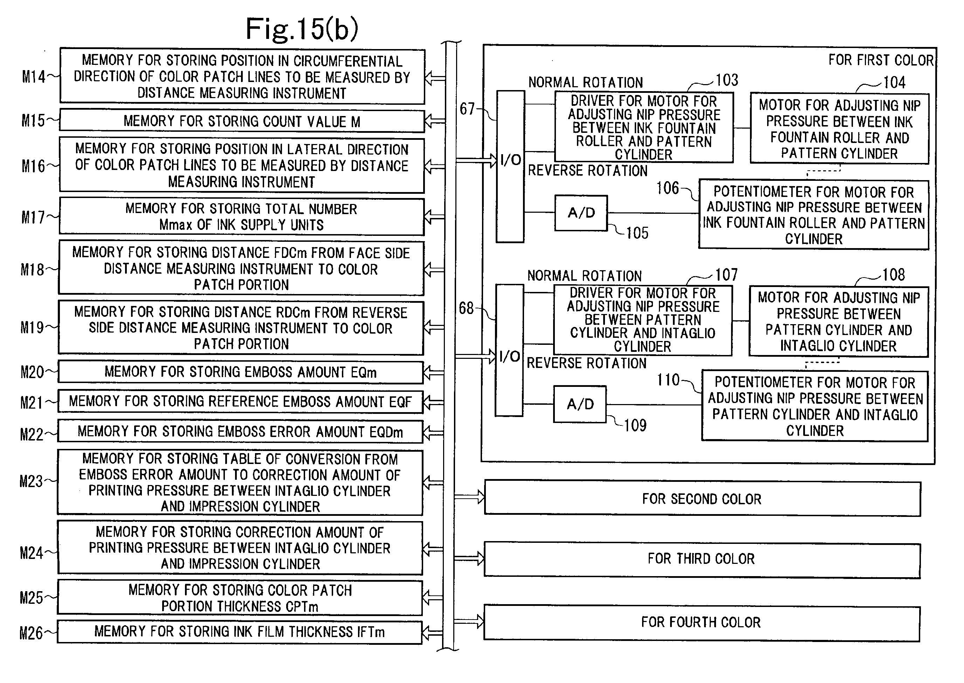

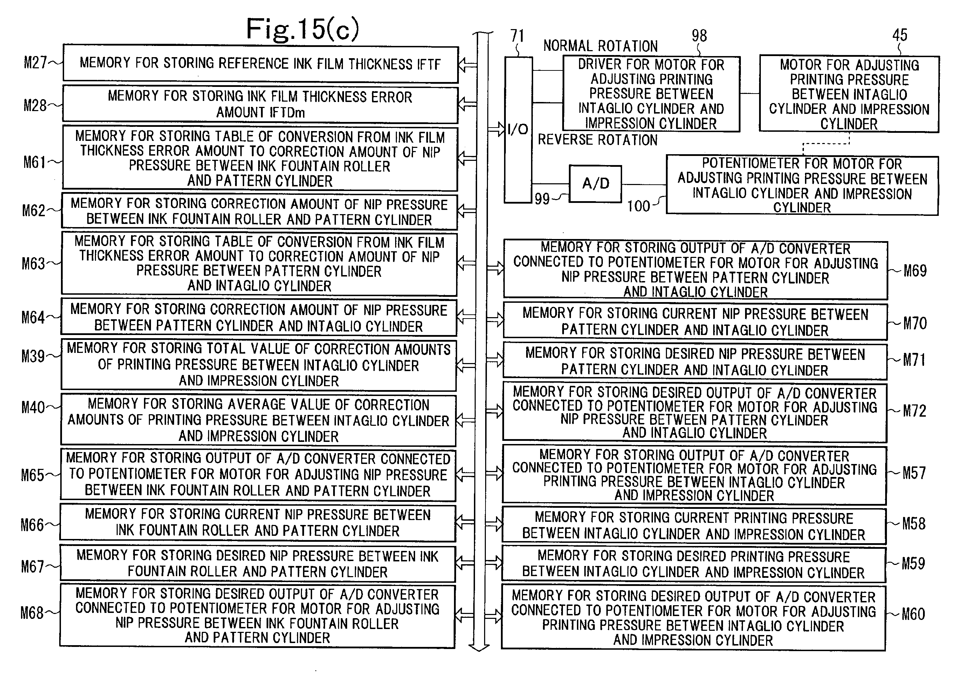

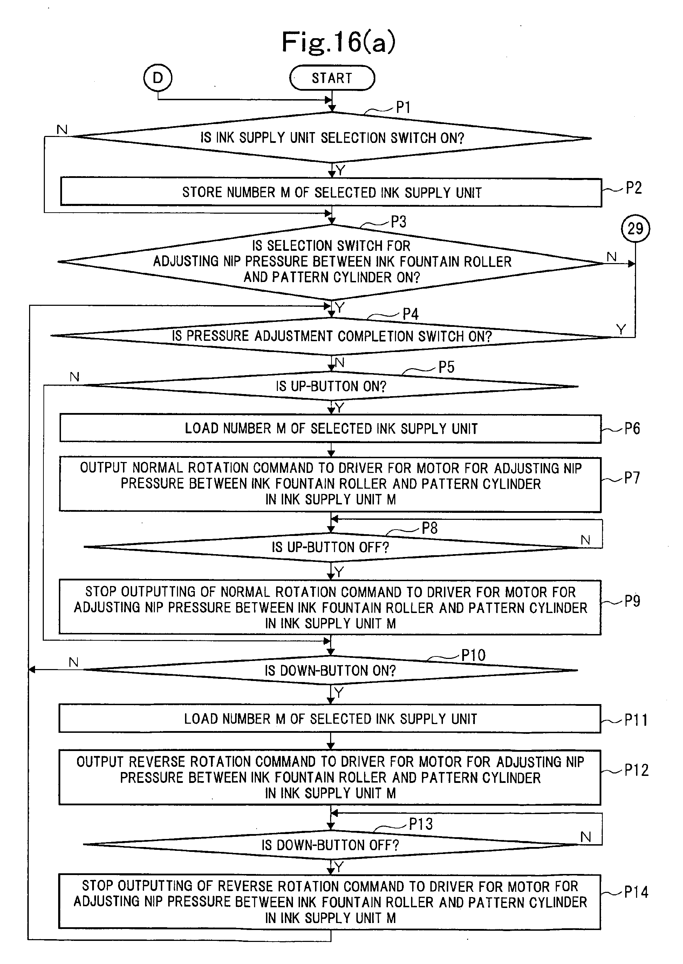

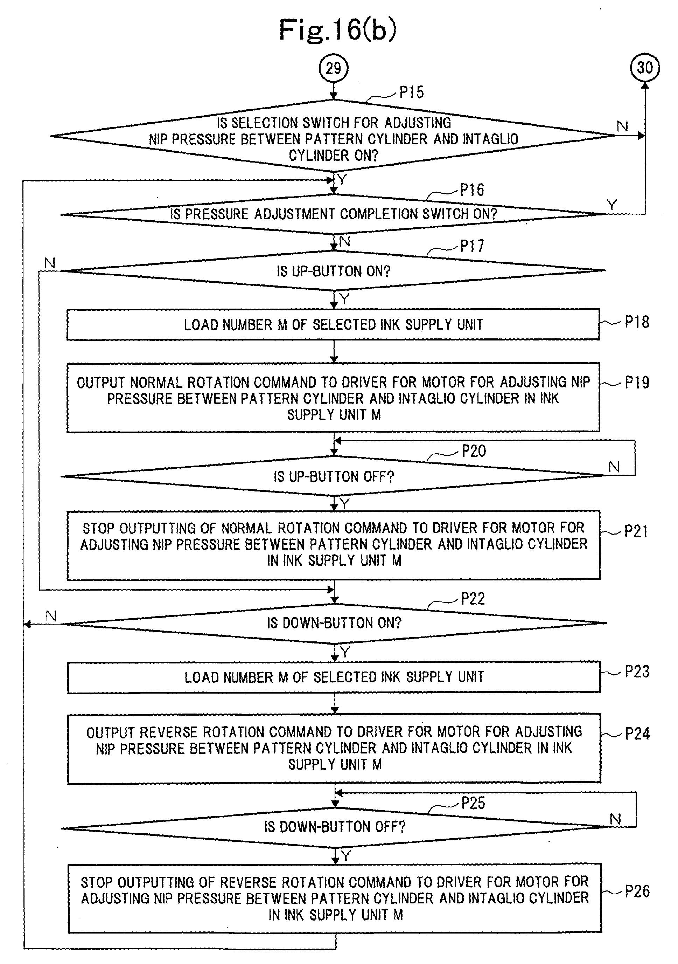

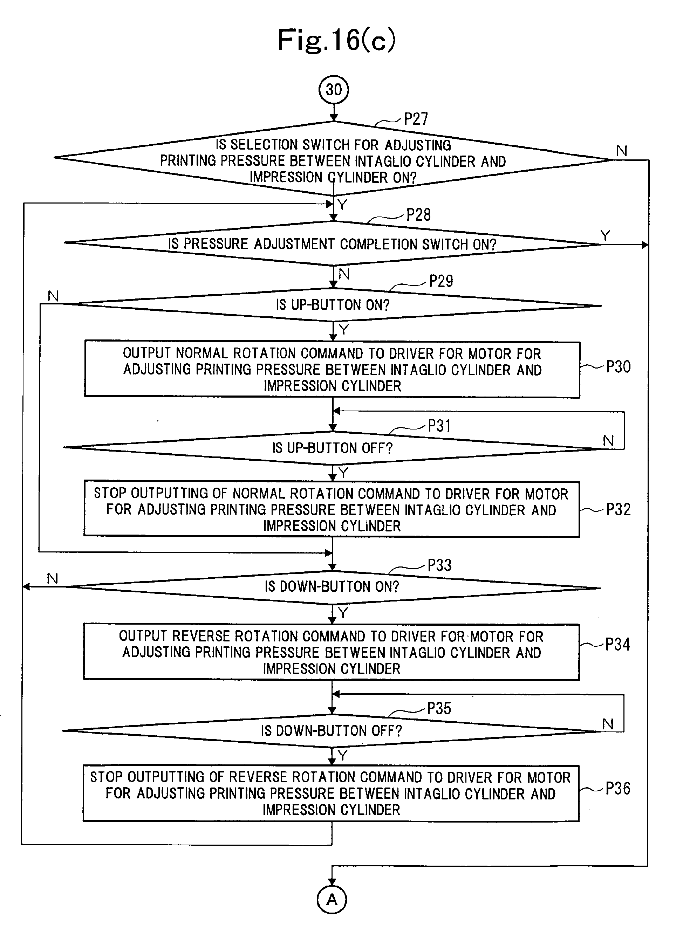

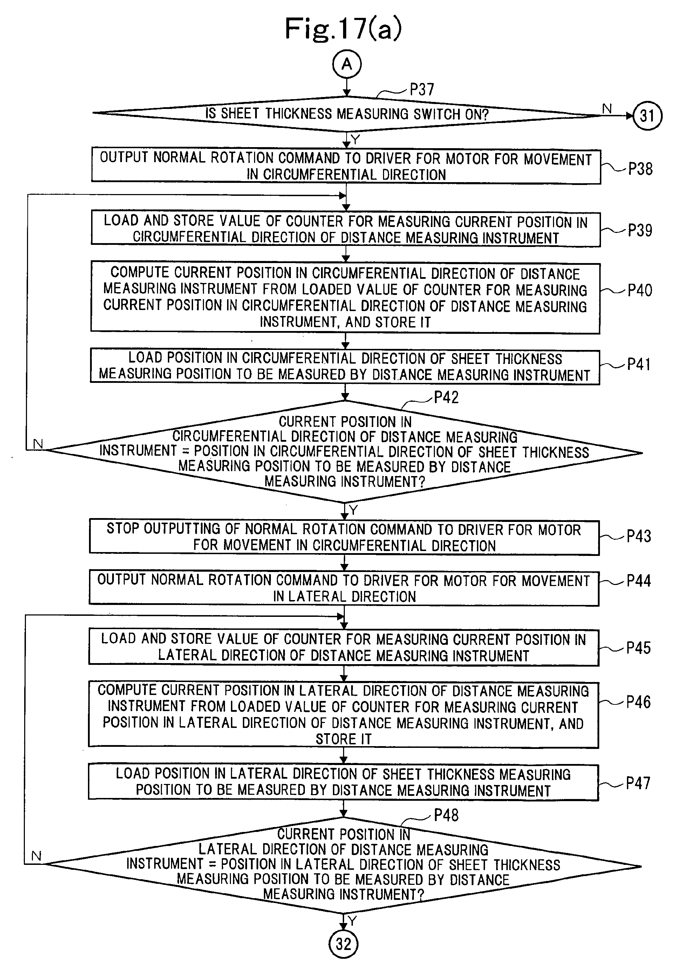

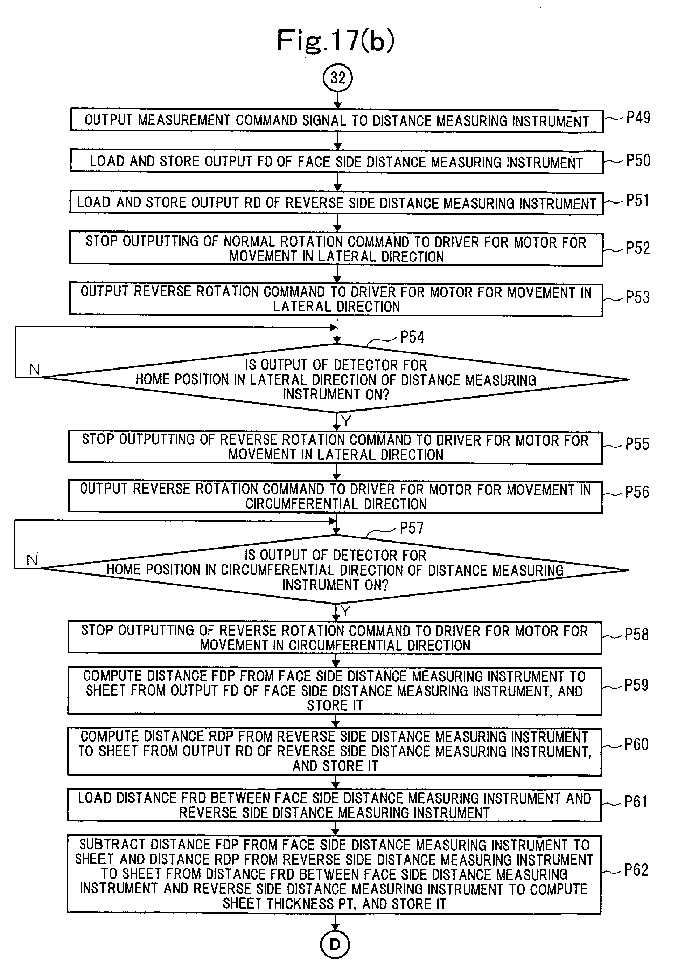

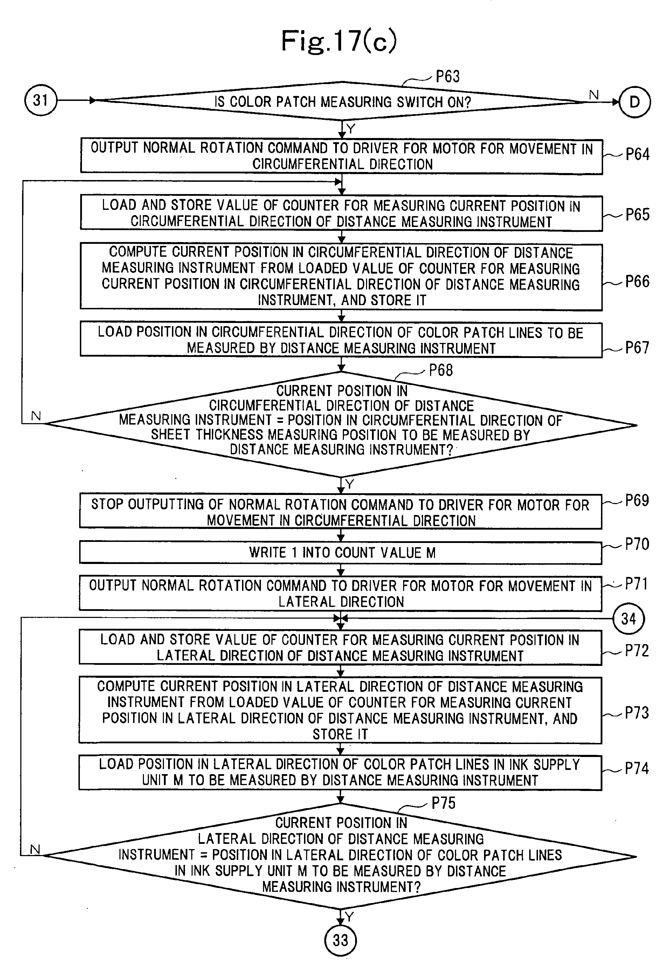

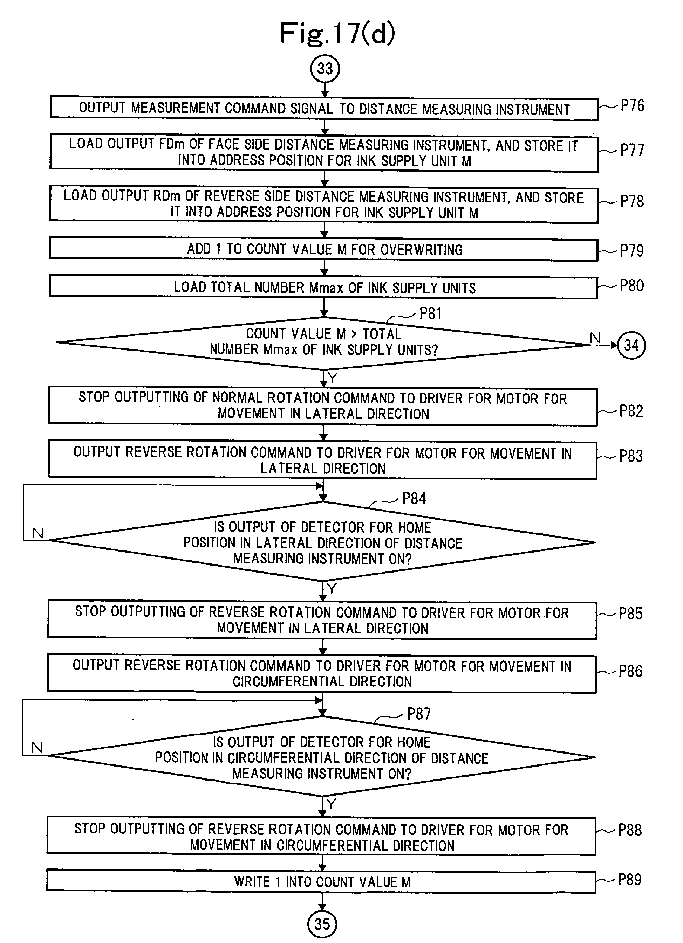

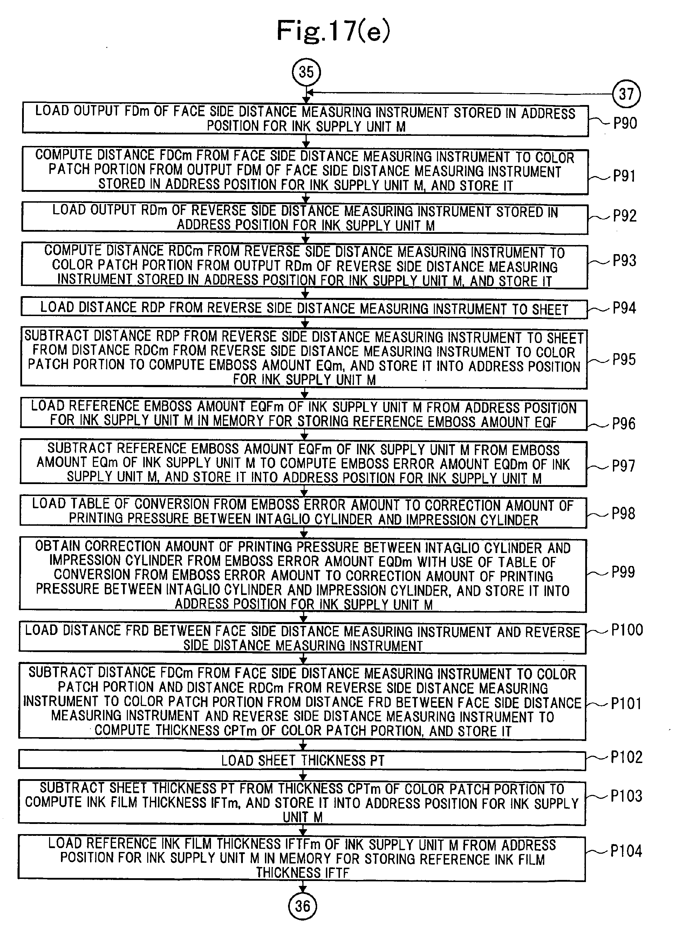

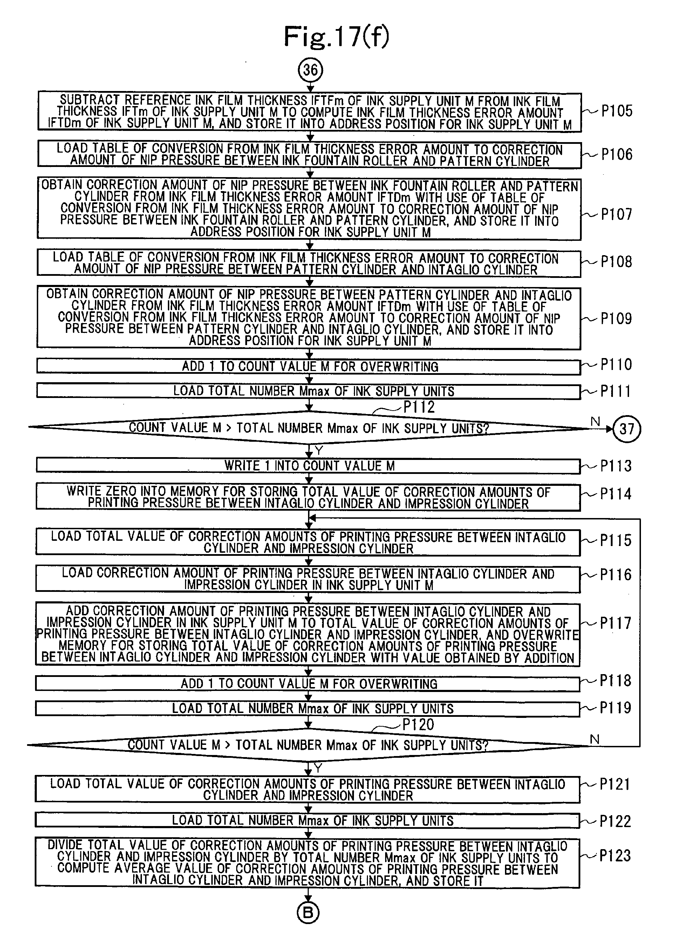

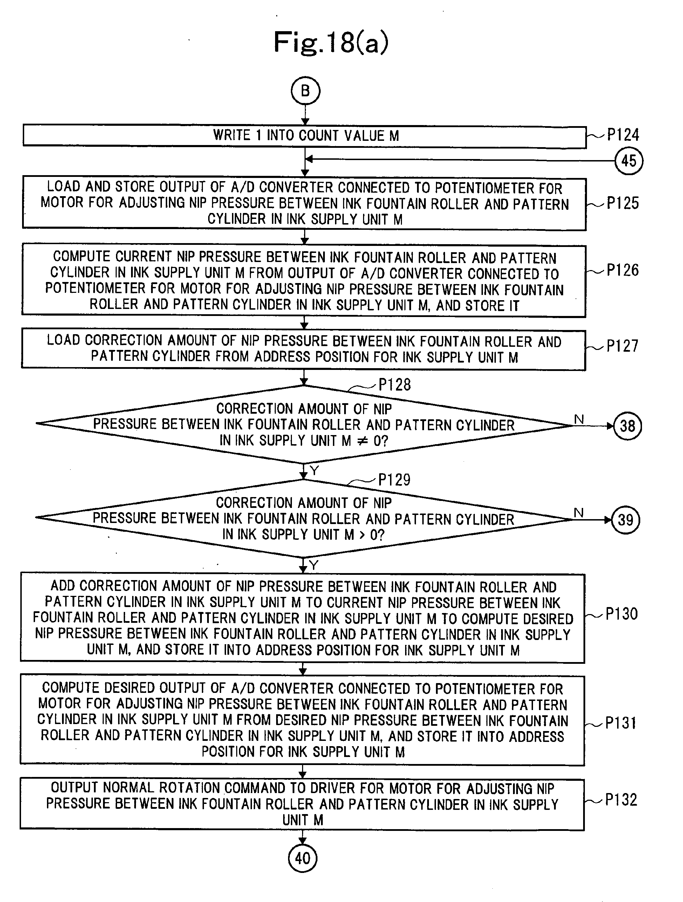

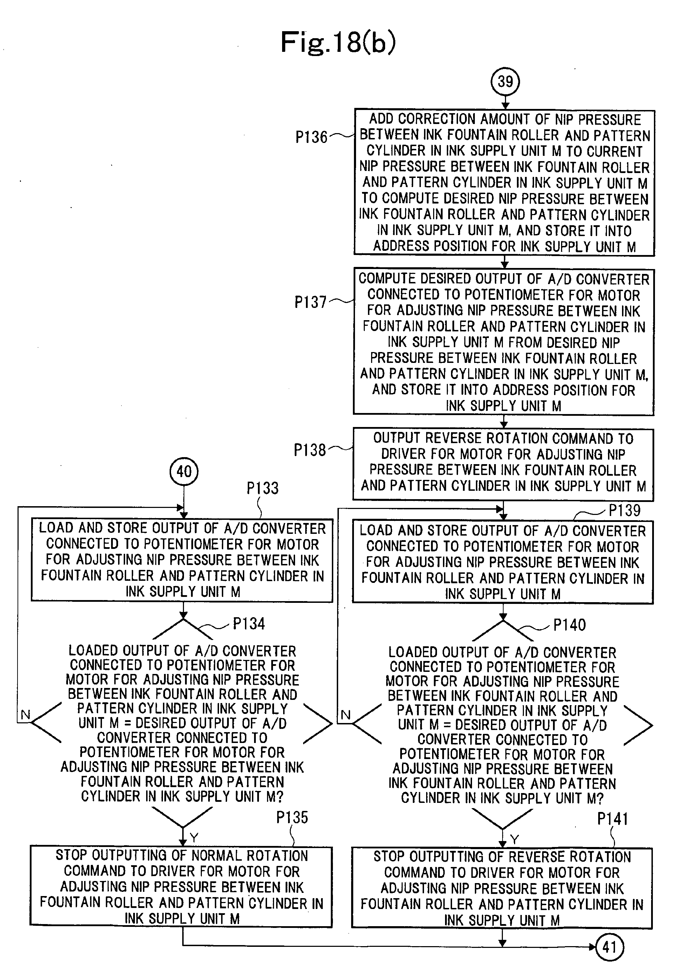

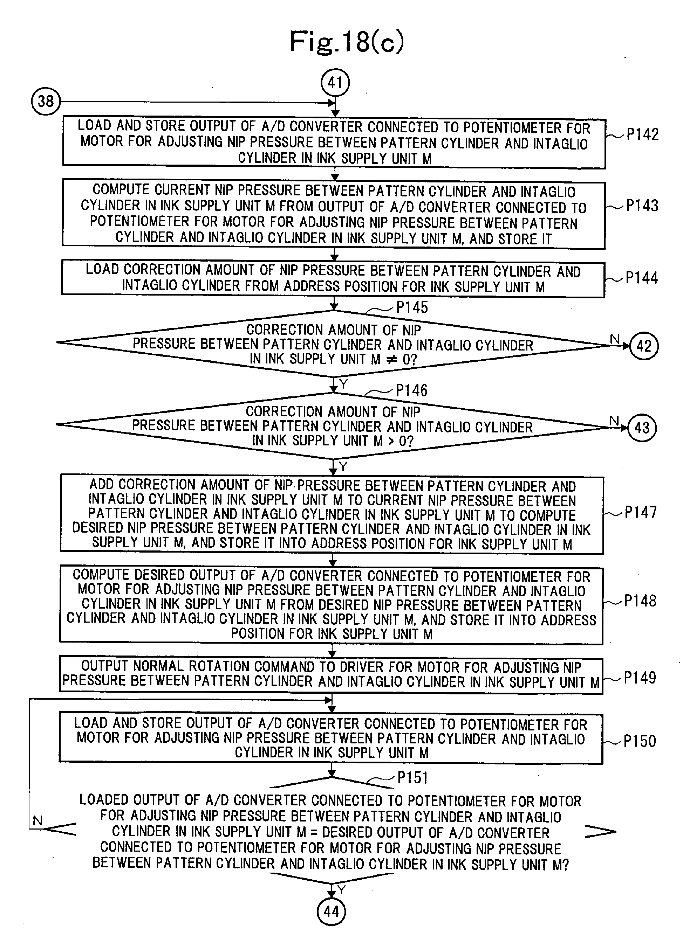

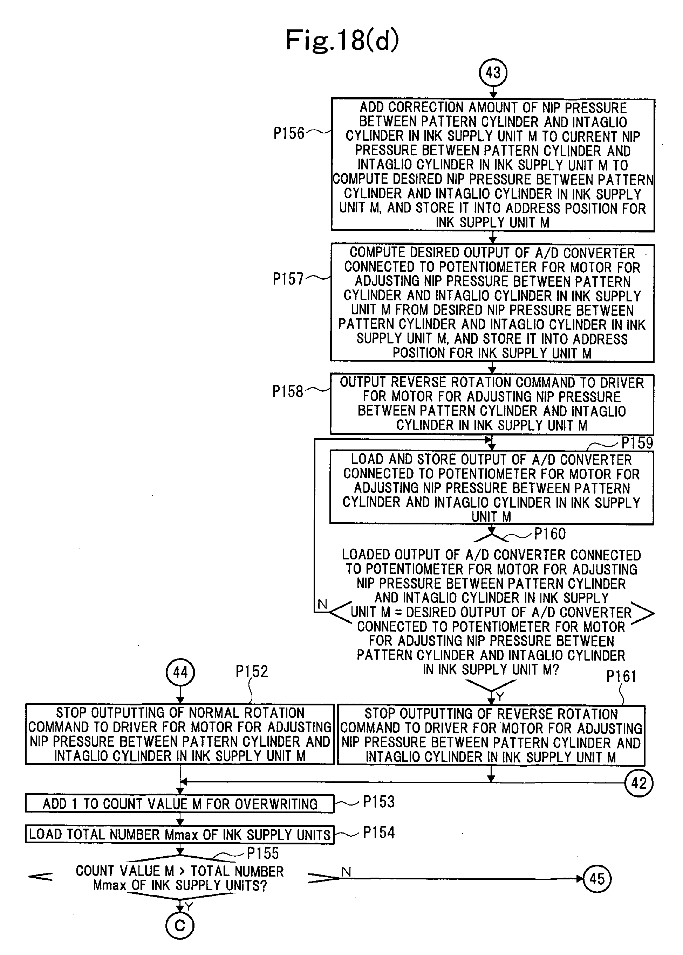

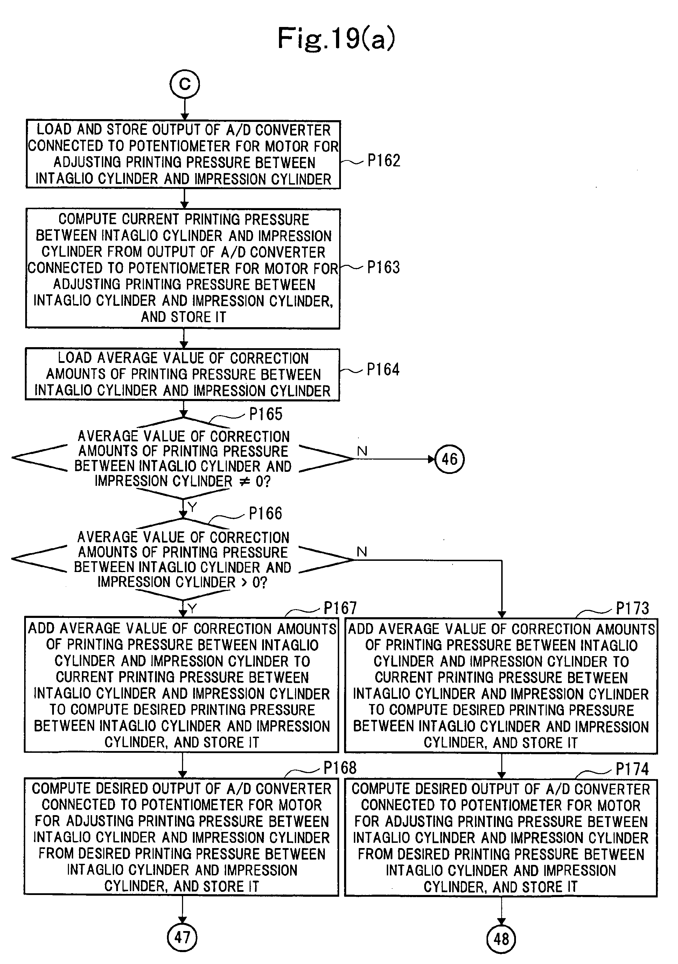

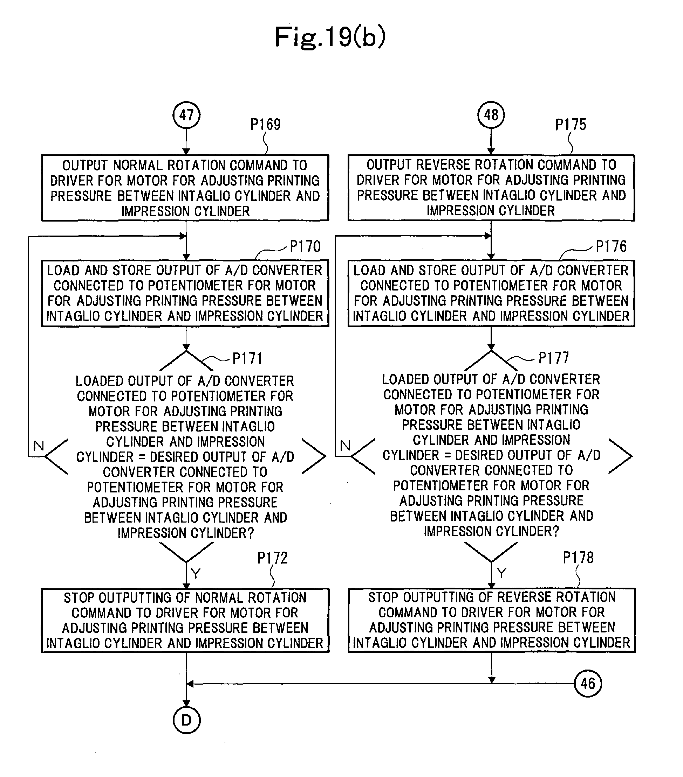

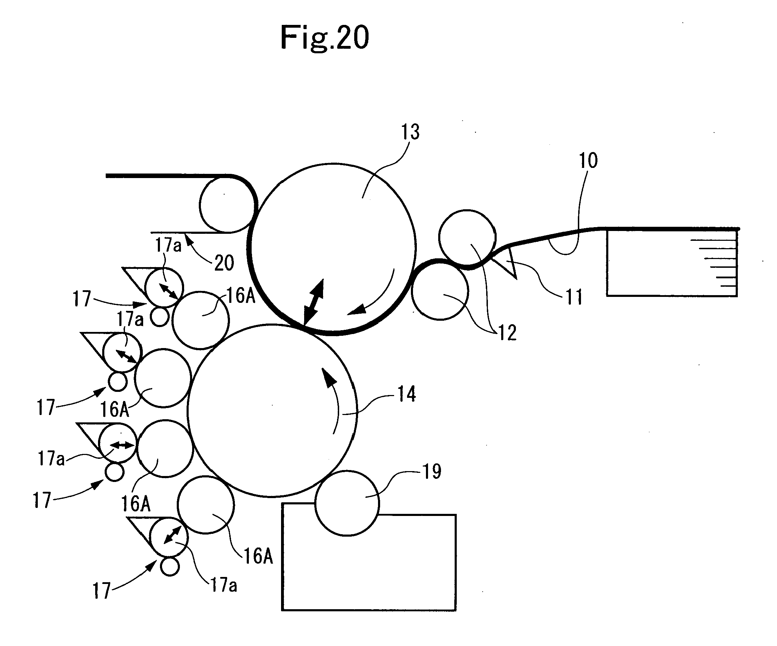

Figs. 15(a) to 15(c) are control block diagrams of a control device showing Embodiment 2 of the present invention. Figs. 16(a) to 16(c) are motion flow charts of the control device. Figs. 17(a) to 17(f) are motion flow charts of the control device. Figs. 18(a) to 18(d) are motion flow charts of the control device. Figs. 19(a) and 19(b) are motion flow charts of the control device. Fig. 20 is a schematic configurational drawing of a direct intaglio printing press.

In a direct (type) intaglio printing press, as shown in Fig. 20, a sheet fed from a feeding device, for example, onto a feedboard 10 is passed from a swing arm shaft pregripper 11 on to a gripper of an impression cylinder 13 via a transfer cylinder 12, and gripped by the gripper for transport. Simultaneously, ink of each inking device 17 is transferred and supplied onto the plate surface of an intaglio cylinder 14 via a pattern cylinder 16A. A surplus of the supplied ink is removed by a wiping roller 19.

Thus, the sheet gripped and transported by the gripper of the impression cylinder 13 is printed when it passes between the impression cylinder 13 and the intaglio cylinder 14. Then, the sheet is passed on to and gripped by the delivery gripper of a delivery chain 20, transported by the travel of the delivery chain 20, and dropped and piled on a delivery pile board (outside the drawing).

In the present embodiment, a nip pressure (contact pressure) between an ink fountain roller (first rotating part) 17a of each inking device 17 and the pattern cylinder (second rotating part) 16A, a nip pressure (contact pressure) between the pattern cylinder (first rotating part) 16A and the intaglio cylinder (second rotating part) 14, and a printing pressure between the intaglio cylinder (first rotating part) 14 and the impression cylinder (second rotating part) 13 can be adjusted automatically.

As a nip pressure adjusting mechanism for the nip pressure between the ink fountain roller 17a and the pattern cylinder 16A, it is preferred to adopt, for example, the aforementioned mechanism of a configuration as shown in Fig. 8. As a nip pressure adjusting mechanism for the nip pressure between the pattern cylinder 16A and the intaglio cylinder 14, it is preferred to adopt, for example, the aforementioned mechanism of a configuration as shown in Fig. 10. As a nippressure adjusting mechanism for the nippressure between the intaglio cylinder 14 and the impression cylinder 13, it is preferred to adopt, for example, the aforementioned mechanism of a configuration as shown in Fig. 11.

In the present embodiment, the ink film thickness or the emboss amount in the printing image of the printed sheet is measured using the aforementioned printing product inspection device (see Figs. 12(a), 12(b)), and the nip pressure or printing pressure in each of the above-mentioned portions can be automatically adjusted by the control device 60 in accordance with the measured ink film thickness or emboss amount.

The control device 60 comprises CPU 61, RAM 62, ROM 63, and input/output devices 64 to 68 and 71 connected together by a BUS line 72, as shown in Figs. 15(a) to 15(c). To the BUS line 72, the following memories are connected: A memory M1 for storing the number of the selected ink supply unit M, a memory M2 for storing the value of a counter for measuring the current position in the circumferential directionof the distance measuring instrument, amemoryM3 for storing the current position in the circumferential direction of the distance measuring instrument, a memory M4 for storing the position in the circumferential direction of a sheet thickness measuring position to be measured by the distance measuring instrument, a memory M5 for storing the value of a counter for measuring the current position in the lateral direction of the distance measuring instrument, a memory M6 for storing the current position in the lateral direction of the distance measuring instrument, a memory M7 for storing the position in the lateral direction of the sheet thickness measuring position to be measured by the distance measuring instrument, a memory M8 for storing the output FD of the face side distance measuring instrument, a memory M9 for storing the output RD of the reverse side distance measuring instrument, and a memory M10 for storing the distance FDP from the face side distance measuring instrument to the sheet.

To the BUS line 72, the following memories are further connected: A memory M11 for storing the distance RDP from the reverse side distance measuring instrument to the sheet, a memory M12 for storing the distance FRD between the face side distance measuring instrument and the reverse side distance measuring instrument, a memoryM13 for storing the sheet thickness PT, a memory M14 for storing the position in the circumferential direction of the color patch lines to be measured by the distance measuring instrument, a memory M15 for storing the count value M, a memory M16 for storing the position in the lateral direction of the color patch lines to be measured by the distance measuring instrument, a memory M17 for storing the total number Mmax of the ink supply units, a memory M18 for storing the distance FDCm from the face side distance measuring instrument to the color patch portion, a memory M19 for storing the distance RDCm from the reverse side distance measuring instrument to the color patch portion, and a memory M20 for storing the emboss amount EQm.

To the BUS line 72, the following memories are further connected: A memory M21 for storing the reference emboss amount EQF, a memory M22 for storing the emboss error amount EQDm, a memory M23 for storing a table of conversion from the emboss error amount to the correction amount of the printing pressure between the intaglio cylinder and the impression cylinder, a memory M24 for storing the correction amount of the printing pressure between the intaglio cylinder and the impression cylinder, a memory M25 for storing the color patch portion thickness CPTm, a memory M26 for storing the ink film thickness IFTm, a memory M27 for storing the reference ink film thickness IFTF, a memory M28 for storing the ink film thickness error amount IFTDm, a memory M39 for storing the total value of the correction amounts of the printing pressure between the intaglio cylinder and the impression cylinder, and a memory M40 for storing the average value of the correction amounts of the printing pressure between the intaglio cylinder and the impression cylinder.

To the BUS line 72, the following memories are further connected: A memory M61 for storing a table of conversion from the ink film thickness error amount to the correction amount of the nip pressure between the ink fountain roller and the pattern cylinder, a memory M62 for storing the correction amount of the nip pressure between the ink fountain roller and the pattern cylinder, a memory M63 for storing a table of conversion from the ink film thickness error amount to the correction amount of the nip pressure between the pattern cylinder and the intaglio cylinder, a memory M64 for storing the correction amount of the nip pressure between the pattern cylinder and the intaglio cylinder, a memory M65 for storing the output of an A/D converter connected to a potentiometer for a motor for adjusting the nip pressure between the ink fountain roller and the pattern cylinder, a memory M66 for storing the current nip pressure between the ink fountain roller and the pattern cylinder, a memory M67 for storing the desired nip pressure between the ink fountain roller and the pattern cylinder, and a memory M68 for storing the desired output of the A/D converter connected to the potentiometer for the motor for adjusting the nip pressure between the ink fountain roller and the pattern cylinder.

To the BUS line 72, the following memories are further connected: A memory M57 for storing the output of an A/D converter connected to a potentiometer for a motor for adjusting the printing pressure between the intaglio cylinder and the impression cylinder, a memory M58 for storing the current printing pressure between the intagliocylinder and the impression cylinder, a memory M59 for storing the desired printing pressure between the intaglio cylinder and the impression cylinder, a memory M60 for storing the desired output of the A/D converter connected to the potentiometer for the motor for adjusting the printing pressure between the intaglio cylinder and the impression cylinder, a memory M69 for storing the output of an A/D converter connected to a potentiometer for a motor for adjusting the nip pressure between the pattern cylinder and the intaglio cylinder, a memory M70 for storing the current nip pressure between the pattern cylinder and the intaglio cylinder, a memory M71 for storing the desired nip pressure between the pattern cylinder and the intaglio cylinder, and a memory M72 for storing the desired output of the A/D converter connected to the potentiometer for the motor for adjusting the nip pressure between the pattern cylinder and the intaglio cylinder.

To the input/output device 64, the following are connected: An input device 73 such as a keyboard, a display device 74 such as CRT or a display, and an output device 75 such as a printer or a floppy disk (registered trademark) drive. The aforementioned face side distance measuring instrument 50 and rear side distance measuring instrument 51 are connected to the input/output device 65.

To the input/output device 66, the aforementioned motor 53 for movement in the circumferential direction is connected via a D/A converter 76 and a driver 77 for the motor for movement in the circumferential direction, and a rotary encoder 79 for the motor for movement in the circumferential direction, which is drivingly coupled to the motor 53 , is connected via a counter 78 for measuring the current position in the circumferential direction. A detector 80 for a home position in the circumferential direction is also connected to the input/output device 66.

To the input/output device 66, the aforementioned motor 55 for movement in the lateral direction is connected via a D/A converter 81 and a driver 82 for the motor for movement in the lateral direction, and a rotary encoder 84 for the motor for movement in the lateral direction, which is drivingly coupled to the motor 55, is connected via a counter 83 for measuring the current position in the lateral direction. A detector 85 for a home position in the lateral direction is also connected to the input/output device 66.

To the input/output device 67, a motor 104 (corresponding to the motor 24 of Embodiment 1) for adjusting the nip pressure between the ink fountain roller and the pattern cylinder is connected via a driver 103 for the motor for adjusting the nip pressure between the ink fountain roller and the pattern cylinder, and a potentiometer 106 for the motor for adjusting the nip pressure between the ink fountain roller and the pattern cylinder, which is drivingly coupled to the motor 104, is connected via an A/D converter 105.

To the input/output device 68, a motor 108 (corresponding to the motor 38 of Embodiment 1) for adjusting the nip pressure between the pattern cylinder and the intaglio cylinder is connected via a driver 107 for the motor for adjusting the nip pressure between the pattern cylinder and the intaglio cylinder, and a potentiometer 110 for the motor for adjusting the nip pressure between the pattern cylinder and the intaglio cylinder, which is drivingly coupled to the motor 108, is connected via an A/D converter 109.

The above-mentioned input/output devices 67 and 68 serve for the ink supply unit for the first color, and the same configuration is adopted for the ink supply units for the second to fourth colors. Thus, duplicate explanations will be omitted.

To the input/output device 71, the aforementioned motor 45 for adjusting the printing pressure between the intaglio cylinder and the impression cylinder is connected via a driver 98 for the motor for adjusting the printing pressure between the intaglio cylinder and the impression cylinder, and a potentiometer 100 for the motor for adjusting the printing pressure between the intaglio cylinder and the impression cylinder, which is drivingly coupled to the motor 45, is connected via an A/D converter 99.

The aforementioned control device 60 drivingly controls the above-mentioned motors 45, 104 and 108 in accordance with the ink film thickness or emboss amount measured using the aforementioned face side distance measuring instrument 50 and reverse side distance measuring instrument 51, thereby automatically adjusting the nip pressure orprintingpressure ineachof the above-mentioned portions.

The control actions or motions of the control device 60 configured as above will be described in detail based on the motion flow charts of Figs. 16(a) to 16(c), Figs. 17(a) to 17(f), Figs. 18(a) to 18(d), and Figs. 19(a) and 19(b).

In Step P1, it is determined whether an ink supply unit selection switch is ON. If the answer is Y (yes), the number M of the selected ink supply unit is stored into the memory M1 in Step P2. Then, in Step P3, it is determined whether a selection switch for adjusting the nip pressure between the ink fountain roller and the pattern cylinder is ON. If the answer is N (no) in Step P1, the program directly shifts to Step P3.

Then, if the answer is Y in Step P3, it is determined in Step P4 whether a pressure adjustment completion switch is ON. Then, if the answer is N in Step P4, it is determined in Step P5 whether an up-button is ON. If the answer is N in Step P3 and the answer is Y in Step P4, on the other hand, the program shifts to Step P15 to be described later.

If the answer is Y in Step P5, the number M of the selected ink supply unit is loaded from the memory M1 in Step P6. Then, in Step P7, a normal rotation command is outputted to the driver 103 for the motor for adjusting the nip pressure between the ink fountain roller and the pattern cylinder in the ink supply unit M. If the answer is N in Step P5, the program shifts to Step P10 to be described later.

Then, if the up-button is OFF in Step P8, outputting of the normal rotation command to the driver 103 for the motor for adjusting the nip pressure between the ink fountain roller and the pattern cylinder in the ink supply unit M is stopped in Step P9.

Then, in Step P10, it is determined whether a down-button is ON. If the answer is Y, the number M of the selected ink supply unit is loaded from the memory M1 in Step P11. Then, in Step P12, a reverse rotation command is outputted to the driver 103 for the motor for adjusting the nip pressure between the ink fountain roller and the pattern cylinder in the ink supply unit M.

Then, if the down-button is OFF in Step P13, outputting of the reverse rotation command to the driver 103 for the motor for adjusting the nip pressure between the ink fountain roller and the pattern cylinder in the ink supply unit M is stopped in Step P14. Then, the program returns to Step P4. If the answer is N in Step P10, the program immediately returns to Step P4.

Then, in Step P15, it is determined whether a selection switch for adjusting the nip pressure between the pattern cylinder and the intaglio cylinder is ON. If the answer is Y in Step P15, it is determined in Step P16 whether a pressure adjustment completion switch is ON. Then, if the answer is N in Step P16, it is determined in Step P17 whether an up-button is ON. If the answer is N in Step P15 and the answer is Y in Step P16, on the other hand, the program shifts to Step P27 to be described later.

Then, if the answer is Y in Step P17, the number M of the selected ink supply unit is loaded from the memory M1 in Step P18. Then, in Step P19, a normal rotation command is outputted to the driver 107 for the motor for adjusting the nip pressure between the pattern cylinder and the intaglio cylinder in the ink supply unit M. If the answer is N in Step P17, the program shifts to Step P22 to be described later.

Then, if the up-button is OFF in Step P20, outputting of the normal rotation command to the driver 107 for the motor for adjusting the nippressure between the pattern cylinder and the intagliocylinder in the ink supply unit M is stopped in Step P21.

Then, in Step P22, it is determined whether a down-button is ON. If the answer is Y, the number M of the selected ink supply unit is loaded from the memory M1 in Step P23. Then, in Step P24, a reverse rotation command is outputted to the driver 107 for the motor for adjusting the nip pressure between the pattern cylinder and the intaglio cylinder in the ink supply unit M.

Then, if the down-button is OFF in Step P25, outputting of the reverse rotation command to the driver 107 for the motor for adjusting the nip pressure between the pattern cylinder and the intaglio cylinder in the ink supply unit M is stopped in Step P26. Then, the program returns to Step P16. If the answer is N in Step P22, the program immediately returns to Step P16.

Then, in Step P27, it is determined whether a selection switch for adjusting the printing pressure between the intaglio cylinder and the impression cylinder is ON. If the answer is Y, it is determined in Step P28 whether a pressure adjustment completion switch is ON. Then, if the answer is N in Step P28, it is determined in Step P29 whether an up-button is ON. If the answer is N in Step P27 and the answer is Y in Step P28, on the other hand, the program shifts to Step P38 to be described later.

Then, if the answer is Y in Step P29, Step P30 is executed to output a normal rotation command to the driver 98 for the motor for adjusting the printing pressure between the intaglio cylinder and the impression cylinder. If the answer is N in Step P29, the program shifts to Step P33 to be described later.

Then, if the up-button is OFF in Step P31, outputting of the normal rotation command to the driver 98 for the motor for adjusting the print ing pres sure between the intagliocylinder and the impression cylinder in the ink supply unit M is stopped in Step P32.

Then, in Step P33, it is determined whether a down-button is ON. If the answer is Y, in Step P34, a reverse rotation command is outputted to the driver 98 for the motor for adjusting the printing pressure between the intaglio cylinder and the impression cylinder.

Then, if the down-button is OFF in Step P35, outputting of the reverse rotation command to the driver 98 for the motor for adjusting the printing pressure between the intaglio cylinder and the impression cylinder is stopped in Step P36. Then, the program returns to Step P28. If the answer is N in Step P33, the program immediately returns to Step P28.

In accordance with the above-described steps, manual adjustment of each nip pressure or printing pressure by the operator is completed.

Then, in Step P37, it is determined whether a sheet thickness measuring switch is ON. If the answer is Y, in Step P38, a normal rotation command is outputted to the driver 77 for the motor for movement in the circumferential direction. Then, in Step P39, the value of the counter 78 for measuring the current position in the circumferential direction of the distance measuring instrument is loaded, and stored into the memory M2.

Then, in Step P40, the current position in the circumferential direction of the distance measuring instrument is computed from the value of the counter for measuring the current position in the circumferential direction of the distance measuring instrument, and stored into the memory M3. Then, in Step P41, the position in the circumferential direction of the sheet thickness measuring position to be measured by the distance measuring instrument is loaded from the memory M4.

Then, inStepP42, it is determined whether the current position in the circumferential direction of the distance measuring instrument is equal to the position in the circumferential direction of the sheet thickness measuring position to be measured by the distance measuring instrument. If the answer is Y, outputting of the normal rotation command to the driver 77 for the motor for movement in the circumferential direction is outputted in Step P43. If the answer is N, the program returns to Step P39.

Then, in Step P44, a normal rotation command is outputted to the driver 82 for the motor for movement in the lateral direction. Then, in Step P45, the value of the counter 83 for measuring the current position in the lateral direction of the distance measuring instrument is loaded, and stored into the memory M5. Then, in Step P46, the current position in the lateral direction of the distance measuring instrument is computed from the loaded value of the counter for measuring the current position in the lateral direction of the distance measuring instrument, and stored into the memory M6.

Then, in Step P47, the position in the lateral direction of the sheet thickness measuring position to be measured by the distance measuring instrument is loaded from the memory M7. Then, in Step P48, it is determined whether the current position in the lateral direction of the distance measuring instrument is equal to the position in the lateral direction of the sheet thickness measuring position to be measured by the distance measuring instrument. If the answer is Y, in Step P49, a measurement command signal is outputted to the distance measuring instrument. If the answer is N, the program returns to Step P45.

Then, in Step P50, the output FD of the face side distance measuring instrument 50 is loaded, and stored into the memory M8. Then, in Step P51, the output RD of the reverse side distance measuring instrument 51 is loaded, and stored into the memory M9. Then, in Step P52, outputting of the normal rotation command to the driver 82 for the motor for movement in the lateral direction is stopped.

Then, in Step P53, a reverse rotation command is outputted to the driver 82 for the motor for movement in the lateral direction. Then, if the output of the detector 85 for the home position in the lateral direction of the distance measuring instrument is ON in Step P54, outputting of the reverse rotation command to the driver 82 for the motor for movement in the lateral direction is stopped in Step P55.

Then, in Step P56, a reverse rotation command is outputted to the driver 77 for the motor for movement in the circumferential direction. Then, if the output of the detector 80 for the home position in the circumferential direction of the distance measuring instrument is ON in Step P57, outputting of the reverse rotation command to the driver 77 for the motor for movement in the circumferential direction is stopped in Step P58.

Then, in Step P59, the distance FDP from the face side distance measuring instrument to the sheet is computed from the output FD of the face side distance measuring instrument 50, and stored into the memory M10. Then, in Step P60, the distance RDP from the reverse side distance measuring instrument to the sheet is computed from the output RD of the reverse side distance measuring instrument 51, and stored into the memory M11.

Then, in Step P61, the distance FRD between the face side distance measuring instrument and the reverse side distance measuring instrument is loaded from the memory M12. Then, in Step P62, the distance FDP from the face side distance measuring instrument to the sheet and the distance RDP from the reverse side distance measuring instrument to the sheet are subtracted from the distance FRD between the face side distance measuring instrument and the reverse side distance measuring instrument to compute the sheet thickness PT, which is stored into the memory M13. Then, the program returns to Step P1.

In accordance with the above steps, the thickness of the sheet W, which is the object tobemeasured, ismeasured. The sheet thickness measuring position is set at a part of the sheet W, where nothing is printed, in other words, a part where neither the emboss nor the ink film is present.

If the answer is N in the aforementioned Step P37, on the otherhand, it is determined in Step P63 whether a colorpatchmeasuring switch is ON. If the answer is Y, in Step P64, a normal rotation command is outputted to the driver 77 for the motor for movement in the circumferential direction. If the answer is N, the program returns to Step P1.

Then, in Step P65, the value of the counter 78 for measuring the current position in the circumferential direction of the distance measuring instrument is loaded, and stored into the memory M2. Then, in Step P66, the current position in the circumferential direction of the distance measuring instrument is computed from the loaded value of the counter for measuring the current position in the circumferential direction of the distance measuring instrument, and stored into the memory M3. Then, in Step P67, the position in the circumferential direction of the color patch lines to be measured by the distance measuring instrument is loaded from the memory M14.

Then, inStepP68, it is determined whether the current position in the circumferential direction of the distance measuring instrument is equal to the position in the circumferential direction of the color patch lines to be measured by the distance measuring instrument. If the answer is Y, outputting of the normal rotation command to the driver 77 for the motor for movement in the circumferential direction is stopped in Step P69. If the answer is N, the program returns to Step P65.

Then, in Step P70, 1 is written into the count value M of the memory M15. Then, in Step P71, a normal rotation command is outputted to the driver 82 for the motor for movement in the lateral direction. Then, inStepP72, the value of the counter 83 for measuring the current position in the lateral direct ion of the distance measuring instrument is loaded, and stored into the memory M5.

Then, in Step P73, the current position in the lateral direction of the distance measuring instrument is computed from the loaded value of the counter for measuring the current position in the lateral direction of the distance measuring instrument, and stored into the memory M6. Then, in Step P74, the position in the lateral direction of the color patch lines in the ink supply unit M to be measured by the distance measuring instrument is loaded from the memory M16.

Then, in Step P75, it is determined whether the current position in the lateral direction of the distance measuring instrument is equal to the position in the lateral direction of the color patch lines in the ink supply unit M to be measured by the distance measuring instrument. If the answer is Y, in Step P76, a measurement command signal is outputted to the distance measuring instrument. If the answer is N, the program returns to Step P72.

Then, in Step P77, the output FDm of the face side distance measuring instrument 50 is loaded, and stored into the address position for the ink supply unit M in the memory M8. Then, in Step P78, the output RDm of the reverse side distance measuring instrument 51 is loaded, and stored into the address position for the ink supply unit M in the memory M9.

Then, in Step P79, 1 is added to the count value M of the memory M15 for overwriting. Then, in Step P80, the total number Mmax of the ink supply units is loaded from the memory M17. Then, in Step P81, it is determined whether the count value M is larger than the total number Mmax of the ink supply units. If the answer is Y, outputting of the normal rotation command to the driver 82 for the motor for movement in the lateral direction is stopped in Step P82. If the answer is N, the program returns to Step P72.

Then, in Step P83, a reverse rotation command is outputted to the driver 82 for the motor for movement in the lateral direction. Then, if the output of the detector 85 for the home position in the lateral direction of the distance measuring instrument is ON in Step P84, outputting of the reverse rotation command to the driver 82 for the motor for movement in the lateral direction is stopped in Step P85.

Then, in Step P86, a reverse rotation command is outputted to the driver 77 for the motor for movement in the circumferential direction. Then, if the output of the detector 80 for the home position in the circumferential direction of the distance measuring instrument is ON in Step P87, outputting of the reverse rotation command to the driver 77 for the motor for movement in the circumferential direction is stopped in Step P88.

In accordance with the above steps, the distances from the face side distance measuring instrument 50 and the reverse side distance measuring instrument 51 to the color patch lines L printed with inks supplied from the respective ink supply units are measured.

Then, in Step P89, 1 is written into the count value M of the memory M15. Then, the output FDm of the face side distance measuring instrument 50 stored in the address position for the ink supply unit M in the memory M8 is loaded in Step P90. Then, in Step P91, the distance FDCm from the face side distance measuring instrument to the color patch portion is computed from the output FDm of the face side distance measuring instrument 50 stored in the address position for the ink supply unit M in the memory M8, and the computed distance is stored into the memory M18.

Then, the output RDm of the reverse side distance measuring instrument 51 stored in the address position for the ink supply unit M in the memory M9 is loaded in Step P92. Then, in Step P93, the distance RDCm from the reverse side distance measuring instrument to the color patch portion is computed from the output RDm of the reverse side distance measuring instrument 51 stored in the address position for the ink supply unit M in the memory M9, and the computed distance is stored into the memory M19.

Then, the distance RDP from the reverse side distance measuring instrument to the sheet is loaded in Step P94. Then, in Step P95, the distance RDP from the reverse side distance measuring instrument to the sheet is subtracted from the distance RDCm from the reverse side distance measuring instrument to the color patch portion to compute the emboss amount EQm, which is stored into the address position for the ink supply unit M in the memory M20.

Then, in Step P96, the reference emboss amount EQFm of the ink supply unit M is loaded from the address position for the ink supply unit M in the memory M21 for storing the reference emboss amount EQF. Then, in Step P97, the reference emboss amount EQFm of the ink supply unit M is subtracted from the emboss amount EQm of the ink supply unit M to compute the emboss error amount EQDm of the ink supply unit M, which is stored into the address position for the ink supply unit M in the memory M22.

Then, in Step P98, the table of conversion from the emboss error amount to the correction amount of the printing pressure between the intaglio cylinder and the impression cylinder is loaded from the memory M23. Then, in Step P99, the correction amount of the printing pressure between the intaglio cylinder and the impression cylinder is obtained from the emboss error amount EQDm with the use of the table of conversion from the emboss error amount to the correction amount of the printing pressure between the intaglio cylinder and the impression cylinder, and the obtained correction amount is stored into the address position for the ink supply unit M in the memory M24.

Then, in Step P100, the distance FRD between the face side distance measuring instrument and the reverse side distance measuring instrument is loaded from the memory M12. Then, in Step P101, the distance FDCm from the face side distance measuring instrument to the color patch portion and the distance RDCm from the reverse side distance measuring instrument to the color patch portion are subtracted from the distance FRD between the face side distance measuring instrument and the reverse side distance measuring instrument to compute the thickness CPTm of the color patch portion, which is stored into the memory M25.

Then, in Step P102, the sheet thickness PT is loaded from the memory M13. Then, in Step P103, the sheet thickness PT is subtracted from the thickness CPTm of the color patch portion to compute the ink film thickness IFTm, which is stored into the address position for the ink supply unit M in the memory M26.

Then, in Step P104, the reference ink film thickness IFTFm of the ink supply unit M is loaded from the address position for the ink supply unit M in the memory M27 for storing the reference ink film thickness IFTF. Then, in Step P105, the reference ink film thickness IFTFm of the ink supply unit M is subtracted from the ink film thickness IFTm of the ink supply unit M to compute the ink film thickness error amount IFTDm of the ink supply unit M, which is stored into the address position for the ink supply unit M in the memory M28.

Then, in Step P106, the table of conversion from the ink film thickness error amount to the correction amount of the nip pressure between the ink fountain roller and the pattern cylinder is loaded from the memory M61. Then, in Step P107, the correction amount of the nip pressure between the ink fountain roller and the pattern cylinder is obtained from the ink film thickness error amount IFTDm with the use of the table of conversion from the ink film thickness error amount to the correction amount of the nip pressure between the ink fountain roller and the pattern cylinder, and the obtained correction amount is stored into the address position for the ink supply unit M in the memory M62.

Then, in Step P108, the table of conversion from the ink film thickness error amount to the correction amount of the nip pressure between the pattern cylinder and the intaglio cylinder is loaded from the memory M63. Then, in Step P109, the correction amount of the nippressure between the pattern cylinder and the intaglio cylinder is obtained from the ink film thickness error amount IFTDm with the use of the table of conversion from the ink film thickness error amount to the correction amount of the nip pressure between the pattern cylinder and the intaglio cylinder, and the obtained correction amount is stored into the address position for the ink supply unit M in the memory M64.

Then, in Step P110, 1 is added to the count value M of the memory M15 for overwriting. Then, in Step P111, the total number Mmax of the ink supply units is loaded from the memory M17. Then, in Step P112, it is determined whether the count value M is larger than the total number Mmax of the ink supply units. If the answer is Y, in Step P113, 1 is written into the count value M of the memory M15. If the answer is N, the program returns to Step P90.

Then, in Step P114, zero is written into the memory M39 for storing the total value of the correction amounts of the printing pressure between the intaglio cylinder and the impression cylinder. Then, in Step P115, the total value of the correction amounts of the printingpressure between the intaglio cylinder and the impression cylinder is loaded from the memory M39. Then, in Step P116, the correction amount of the printing pressure between the intaglio cylinder and the impression cylinder in the ink supply unit M is loaded. Then, in Step P117, the correction amount of the printing pressure between the intaglio cylinder and the impression cylinder in the ink supply unit M is added to the total value of the correction amounts of the printing pressure between the intaglio cylinder and the impression cylinder, and the memory M39 for storing the total value of the correction amounts of the printing pressure between the intaglio cylinder and the impression cylinder is overwritten with the value obtained by addition.

Then, in Step P118, 1 is added to the count value M of the memory M15 for overwriting. Then, in Step P119, the total number Mmax of the ink supply units is loaded from the memory M17. Then, in Step P120, it is determined whether the count value M is larger than the total number Mmax of the ink supply units. If the answer is Y, in Step P121, the total value of the correction amounts of the printingpressure between the intaglio cylinder and the impression cylinder is loaded from the memory M39. Then, in Step P122, the total number Mmax of the ink supply units is loaded from the memory M17. Then, in Step P123, the total value of the correction amounts of the printing pressure between the intaglio cylinder and the impression cylinder is divided by the total number Mmax of the ink supply units to compute the average value of the correction amounts of the printing pressure between the intaglio cylinder and the impression cylinder, followed by storing the average value into the memory M40.

In accordance with the above steps, the correction amount of the nip pressure between the ink fountain roller and the pattern cylinder in each ink supply unit, the correction amount of the nip pressure between the pattern cylinder and the intaglio cylinder, and the average value of the correction amounts of the printing pressure between the intaglio cylinder and the impression cylinder are obtained from the ink film thickness and the emboss amount of the color patch lines L which have been measured.

Then, in Step P124, 1 is written into the count value M of the memory M15. Then, in Step P125, the output of the A/D converter 105 connected to the potentiometer 106 for the motor for adjusting the nip pressure between the ink fountain roller and the pattern cylinder in the ink supply unit M is loaded, and stored into the memory M65. Then, in Step P126, the current nip pressure between the ink fountain roller and the pattern cylinder in the ink supply unit M is computed from the output of the A/D converter 105 connected to the potentiometer 106 for the motor for adjusting the nip pressure between the ink fountain roller and the pattern cylinder in the ink supply unit M, and the computed value is stored into the memory M66.

Then, in Step P127, the correction amount of the nip pressure between the ink fountain roller and the pattern cylinder is loaded from the address position for the ink supply unit M in the memory M62. Then, in Step P128, it is determined whether the correction amount of the nip pressure between the ink fountain roller and the pattern cylinder in the ink supply unit M is unequal to zero. If the answer is Y, in Step P129, it is determined whether the correction amount of the nip pressure between the ink fountain roller and the pattern cylinder in the ink supply unit M is larger than zero. If the answer is N in Step P128, the program shifts to Step P142 to be described later.

If the answer is Y in the above Step P129, Step P130 is executed to add the correction amount of the nip pressure between the ink fountain roller and the pattern cylinder in the ink supply unit M to the current nip pressure between the ink fountain roller and the pattern cylinder in the ink supply unit M to compute the desired nip pressure between the ink fountain roller and the pattern cylinder in the ink supply unit M, and store the desired nip pressure into the address position for the ink supply unit M in the memory M67. Then, in Step P131, the desired output of the A/D converter 105 connected to the potentiometer 106 for the motor for adjusting the nip pressure between the ink fountain roller and the pattern cylinder in the ink supply unit M is computed from the desired nip pressure between the ink fountain roller and the pattern cylinder in the ink supply unit M, and stored into the address position for the ink supply unit M in the memory M68.

Then, in Step P132, a normal rotation command is outputted to the driver 103 for the motor for adjusting the nip pressure between the ink fountain roller and the pattern cylinder in the ink supply unit M. Then, in Step P133, the output of the A/D converter 105 connected to the potentiometer 106 for the motor for adjusting the nip pressure between the ink fountain roller and the pattern cylinder in the ink supply unit M is loaded, and stored into the memory M65.

Then, in Step P134, it is determined whether the loaded output of the A/D converter 105 connected to the potentiometer 106 for the motor for adjusting the nip pressure between the ink fountain roller and the pattern cylinder in the ink supply unit M is equal to the desired output of the A/D converter 105 connected to the potentiometer 106 for the motor for adjusting the nip pressure between the ink fountain roller and the pattern cylinder in the ink supply unit M. If the answer is Y, the outputting of the normal rotation command to the driver 103 for the motor for adjusting the nip pressure between the ink fountain roller and the pattern cylinder in the ink supply unit M is stopped in Step P135. Then, the program shifts to Step P142 to be described later. If the answer is N, the program returns to Step P133.

If the answer is N in the aforementioned Step P129, on the other hand, Step P136 is executed to add the correction amount of the nip pressure between the ink fountain roller and the pattern cylinder in the ink supply unit M to the current nip pressure between the ink fountain roller and the pattern cylinder in the ink supply unit M to compute the desired nip pressure between the ink fountain roller and the pattern cylinder in the ink supply unit M, and store the desired nip pressure into the address position for the ink supply unit M in the memory M67. Then, in Step P137, the desired output of the A/D converter 105 connected to the potentiometer 106 for the motor for adjusting the nip pressure between the ink fountain roller and the pattern cylinder in the ink supply unit M is computed from the desired nip pressure between the ink fountain roller and the pattern cylinder in the ink supply unit M, and stored into the address position for the ink supply unit M in the memory M68.

Then, in Step P138, a reverse rotation command is outputted to the driver 103 for the motor for adjusting the nip pressure between the ink fountain roller and the pattern cylinder in the ink supply unit M. Then, in Step P139, the output of the A/D converter 105 connected to the potentiometer 106 for the motor for adjusting the nip pressure between the ink fountain roller and the pattern cylinder in the ink supply unit M is loaded, and stored into the memory M65.

Then, in Step P140, it is determined whether the loaded output of the A/D converter 105 connected to the potentiometer 106 for the motor for adjusting the nip pressure between the ink fountain roller and the pattern cylinder in the ink supply unit M is equal to the desired output of the A/D converter 105 connected to the potentiometer 106 for the motor for adjusting the nip pressure between the ink fountain roller and the pattern cylinder in the ink supply unit M. If the answer is Y, the outputting of the reverse rotation command to the driver 103 for the motor for adjusting the nip pressure between the ink fountain roller and the pattern cylinder in the ink supply unit M is stopped in Step P141. Then, the program shifts to Step P142 to be described later. If the answer is N, the program returns to Step P139.

Then, inStepP142, the output of the A/D converter 109 connected to the potentiometer 110 for the motor for adjusting the nip pressure between the pattern cylinder and the intaglio cylinder in the ink supply unit M is loaded, and stored into the memory M69. Then, in Step P143, the current nip pressure between the pattern cylinder and the intaglio cylinder in the ink supply unit M is computed from the output of the A/D converter 109 connected to the potentiometer 110 for the motor for adjusting the nip pressure between the pattern cylinder and the intaglio cylinder in the ink supply unit M, and the computed value is stored into the memory M70.

Then, in Step P144, the correction amount of the nip pressure between the pattern cylinder and the intaglio cylinder is loaded from the address position for the ink supply unit M in the memory M64. Then, in Step P145, it is determined whether the correction amount of the nip pressure between the pattern cylinder and the intaglio cylinder in the ink supply unit M is unequal to zero. If the answer is Y, in Step P146, it is determined whether the correction amount of the nip pressure between the pattern cylinder and the intaglio cylinder in the ink supply unit M is larger than zero. If the answer is N in Step P145, the program shifts to Step P153 to be described later.

If the answer is Y in the above Step P146, Step P147 is executed to add the correction amount of the nip pressure between the pattern cylinder and the intaglio cylinder in the ink supply unit M to the current nip pressure between the pattern cylinder and the intaglio cylinder in the ink supply unit M to compute the desired nip pressure between the pattern cylinder and the intaglio cylinder in the ink supply unit M, and store the desired nip pressure into the address position for the ink supply unit M in the memory M71. Then, in Step P148, the desired output of the A/D converter 109 connected to the potentiometer 110 for the motor for adjusting the nippressure between the pattern cylinder and the intaglio cylinder in the ink supply unit M is computed from the desired nip pressure between the pattern cylinder and the intaglio cylinder in the ink supply unit M, and stored into the address position for the ink supply unit M in the memory M72.

Then, in Step P149, a normal rotation command is outputted to the driver 107 for the motor for adjusting the nip pressure between the pattern cylinder and the intaglio cylinder in the ink supply unit M. Then, in Step P150, the output of the A/D converter 109 connected to the potentiometer 110 for the motor for adjusting the nip pressure between the pattern cylinder and the intaglio cylinder in the ink supply unit M is loaded, and stored into the memory M69.

Then, in Step P151, it is determined whether the loaded output of the A/D converter 109 connected to the potentiometer 110 for the motor for adjusting the nip pressure between the pattern cylinder and the intaglio cylinder in the ink supply unit M is equal to the desired output of the A/D converter 109 connected to the potentiometer 110 for the motor for adjusting the nip pressure between the pattern cylinder and the intaglio cylinder in the ink supply unit M. If the answer is Y, the outputting of the normal rotation command to the driver 107 for the motor for adjusting the nip pressure between the pattern cylinder and the intaglio cylinder in the ink supply unit M is stopped in Step P152. Then, the program shifts to Step P153 to be described later. If the answer is N, the program returns to Step P150.

If the answer is N in the aforementioned Step P146, on the other hand, Step P156 is executed to add the correction amount of the nip pressure between the pattern cylinder and the intaglio cylinder in the ink supply unit M to the current nip pressure between the pattern cylinder and the intaglio cylinder in the ink supply unit M to compute the desired nip pressure between the pattern cylinder and the intaglio cylinder in the ink supply unit M, and store the desired nip pressure into the address position for the ink supply unit M in the memory M71. Then, in Step P157, the desired output of the A/D converter 109 connected to the potentiometer 110 for the motor for adjusting the nip pressure between the pattern cylinder and the intaglio cylinder in the ink supply unit M is computed from the desirednip pressure between the pattern cylinder and the intaglio cylinder in the ink supply unit M, and stored into the address position for the ink supply unit M in the memory M72.

Then, in Step P158, a reverse rotation command is outputted to the driver 107 for the motor for adjusting the nip pressure between the pattern cylinder and the intaglio cylinder in the ink supply unit M. Then, in Step P159, the output of the A/D converter 109 connected to the potentiometer 110 for the motor for adjusting the nip pressure between the pattern cylinder and the intaglio cylinder in the ink supply unit M is loaded, and stored into the memory M69.

Then, in Step P160, it is determined whether the loaded output of the A/D converter 109 connected to the potentiometer 110 for the motor for adjusting the nip pressure between the pattern cylinder and the intaglio cylinder in the ink supply unit M is equal to the desired output of the A/D converter 109 connected to the potentiometer 110 for the motor for adjusting the nip pressure between the pattern cylinder and the intaglio cylinder in the ink supply unit M. If the answer is Y, the outputting of the reverse rotation command to the driver 107 for the motor for adjusting the nip pressure between the pattern cylinder and the intaglio cylinder in the ink supply unit M is stopped in Step P161. Then, the program shifts to Step P153 to be described later. If the answer is N, the program returns to Step P159.

Then, in Step P153, 1 is added to the count value M of the memory M15 for overwriting. Then, in Step P154, the total number Mmax of the ink supply units is loaded from the memory M17. Then, in Step P155, it is determined whether the count value M is larger than the total number Mmax of the ink supply units. If the answer is Y, the program shifts to Step P162. If the answer is N, the program returns to Step P125.

Then, in Step P162, the output of the A/D converter 99 connected to the potentiometer 100 for the motor for adjusting the printing pressure between the intaglio cylinder and the impression cylinder is loaded, and stored into the memory M57. Then, in Step P163, the current printing pressure between the intaglio cylinder and the impression cylinder is computed from the output of the A/D converter 99 connected to the potentiometer 100 for the motor for adjusting the printing pressure between the intaglio cylinder and the impression cylinder, and the computed value is stored into the memory M58.

Then, in Step P164, the average value of the correction amounts of the printing pressure between the intaglio cylinder and the impression cylinder is loaded from the memory M40. Then, in Step P165, it is determined whether the average value of the correction amounts of the printing pressure between the intaglio cylinder and the impression cylinder is unequal to zero. If the answer is Y, in Step P166, it is determined whether the average value of the correction amounts of the printing pressure between the intaglio cylinder and the impression cylinder is larger than zero. If the answer is N in Step P165, the program returns to Step P1.

If the answer is Y in the above Step P166, Step P167 is executed to add the average value of the correction amounts of the printing pressure between the intaglio cylinder and the impression cylinder to the current printing pressure between the intaglio cylinder and the impression cylinder to compute the desired printing pressure between the intaglio cylinder and the impression cylinder, and store the desired printing pressure into the memory M59. Then, in Step P168, the desired output of the A/D converter 99 connected to the potentiometer 100 for the motor for adjusting the printing pressure between the intaglio cylinder and the impression cylinder is computed from the desired printing pressure between the intaglio cylinder and the impression cylinder, and stored into the memory M60.

Then, in Step P169, a normal rotation command is outputted to the driver 98 for the motor for adjusting the printing pressure between the intaglio cylinder and the impression cylinder. Then, in Step P170, the output of the A/D converter 99 connected to the potentiometer 100 for the motor for adjusting the printing pressure between the intaglio cylinder and the impression cylinder is loaded, and stored into the memory M57.

Then, in Step P171, it is determined whether the loaded output of the A/D converter 99 connected to the potentiometer 100 for the motor for adjusting the printing pressure between the intaglio cylinder and the impression cylinder is equal to the desired output of the A/D converter 99 connected to the potentiometer 100 for the motor for adjusting the printing pressure between the intaglio cylinder and the impression cylinder. If the answer is Y, the outputting of the normal rotation command to the driver 98 for the motor for adjusting the printing pressure between the intaglio cylinder and the impression cylinder is stopped in Step P172. Then, the program returns to Step P1. If the answer is N, the program returns to Step P170.

If the answer is N in the aforementioned Step P166, on the other hand, Step P173 is executed to add the average value of the correction amounts of the printing pressure between the intaglio cylinder and the impression cylinder to the current printing pressure between the intaglio cylinder and the impression cylinder to compute the desired printing pressure between the intaglio cylinder and the impression cylinder, and store the desired printing pressure into the memory M59. Then, in Step P174, the desired output of the A/D converter 99 connected to the potentiometer 100 for the motor for adjusting the printing pressure between the intaglio cylinder and the impression cylinder is computed from the desiredprintingpressure between the intaglio cylinder and the impression cylinder, and stored into the memory M60.

Then, in Step P175, a reverse rotation command is outputted to the driver 98 for the motor for adjusting the printing pressure between the intaglio cylinder and the impression cylinder. Then, in Step P176, the output of the A/D converter 99 connected to the potentiometer 100 for the motor for adjusting the printing pressure between the intaglio cylinder and the impression cylinder is loaded, and stored into the memory M57.

Then, in Step P177, it is determined whether the loaded output of the A/D converter 99 connected to the potentiometer 100 for the motor for adjusting the printing pressure between the intaglio cylinder and the impression cylinder is equal to the desired output of the A/D converter 99 connected to the potentiometer 100 for the motor for adjusting the printing pressure between the intaglio cylinder and the impression cylinder. If the answer is Y, the outputting of the reverse rotation command to the driver 98 for the motor for adjusting the printing pressure between the intaglio cylinder and the impression cylinder is stopped in Step P178. Then, the program returns to Step P1. If the answer is N, the program returns to Step P176.

In accordance with the above steps, the actual nip pressure of the respective portions and the actual printing pressure are corrected in response to the obtained correction amounts of the nip pressure between the ink fountain roller and the pattern cylinder in each ink supply unit, and the nip pressure between the pattern cylinder and the intaglio cylinder, and the obtained average value of the correction amounts of theprintingpressurebetweenthe intaglio cylinder and the impression cylinder.

According to the present embodiment described above, in the direct (type) intaglio printing press, the ink film thickness and emboss amount of the printed sheet W are measured using the face side distance measuring instrument 50 and the reverse side distance measuring instrument 51. In accordance with the measured emboss amount, the aforementioned motor 45 is drivingly controlled to adjust the printing pressure between the intaglio cylinder 14 and the impression cylinder 13 automatically. Similarly, in accordance with the measured ink film thickness, the aforementioned motors 104 and 108 are drivingly controlled, whereby the nip pressure between the ink fountain roller 17a and the pattern cylinder 16A in each ink supply unit, and the nip pressure between the pattern cylinder 16A and the intaglio cylinder 14 are automatically adjusted.

Thus, printing troubles due to misadjustment of the nip pressure orprintingpressure owing to the operator' s manual operation can be avoided. Consequently, burden on the operator can be lessened, and the emboss amount and the ink film thickness can be controlled with high accuracy to decrease defective printing products (wasted sheets).

### Embodiment 3

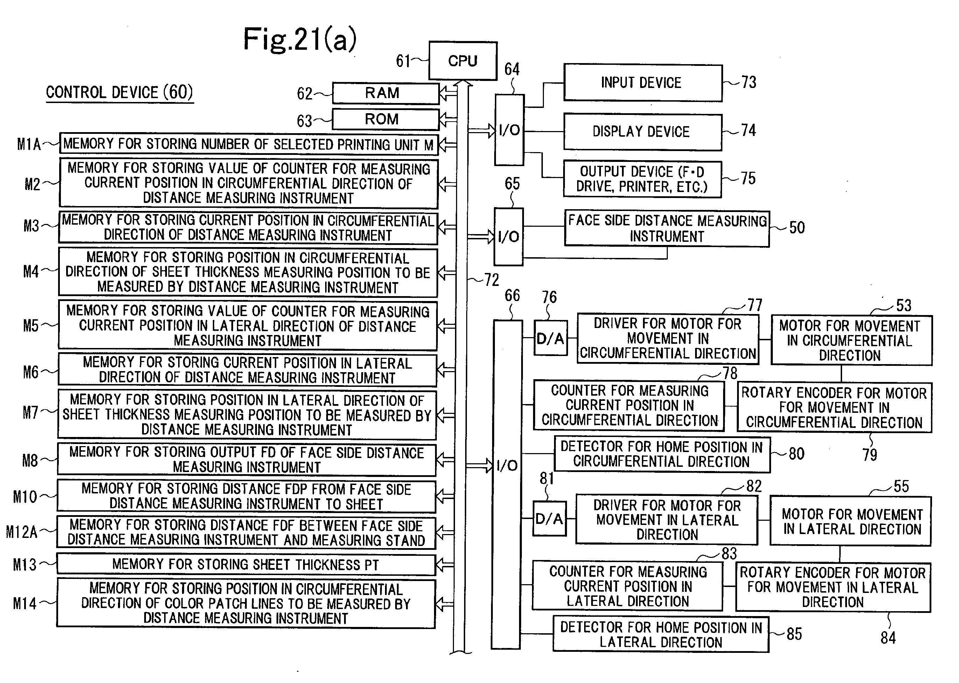

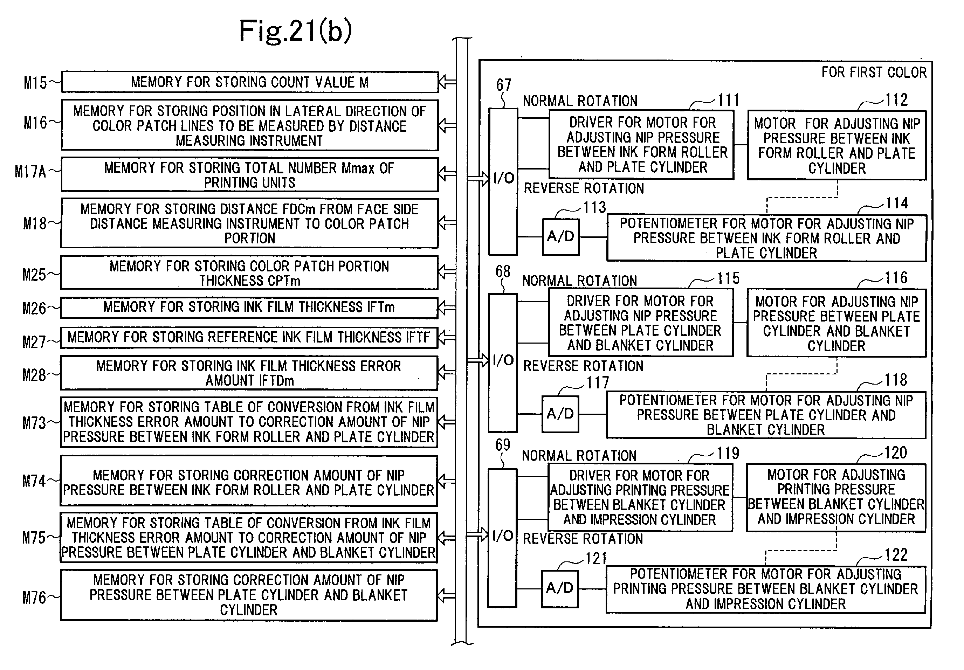

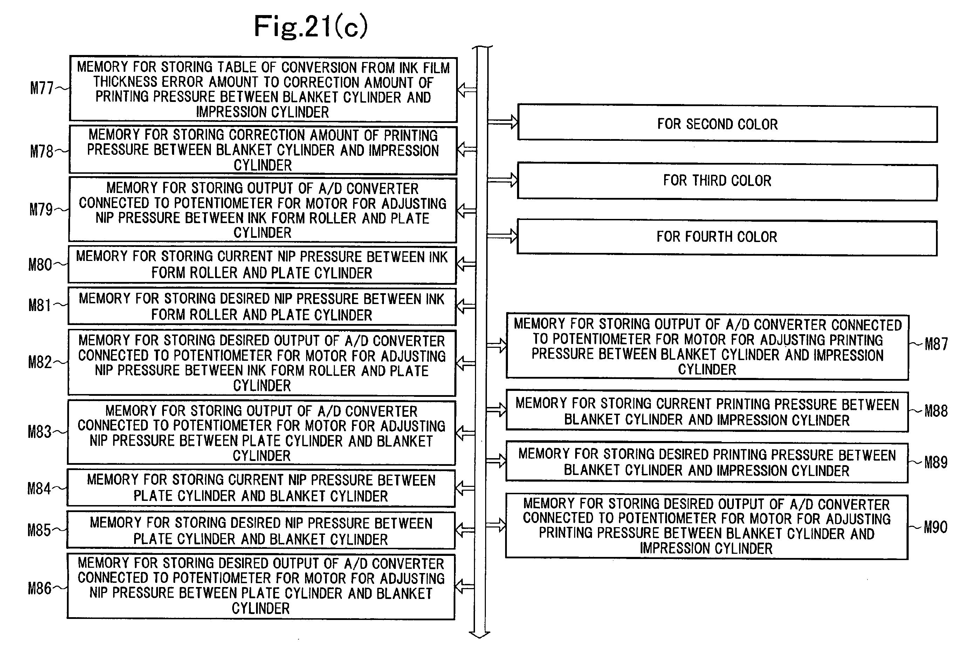

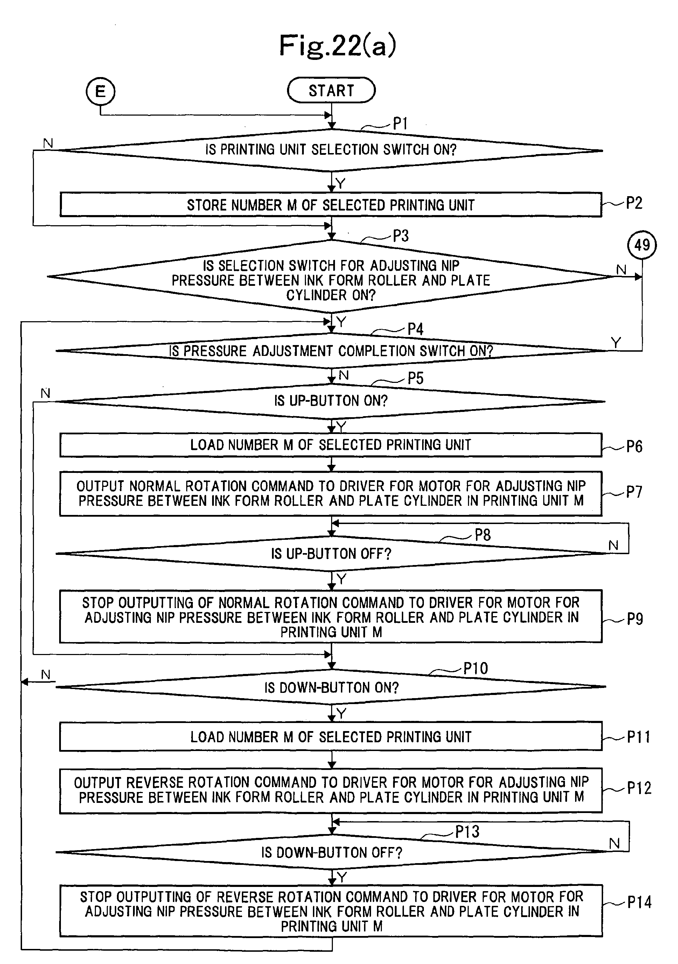

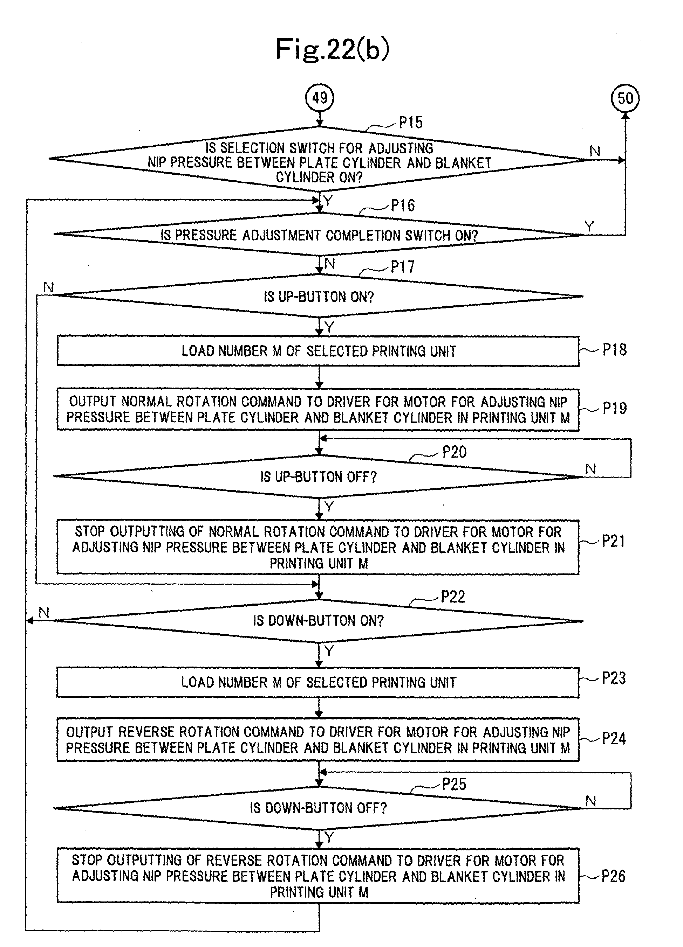

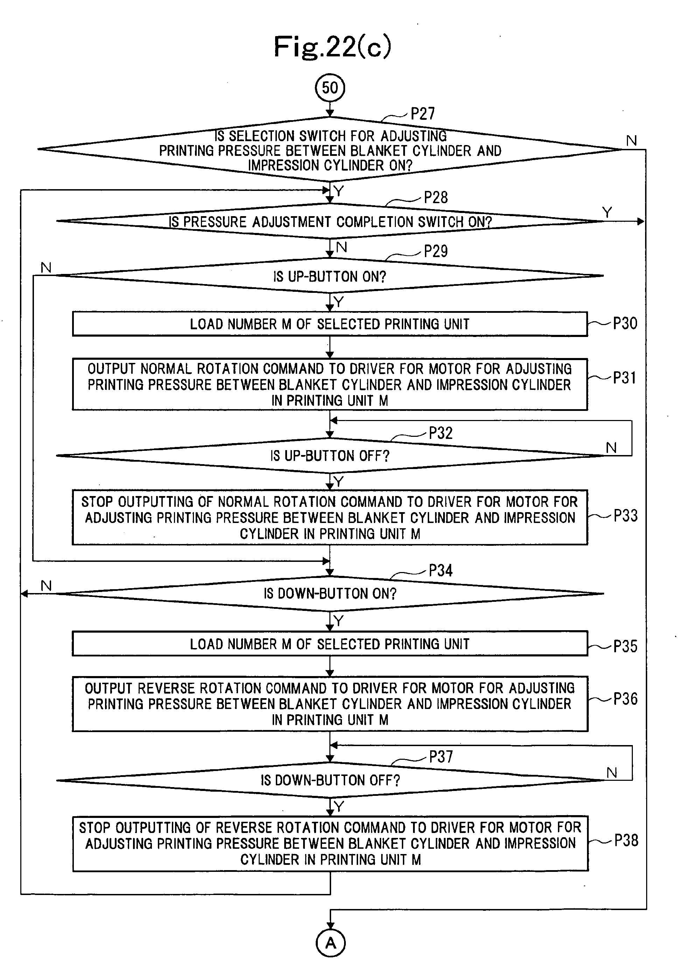

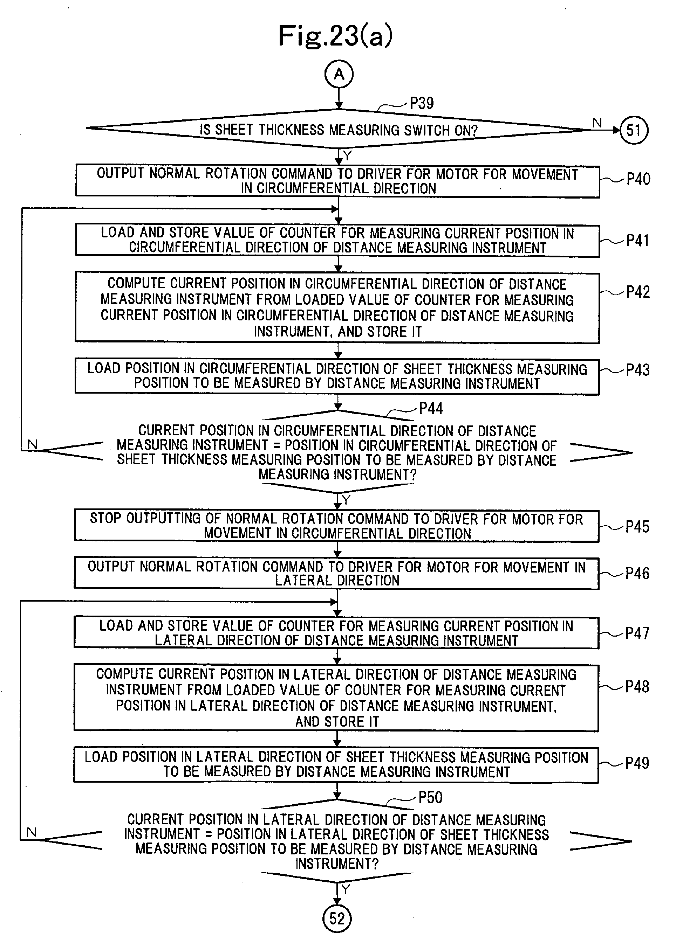

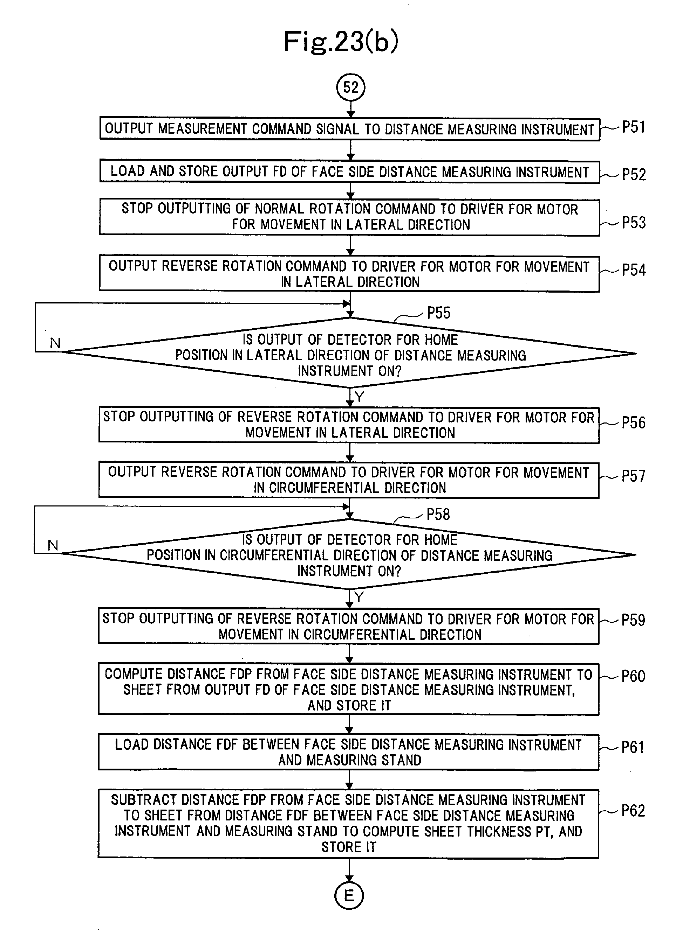

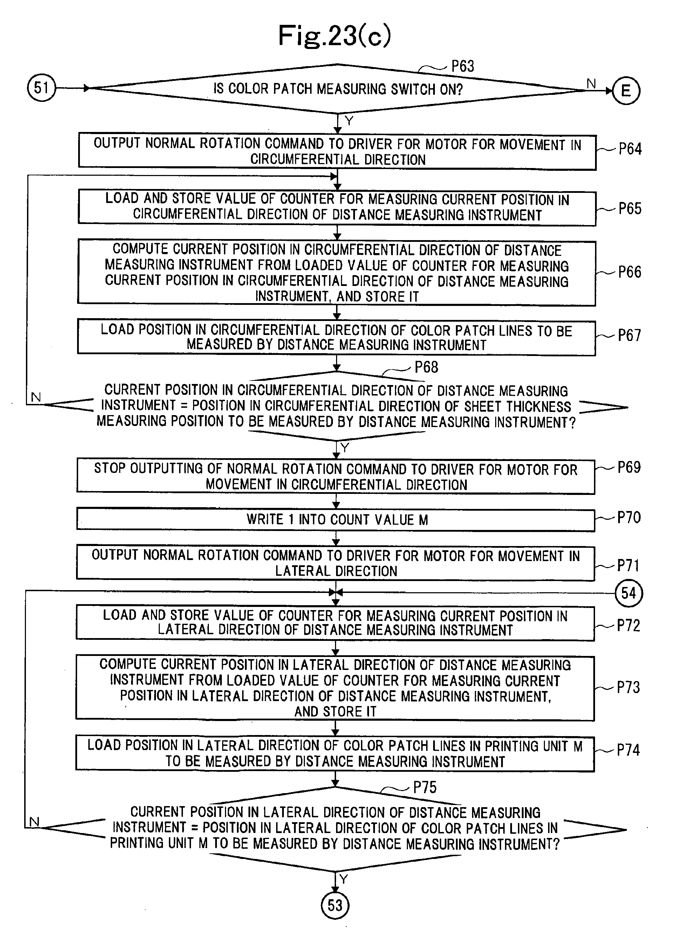

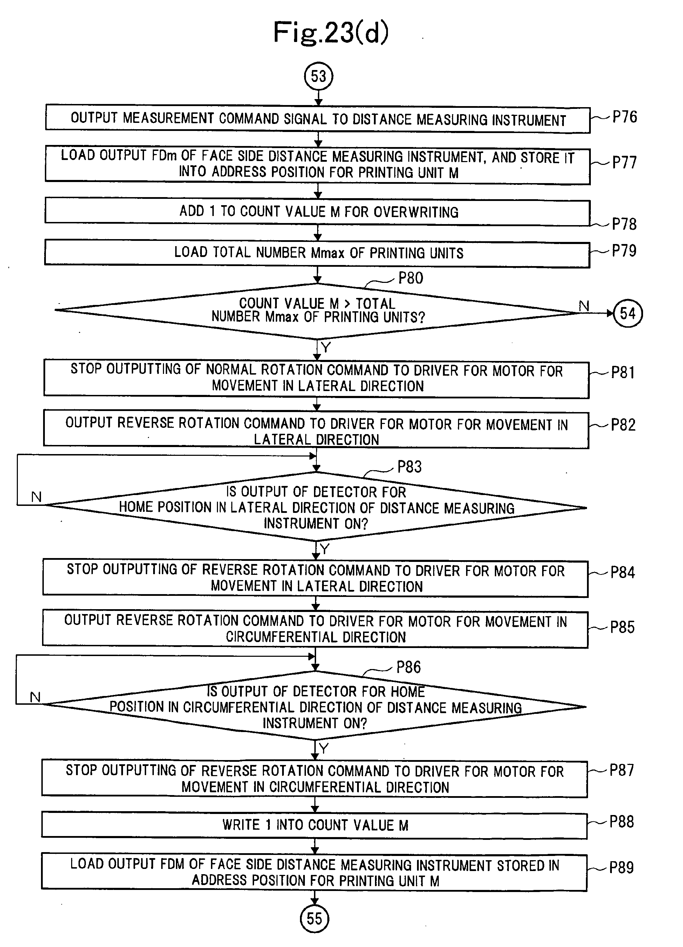

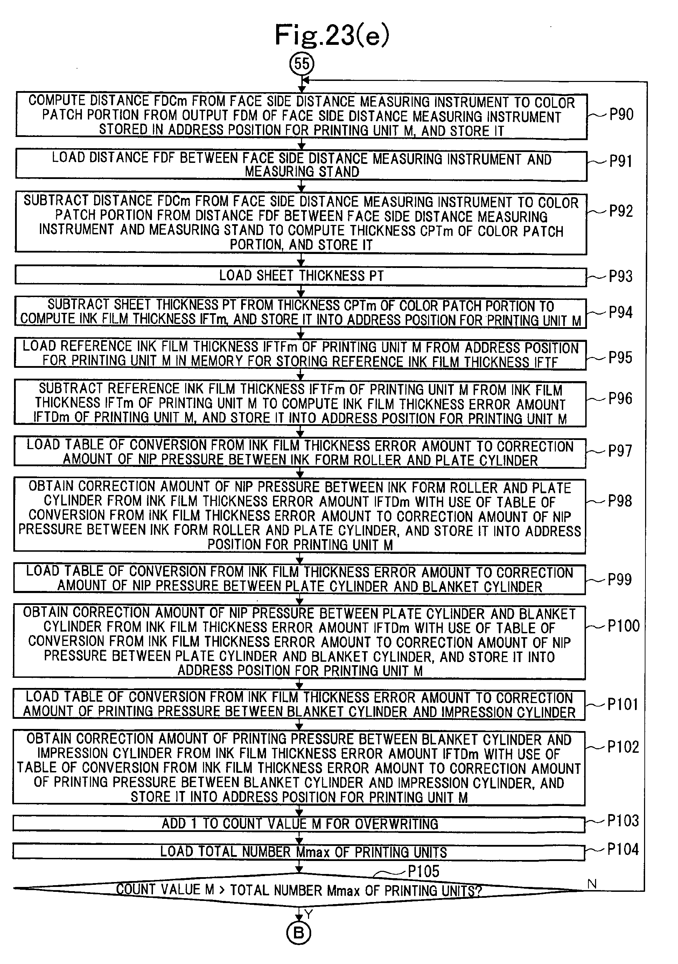

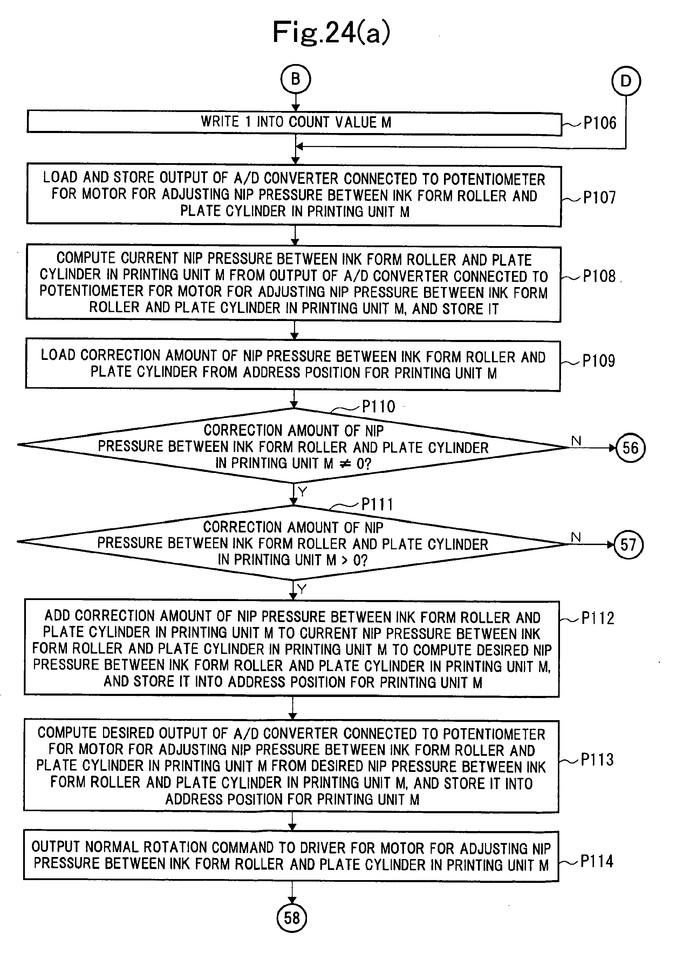

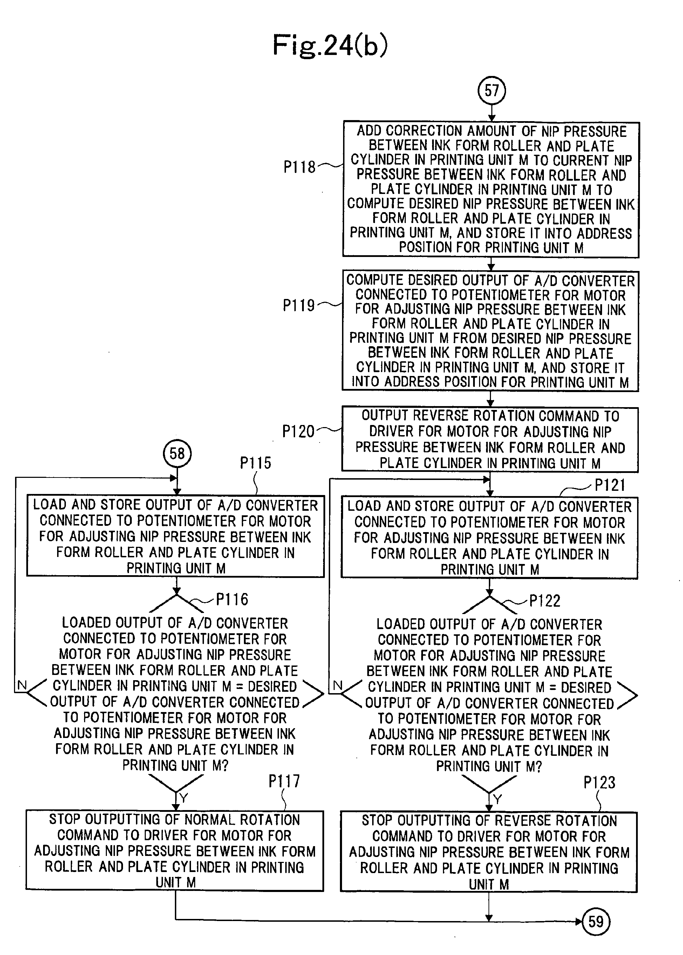

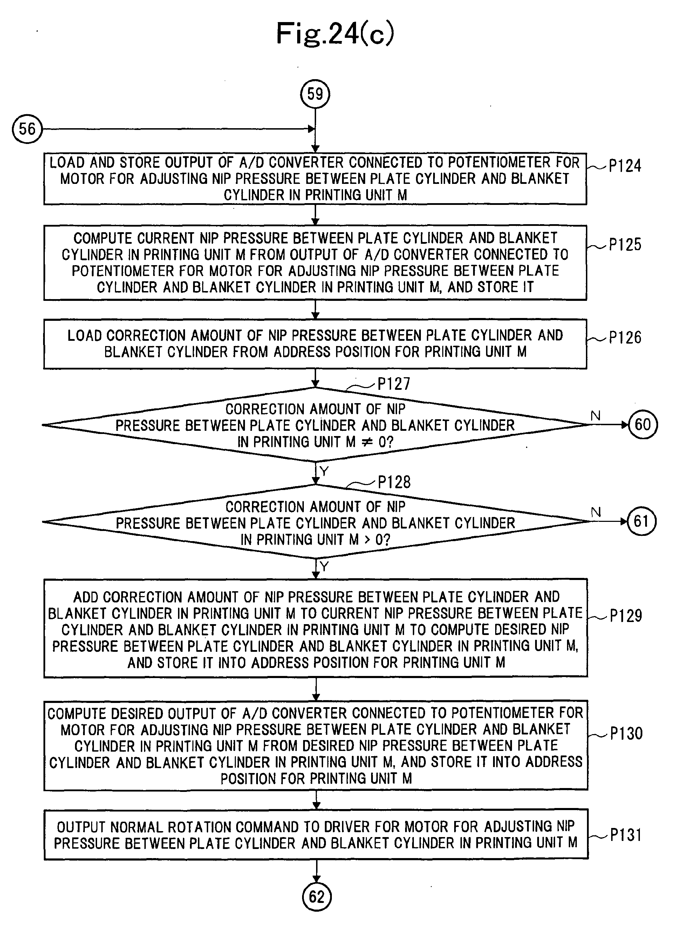

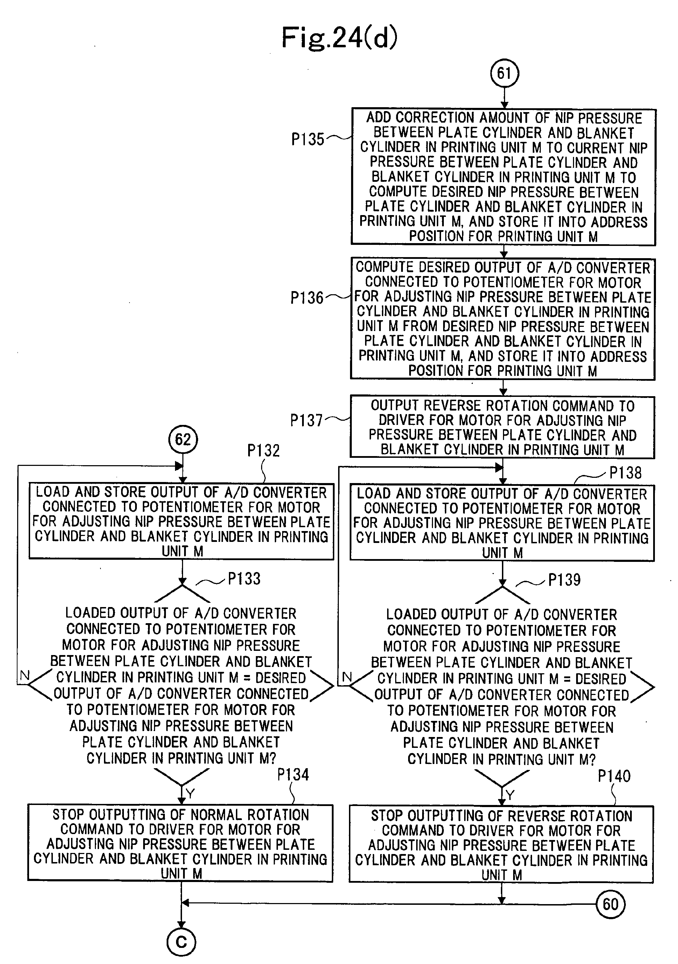

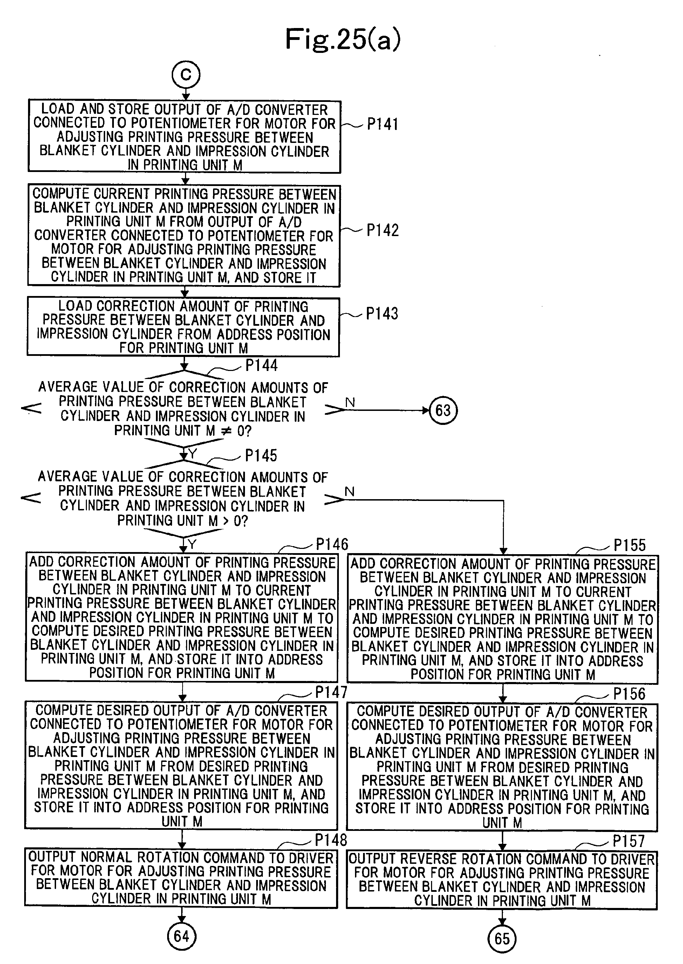

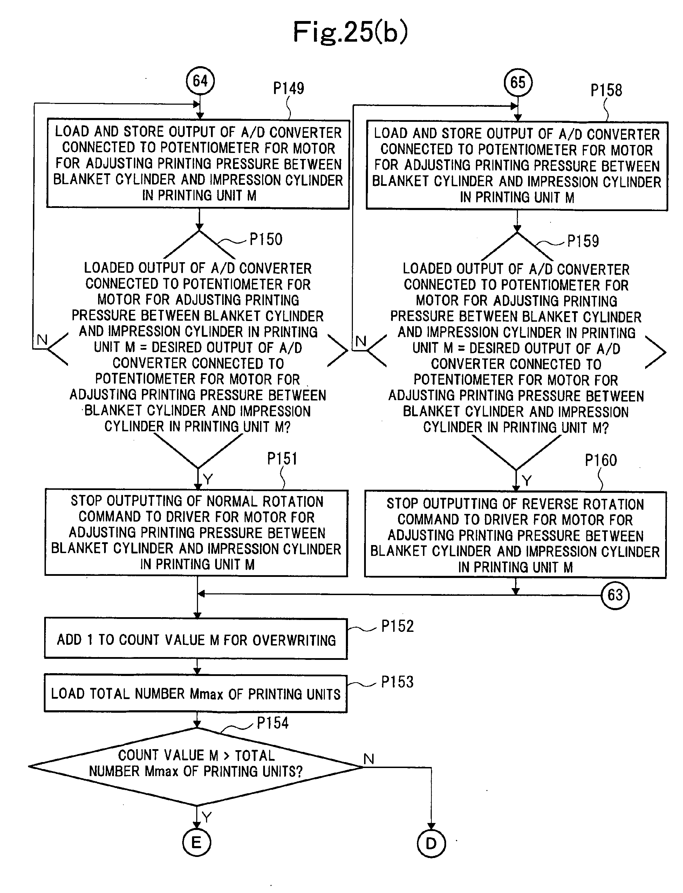

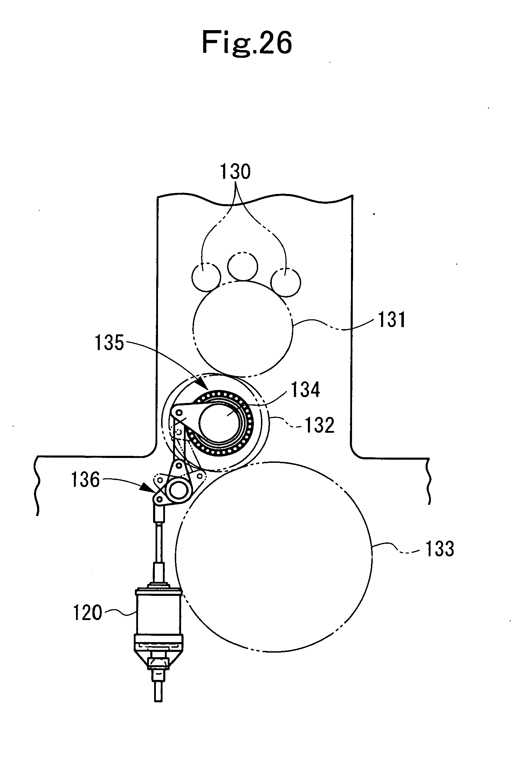

Figs. 21(a) to 21(c) are control block diagrams of a control device showing Embodiment 3 of the present invention. Figs. 22(a) to 22(c) are motion flow charts of the control device. Figs. 23(a) to 23(e) are motion flow charts of the control device. Figs. 24(a) to 24(d) are motion flow charts of the control device. Figs. 25(a) and 25(b) are motion flow charts of the control device. Fig. 26 is a schematic configurational drawing of a relief printing press.

In a relief printing press, as shown in Fig. 26, a sheet fed, for example, from a feeding device outside the drawing is passed on to a gripper of an impression cylinder 133, and gripped by the gripper for transport. Simultaneously, ink of an inking device outside the drawing is transferred and supplied onto the plate surface of a plate cylinder (relief printing cylinder) 131. From there, the ink is transferred to the sheet on the impression cylinder 133 via a blanket cylinder 132.

In the present embodiment, a nip pressure (contact pressure) between an ink form roller (first rotating part) 130 and the plate cylinder (secondrotatingpart) 131, anippressure (contactpressure) between the plate cylinder (first rotating part) 131 and the blanket cylinder (second rotating part) 132, and a printing pressure between the blanket cylinder (first rotating part) 132 and the impression cylinder (second rotating part) 133 can be adjusted automatically.

As a printing pressure adjusting mechanism for the printing pressure between the blanket cylinder 132 and the impression cylinder 133, it is preferred to adopt the mechanism of a configuration, as shown in Fig. 26, in which both end shafts 134 of the blanket cylinder 132 are supported by each eccentric bearing 135, and the eccentric bearing 135 is driven by a motor 120 via a link mechanism 136. As a nip pressure adjusting mechanism for the nip pressure between the ink form roller 130 and the plate cylinder 131, it is preferred to adopt the aforementioned mechanism of a configuration, for example, as shown in Fig. 9. As a nip pressure adjusting mechanism for the nip pressure between the plate cylinder 131 and the blanket cylinder 132, it is preferred to adopt the aforementioned mechanism of a configuration, for example, as shown in Fig. 11.

In the present embodiment, the ink film thickness of the printing image of the printed sheet is measured using the aforementioned printing product inspection device (see Figs. 12(a), 12(b)), and the nip pressure or printing pressure in each of the above-mentioned portions can be automatically adjusted by a control device 60 in accordance with the measured ink film thickness. In the present embodiment, the ink film thickness is measured using only the face side distance measuring instrument 50 of the aforementioned printing product inspection device (see Figs. 12(a), 12(b)), but may be measured using a dedicated printing product inspection device having the measuring instrument only on the face side.

The control device 60 comprises CPU 61, RAM 62, ROM 63, and input/output devices 64 to 69 connected together by a BUS line 72, as shown in Figs. 21(a) to 21(c). To the BUS line 72, the following memories are connected: A memory M1A for storing the number of the selected printing unit M, a memory M2 for storing the value of a counter for measuring the current position in the circumferential direction of the distance measuring instrument, a memory M3 for storing the current position in the circumferential direction of the distance measuring instrument, a memory M4 for storing the position in the circumferential direction of a sheet thickness measuring position to be measured by the distance measuring instrument, a memory M5 for storing the value of a counter for measuring the current position in the lateral direction of the distance measuring instrument, a memory M6 for storing the current position in the lateral direction of the distance measuring instrument, a memory M7 for storing the position in the lateral direction of the sheet thickness measuring position to be measured by the distance measuring instrument, a memory M8 for storing the output FD of the face side distance measuring instrument, a memory M10 for storing the distance FDP from the face side distance measuring instrument to the sheet, and a memory M12A for storing the distance FRD between the face side distance measuring instrument and a measuring stand.

To the BUS line 72, the following memories are further connected: A memory M13 for storing the sheet thickness PT, a memory M14 for storing the position in the circumferential direction of the color patch lines to be measured by the distance measuring instrument, a memory M15 for storing the count value M, a memory M16 for storing the position in the lateral direction of the color patch lines to be measured by the distance measuring instrument, a memory M17A for storing the total number Mmax of the printing units, a memory M18 for storing the distance FDCm from the face side distance measuring instrument to the color patch portion, a memory M25 for storing the color patch portion thickness CPTm, a memory M26 for storing the ink film thickness IFTm, a memory M27 for storing the reference ink film thickness IFTF, and a memory M28 for storing the ink film thickness error amount IFTDm.

To the BUS line 72, the following memories are further connected: A memory M73 for storing a table of conversion from the ink film thickness error amount to the correction amount of the nip pressure between the ink form roller and the plate cylinder, a memory M74 for storing the correction amount of the nip pressure between the ink form roller and the plate cylinder, a memory M75 for storing a table of conversion from the ink film thickness error amount to the correction amount of the nip pressure between the plate cylinder and the blanket cylinder, a memory M76 for storing the correction amount of the nip pressure between the plate cylinder and the blanket cylinder, a memory M77 for storing a table of conversion from the ink film thickness error amount to the correction amount of the printing pressure between the blanket cylinder and the impression cylinder, a memory M78 for storing the correction amount of the printing pressure between the blanket cylinder and the impression cylinder, a memory M79 for storing the output of an A/D converter connected to a potentiometer for a motor for adjusting the nip pressure between the ink form roller and the plate cylinder, a memory M80 for storing the current nip pressure between the ink form roller and the plate cylinder, a memory M81 for storing the desired nip pressure between the ink form roller and the plate cylinder, and a memory M82 for storing the desired output of the A/D converter connected to the potentiometer for the motor for adjusting the nip pressure between the ink form roller and the plate cylinder.

To the BUS line 72, the following memories are further connected: A memory M83 for storing the output of an A/D converter connected to a potentiometer for a motor for adjusting the nip pressure between the plate cylinder and the blanket cylinder, a memory M84 for storing the current nip pressure between the plate cylinder and the blanket cylinder, a memory M85 for storing the desirednippressure between the plate cylinder and the blanket cylinder, a memory M86 for storing the desired output of the A/D converter connected to the potentiometer for the motor for adjusting the nip pressure between the plate cylinder and the blanket cylinder, a memory M87 for storing the output of an A/D converter connected to a potentiometer for a motor for adjusting the printing pressure between the blanket cylinder and the impression cylinder, a memory M88 for storing the current printing pressure between the blanket cylinder and the impression cylinder, a memory M89 for storing the desired printing pressure between the blanket cylinder and the impression cylinder, and a memory M90 for storing the desired output of the A/D converter connected to the potentiometer for the motor for adjusting the printingpressure between the blanket cylinder and the impression cylinder.

To the input/output device 64, the following are connected: An input device 73 such as a keyboard, a display device 74 such as CRT or a display, and an output device 75 such as a printer or a floppy disk (registered trademark) drive. The aforementioned face side distance measuring instrument 50 is connected to the input/output device 65.

To the input/output device 66, the aforementioned motor 53 for movement in the circumferential direction is connected via a D/A converter 76 and a driver 77 for the motor for movement in the circumferential direction, and a rotary encoder 79 for the motor for movement in the circumferential direction, which is drivingly coupled to the motor 53, is connected via a counter 78 for measuring the current position in the circumferential direction. A detector 80 for a home position in the circumferential direction is also connected to the input/output device 66.

To the input/output device 66, the aforementioned motor 55 for movement in the lateral direction is connected via a D/A converter 81 and a driver 82 for the motor for movement in the lateral direction, and a rotary encoder 84 for the motor for movement in the lateral direction, which is drivingly coupled to the motor 55, is connected via a counter 83 for measuring the current position in the lateral direction. A detector 85 for a home position in the lateral direction is also connected to the input/output device 66.

To the input/output device 67, a motor 112 (corresponding to the motor 32 of Embodiment 1) for adjusting the nip pressure between the ink form roller and the plate cylinder is connected via a driver 111 for the motor for adjusting the nip pressure between the ink form roller and the plate cylinder, and a potentiometer 114 for the motor for adjusting the nip pressure between the ink form roller and the plate cylinder, which is drivingly coupled to the motor 112, is connected via an A/D converter 113.

To the input/output device 68, a motor 116 (corresponding to the motor 44 of Embodiment 1) for adjusting the nip pressure between the plate cylinder and the blanket cylinder is connected via a driver 115 for the motor for adjusting the nip pressure between the plate cylinder and the blanket cylinder, and a potentiometer 118 for the motor for adjusting the nip pressure between the plate cylinder and the blanket cylinder, which is drivingly coupled to the motor 116, is connected via an A/D converter 117.

To the input/output device 69, a motor 120 for adjusting the printing pressure between the blanket cylinder and the impression cylinder is connected via a driver 119 for the motor for adjusting the printing pressure between the blanket cylinder and the impression cylinder, and a potentiometer 122 for the motor for adjusting the printing pressure between the blanket cylinder and the impression cylinder, which is drivingly coupled to the motor 120, is connected via an A/D converter 121.

The above-mentioned input/output devices 67 to 69 serve for the printing unit for the first color, and the same configuration is adopted for the printing units for the second to fourth colors. Thus, duplicate explanations will be omitted.

The aforementioned control device 60 drivingly controls the above-mentioned motors 112, 116 and 120 in accordance with the ink film thickness measured using the aforementioned face side distance measuring instrument 50, thereby automatically adjusting the nip pressure orprintingpressure ineachof the above-mentionedportions.

The control actions or motions of the control device 60 configured as above will be described in detail based on the motion flow charts of Figs. 22(a) to 22(c), Figs. 23(a) to 23(e), Figs. 24(a) to 24(d), and Figs. 25(a) and 25(b).

In Step P1, it is determined whether an printing unit selection switch is ON. If the answer is Y (yes), the number M of the selected printing unit is stored into the memory M1A in Step P2. Then, in Step P3, it is determined whether a selection switch for adjusting the nip pressure between the ink form roller and the plate cylinder is ON. If the answer is N (no) in Step P1, the program directly shifts to Step P3.

Then, if the answer is Y in Step P3, it is determined in Step P4 whether a pressure adjustment completion switch is ON. Then, if the answer is N in Step P4, it is determined in Step P5 whether an up-button is ON. If the answer is N in Step P3 and the answer is Y in Step P4, on the other hand, the program shifts to Step P15 to be described later.

If the answer is Y in Step P5, the number M of the selected printing unit is loaded from the memory M1A in Step P6. Then, in Step P7, a normal rotation command is outputted to the driver 111 for the motor for adjusting the nip pressure between the ink form roller and the plate cylinder in the printing unit M. If the answer is N in Step P5, the program shifts to Step P10 to be described later.

Then, if the up-button is OFF in Step P8, outputting of the normal rotation command to the driver 111 for the motor for adjusting the nip pressure between the ink form roller and the plate cylinder in the printing unit M is stopped in Step P9.

Then, in Step P10, it is determined whether a down-button is ON. If the answer is Y, the number M of the selected printing unit is loaded from the memory M1A in Step P11. Then, in Step P12, a reverse rotation command is outputted to the driver 111 for the motor for adjusting the nip pressure between the ink form roller and the plate cylinder in the printing unit M.

Then, if the down-button is OFF in Step P13, outputting of the reverse rotation command to the driver 111 for the motor for adjusting the nip pressure between the ink form roller and the plate cylinder in the printing unit M is stopped in Step P14. Then, the program returns to Step P4. If the answer is N in Step P10, the program immediately returns to Step P4.

Then, in Step P15, it is determined whether a selection switch for adjusting the nip pressure between the plate cylinder and the blanket cylinder is ON. If the answer is Y inStep P15, it is determined in Step P16 whether a pressure adjustment completion switch is ON. Then, if the answer is N in Step P16, it is determined in Step P17 whether an up-button is ON. If the answer is N in Step P15 and the answer is Y in Step P16, on the other hand, the program shifts to Step P27 to be described later.

Then, if the answer is Y in Step P17, the number M of the selected printing unit is loaded from the memory M1A in Step P18. Then, in Step P19, a normal rotation command is outputted to the driver 115 for the motor for adjusting the nip pressure between the plate cylinder and the blanket cylinder in the printing unit M. If the answer is N in Step P17, the program shifts to Step P22 to be described later.

Then, if the up-button is OFF in Step P20, outputting of the normal rotation command to the driver 115 for the motor for adjusting the nip pressure between the plate cylinder and the blanket cylinder in the printing unit M is stopped in Step P21.

Then, in Step P22, it is determined whether a down-button is ON. If the answer is Y, the number M of the selected printing unit is loaded from the memory M1A in Step P23. Then, in Step P24, a reverse rotation command is outputted to the driver 115 for the motor for adjusting the nip pressure between the plate cylinder and the blanket cylinder in the printing unit M.

Then, if the down-button is OFF in Step P25, outputting of the reverse rotation command to the driver 115 for the motor for adjusting the nip pressure between the plate cylinder and the blanket cylinder in the printing unit M is stopped in Step P26. Then, the program returns to Step P16. If the answer is N in Step P22, the program immediately returns to Step P16.

Then, in Step P27, it is determined whether a selection switch for adjusting the printing pressure between the blanket cylinder and the impression cylinder is ON. If the answer is Y, it is determined in Step P28 whether a pressure adjustment completion switch is ON. Then, if the answer is N in Step P28, it is determined in Step P29 whether an up-button is ON. If the answer is N in Step P27 and the answer is Y in Step P28, on the other hand, the program shifts to Step P39 to be described later.

Then, if the answer is Y in Step P29, the number M of the selected printing unit is loaded from the memory M1A in Step P30. Then, in Step P31, a normal rotation command is outputted to the driver 119 for the motor for adjusting the printing pressure between the blanket cylinder and the impression cylinder in the printing unit M. If the answer is N in Step P29, the program shifts to Step P34 to be described later.

Then, if the up-button is OFF in Step P32, outputting of the normal rotation command to the driver 119 for the motor for adjusting the printing pressure between the blanket cylinder and the impression cylinder in the printing unit M is stopped in Step P33.

Then, in Step P34, it is determined whether a down-button is ON. If the answer is Y, the number M of the selected printing unit is loaded from the memory M1A in Step P35. Then, in Step P36, a reverse rotation command is outputted to the driver 119 for the motor for adjusting the printingpressure between the blanket cylinder and the impression cylinder in the printing unit M.

Then, if the down-button is OFF in Step P37, outputting of the reverse rotation command to the driver 119 for the motor for adjusting the printing pressure between the blanket cylinder and the impression cylinder is stopped in Step P38. Then, the program returns to Step P28. If the answer is N in Step P34, the program immediately returns to Step P28.

In accordance with the above-described steps, manual adjustment of each nip pressure or printing pressure by the operator is completed.

Then, in Step P39, it is determined whether a sheet thickness measuring switch is ON. If the answer is Y, in Step P40, a normal rotation command is outputted to the driver 77 for the motor for movement in the circumferential direction. Then, in Step P41, the value of the counter 78 for measuring the current position in the circumferential direction of the distance measuring instrument is loaded, and stored into the memory M2.

Then, in Step P42, the current position in the circumferential direction of the distance measuring instrument is computed from the value of the counter for measuring the current position in the circumferential direction of the distance measuring instrument, and stored into the memory M3. Then, in Step P43, the position in the circumferential direction of the sheet thickness measuring position to be measured by the distance measuring instrument is loaded from the memory M4.

Then, in Step P44, it is determined whether the current position in the circumferential direction of the distance measuring instrument is equal to the position in the circumferential direction of the sheet thickness measuring position to be measured by the distance measuring instrument. If the answer is Y, outputting of the normal rotation command to the driver 77 for the motor for movement in the circumferential direction is outputted in Step P45. If the answer is N, the program returns to Step P41.

Then, in Step P46, a normal rotation command is outputted to the driver 82 for the motor for movement in the lateral direction. Then, in Step P47, the value of the counter 83 for measuring the current position in the lateral direction of the distance measuring instrument is loaded, and stored into the memory M5. Then, in Step P48, the current position in the lateral direction of the distance measuring instrument is computed from the loaded value of the counter for measuring the current position in the lateral direction of the distance measuring instrument, and stored into the memory M6.

Then, in Step P49, the position in the lateral direction of the sheet thickness measuring position to be measured by the distance measuring instrument is loaded from the memory M7. Then, in Step P50, it is determined whether the current position in the lateral directionof the distance measuring instrument is equal to the position in the lateral direction of the sheet thickness measuring position to be measured by the distance measuring instrument. If the answer is Y, in Step P51, a measurement command signal is outputted to the distance measuring instrument. If the answer is N, the program returns to Step P47.

Then, in Step P52, the output FD of the face side distance measuring instrument 50 is loaded, and stored into the memory M8. Then, in Step P53, outputting of the normal rotation command to the driver 82 for the motor for movement in the lateral direction is stopped.

Then, in Step P54, a reverse rotation command is outputted to the driver 82 for the motor for movement in the lateral direction. Then, if the output of the detector 85 for the home position in the lateral direction of the distance measuring instrument is ON in Step P55, outputting of the reverse rotation command to the driver 82 for the motor for movement in the lateral direction is stopped in Step P56.

Then, in Step P57, a reverse rotation command is outputted to the driver 77 for the motor for movement in the circumferential direction. Then, if the output of the detector 80 for the home position in the circumferential direction of the distance measuring instrument is ON in Step P58, outputting of the reverse rotation command to the driver 77 for the motor for movement in the circumferential direction is stopped in Step P59.

Then, in Step P60, the distance FDP from the face side distance measuring instrument to the sheet is computed from the output FD of the face side distance measuring instrument 50, and stored into the memory M10. Then, in Step P61, the distance FDF between the face side distance measuring instrument and the measuring stand is loaded from the memory M12A. Then, in Step P62, the distance FDP from the face side distance measuring instrument to the sheet is subtracted from the distance FDF between the face side distance measuring instrument and the measuring stand to compute the sheet thickness PT, which is stored into the memory M13. Then, the program returns to Step P1.

In accordance with the above steps, the thickness of the sheet W, which is the object to be measured, ismeasured. The sheet thickness measuring position is set at a part of the sheet W, where nothing is printed, in other words, a part where neither the emboss nor the ink film is present.

If the answer is N in the aforementioned Step P39, on the other hand, it is determined in Step P63 whether a colorpatchmeasuring switch is ON. If the answer is Y, in Step P64, a normal rotation command is outputted to the driver 77 for the motor for movement in the circumferential direction. If the answer is N, the program returns to Step P1.

Then, in Step P65, the value of the counter 78 for measuring the current position in the circumferential direction of the distance measuring instrument is loaded, and stored into the memory M2. Then, in Step P66, the current position in the circumferential direction of the distance measuring instrument is computed from the loaded value of the counter for measuring the current position in the circumferential direction of the distance measuring instrument, and stored into the memory M3. Then, in Step P67, the position in the circumferential direction of the color patch lines to be measured by the distance measuring instrument is loaded from the memory M14.

Then, in Step P68, it is determined whether the current position in the circumferential direction of the distance measuring instrument is equal to the position in the circumferential direction of the color patch lines to be measured by the distance measuring instrument. If the answer is Y, outputting of the normal rotation command to the driver 77 for the motor for movement in the circumferential direction is stopped in Step P69. If the answer is N, the program returns to Step P65.

Then, in Step P70, 1 is written into the count value M of the memory M15. Then, in Step P71, a normal rotation command is outputted to the driver 82 for the motor for movement in the lateral direction. Then, inStepP72, the value of the counter 83 for measuring the current position in the lateral directionof the distance measuring instrument is loaded, and stored into the memory M5.

Then, in Step P73, the current position in the lateral direction of the distance measuring instrument is computed from the loaded value of the counter for measuring the current position in the lateral direction of the distance measuring instrument, and stored into the memory M6. Then, in Step P74, the position in the lateral direction of the color patch lines in the printing unit M to be measured by the distance measuring instrument is loaded from the memory M16.

Then, in Step P75, it is determined whether the current position in the lateral direction of the distance measuring instrument is equal to the position in the lateral direction of the color patch lines in the printing unit M to be measured by the distance measuring instrument. If the answer is Y, in Step P76, a measurement command signal is outputted to the distance measuring instrument. If the answer is N, the program returns to Step P72.

Then, in Step P77, the output FDm of the face side distance measuring instrument 50 is loaded, and stored into the address position for the printing unit M in the memory M8. Then, in Step P78, 1 is added to the count value M of the memory M15 for overwriting. Then, in Step P79, the total number Mmax of the printing units is loaded from the memory M17A. Then, in Step P80, it is determined whether the count value M is larger than the total number Mmax of the printing units. If the answer is Y, outputting of the normal rotation command to the driver 82 for the motor for movement in the lateral direction is stopped in Step P81. If the answer is N, the program returns to Step P72.

Then, in Step P82, a reverse rotation command is outputted to the driver 82 for the motor for movement in the lateral direction. Then, if the output of the detector 85 for the home position in the lateral direction of the distance measuring instrument is ON in Step P83, outputting of the reverse rotation command to the driver 82 for the motor for movement in the lateral direction is stopped in Step P84.

Then, in Step P85, a reverse rotation command is outputted to the driver 77 for the motor for movement in the circumferential direction. Then, if the output of the detector 80 for the home position in the circumferential directionof the distance measuring instrument is ON in Step P86, outputting of the reverse rotation command to the driver 77 for the motor for movement in the circumferential direction is stopped in Step P87.

In accordance with the above steps, the distance from the face side distance measuring instrument 50 to the color patch lines L printed in each printing unit is measured.

Then, in Step P88, 1 is written into the count value M of the memory M15. Then, the output FDm of the face side distance measuring instrument 50 stored in the address position for the printing unit M in the memory M8 is loaded in Step P89. Then, in Step P90, the distance FDCm from the face side distance measuring instrument to the color patch portion is computed from the output FDm of the face side distance measuring instrument 50 stored in the address position for the printing unit M in the memory M8, and the computed distance is stored into the memory M18.

Then, in Step P91, the distance FDF between the face side distance measuring instrument and the measuring stand is loaded from the memory M12A. Then, in Step P92, the distance FDCm from the face side distance measuring instrument to the color patch portion is subtracted from the distance FDF between the face side distance measuring instrument and the measuring stand to compute the thickness CPTm of the color patch portion, which is stored into the memory M25.

Then, in Step P93, the sheet thickness PT is loaded from the memory M13. Then, in Step P94, the sheet thickness PT is subtracted from the thickness CPTm of the color patch portion to compute the ink film thickness IFTm, which is stored into the address position for the printing unit M in the memory M26.

Then, in Step P95, the reference ink film thickness IFTFm of the printing unit M is loaded from the address position for the printing unit M in the memory M27 for storing the reference ink film thickness IFTF. Then, in Step P96, the reference ink film thickness IFTFm of the printing unit M is subtracted from the ink film thickness IFTm of the printing unit M to compute the ink film thickness error amount IFTDm of the printing unit M, which is stored into the address position for the printing unit M in the memory M28.

Then, in Step P97, the table of conversion from the ink film thickness error amount to the correction amount of the nip pressure between the ink form roller and the plate cylinder is loaded from the memory M73. Then, in Step P98, the correction amount of the nip pressure between the ink form roller and the plate cylinder is obtained from the ink film thickness error amount IFTDm with the use of the table of conversion from the ink film thickness error amount to the correction amount of the nip pressure between the ink form roller and the plate cylinder, and the obtained correction amount is stored into the address position for the printing unit M in the memory M74.

Then, in Step P99, the table of conversion from the ink film thickness error amount to the correction amount of the nip pressure between the plate cylinder and the blanket cylinder is loaded from the memory M75. Then, in Step P100, the correction amount of the nip pressure between the plate cylinder and the blanket cylinder is obtained from the ink film thickness error amount IFTDm with the use of the table of conversion from the ink film thickness error amount to the correction amount of the nip pressure between the plate cylinder and the blanket cylinder, and the obtained correction amount is stored into the address position for the printing unit M in the memory M76.

Then, in Step P101, the table of conversion from the ink film thickness error amount to the correction amount of the printing pressure between the blanket cylinder and the impression cylinder is loaded from the memory M77. Then, in Step P102, the correction amount of the printing pressure between the blanket cylinder and the impression cylinder is obtained from the ink film thickness error amount IFTDm with the use of the table of conversion from the ink film thickness error amount to the correction amount of the printing pressure between the blanket cylinder and the impression cylinder, and the obtained correction amount is stored into the address position for the printing unit M in the memory M78.

Then, in Step P103, 1 is added to the count value M of the memory M15 for overwriting. Then, in Step P104, the total number Mmax of the printing units is loaded from the memory M17A. Then, in Step P105, it is determined whether the count value M is larger than the total number Mmax of the printing units. If the answer is Y, the program shifts to Step P106. If the answer is N, the program returns to Step P89.

In accordance with the above steps, the correction amount of the nip pressure between the ink form roller and the plate cylinder, the correction amount of the nip pressure between the plate cylinder and the blanket cylinder, and the correction amount of the printing pressure between the blanket cylinder and the impression cylinder, in each printing unit, are obtained from the ink film thickness of the color patch lines L which has been measured.

Then, in Step P106, 1 is written into the count value M of the memory M15. Then, in Step P107, the output of the A/D converter 113 connected to the potentiometer 114 for the motor for adjusting the nip pressure between the ink form roller and the plate cylinder in the printing unit M is loaded, and stored into the memory M79. Then, in Step P108, the current nip pressure between the ink form roller and the plate cylinder in the printing unit M is computed from the output of the A/D converter 113 connected to the potentiometer 114 for the motor for adjusting the nip pressure between the ink form roller and the plate cylinder in the printing unit M, and the computed value is stored into the memory M80.

Then, in Step P109, the correction amount of the nip pressure between the ink form roller and the plate cylinder is loaded from the address position for the printing unit M in the memory M74. Then, in Step P110, it is determined whether the correction amount of the nip pressure between the ink form roller and the plate cylinder in the printing unit M is unequal to zero. If the answer is Y, in Step P111, it is determined whether the correction amount of the nip pressure between the ink form roller and the plate cylinder in the printing unit M is larger than zero. If the answer is N in Step P110, the program shifts to Step P124 to be described later.

If the answer is Y in the above Step P111, Step P112 is executed to add the correction amount of the nip pressure between the ink form roller and the plate cylinder in the printing unit M to the current nip pressure between the ink form roller and the plate cylinder in the printing unit M to compute the desired nip pressure between the ink form roller and the plate cylinder in the printing unit M, and store the desired nip pressure into the address position for the printing unit M in the memory M81. Then, in Step P113, the desired output of the A/D converter 113 connected to the potentiometer 114 for the motor for adjusting the nip pressure between the ink form roller and the plate cylinder in the printing unit M is computed from the desired nip pressure between the ink form roller and the plate cylinder in the printing unit M, and stored into the address position for the printing unit M in the memory M82.

Then, in Step P114, a normal rotation command is outputted to the driver 111 for the motor for adjusting the nip pressure between the ink form roller and the plate cylinder in the printing unit M. Then, in Step P115, the output of the A/D converter 113 connected to the potentiometer 114 for the motor for adjusting the nip pressure between the ink form roller and the plate cylinder in the printing unit M is loaded, and stored into the memory M79.

Then, in Step P116, it is determined whether the loaded output of the A/D converter 113 connected to the potentiometer 114 for the motor for adjusting the nip pressure between the ink form roller and the plate cylinder in the printing unit M is equal to the desired output of the A/D converter 113 connected to the potentiometer 114 for the motor for adjusting the nip pressure between the ink form roller and the plate cylinder in the printing unit M. If the answer is Y, the outputting of the normal rotation command to the driver 111 for the motor for adjusting the nip pressure between the ink form roller and the plate cylinder in the printing unit M is stopped in Step P117. Then, the program shifts to Step P124 to be described later. If the answer is N, the program returns to Step P115.

If the answer is N in the aforementioned Step P111, on the other hand, Step P118 is executed to add the correction amount of the nip pressure between the ink form roller and the plate cylinder in the printing unit M to the current nip pressure between the ink form roller and the plate cylinder in the printing unit M to compute the desired nip pressure between the ink form roller and the plate cylinder in the printing unit M, and store the desired nip pressure into the address position for the printing unit M in the memory M81. Then, in Step P119, the desired output of the A/D converter 113 connected to the potentiometer 114 for the motor for adjusting the nip pressure between the ink form roller and the plate cylinder in the printing unit M is computed from the desired nip pressure between the ink form roller and the plate cylinder in the printing unit M, and stored into the address position for the printing unit M in the memory M82.

Then, in Step P120, a reverse rotation command is outputted to the driver 111 for the motor for adjusting the nip pressure between the ink form roller and the plate cylinder in the printing unit M. Then, in Step P121, the output of the A/D converter 113 connected to the potentiometer 114 for the motor for adjusting the nip pressure between the ink form roller and the plate cylinder in the printing unit M is loaded, and stored into the memory M79.

Then, in Step P122, it is determined whether the loaded output of the A/D converter 113 connected to the potentiometer 114 for the motor for adjusting the nip pressure between the ink form roller and the plate cylinder in the printing unit M is equal to the desired output of the A/D converter 113 connected to the potentiometer 114 for the motor for adjusting the nip pressure between the ink form roller and the plate cylinder in the printing unit M. If the answer is Y, the outputting of the reverse rotation command to the driver 111 for the motor for adjusting the nip pressure between the ink form roller and the plate cylinder in the printing unit M is stopped in Step P123. Then, the program shifts to Step P124 to be described later. If the answer is N, the program returns to Step P121.

Then, in Step P124 , the output of the A/D converter 117 connected to the potentiometer 118 for the motor for adjusting the nip pressure between the plate cylinder and the blanket cylinder in the printing unit M is loaded, and stored into the memory M83. Then, in Step P125, the current nip pressure between the plate cylinder and the blanket cylinder in the printing unit M is computed from the output of the A/D converter 117 connected to the potentiometer 118 for the motor for adjusting the nip pressure between the plate cylinder and the blanket cylinder in the printing unit M, and the computed value is stored into the memory M84.

Then, in Step P126, the correction amount of the nip pressure between the plate cylinder and the blanket cylinder is loaded from the address position for the printing unit M in the memory M76. Then, in Step P127, it is determined whether the correction amount of the nip pressure between the plate cylinder and the blanket cylinder in the printing unit M is unequal to zero. If the answer is Y, in Step P128, it is determined whether the correction amount of the nip pressure between the plate cylinder and the blanket cylinder in the printing unit M is larger than zero. If the answer is N in Step P127, the program shifts to Step P141 to be described later.

If the answer is Y in the above Step P128, Step P129 is executed to add the correction amount of the nip pressure between the plate cylinder and the blanket cylinder in the printing unit M to the current nip pressure between the plate cylinder and the blanket cylinder in the printing unit M to compute the desired nip pressure between the plate cylinder and the blanket cylinder in the printing unit M, and store the desired nip pressure into the address position for the printing unit M in the memory M85. Then, in Step P130, the desired output of the A/D converter 117 connected to the potentiometer 118 for the motor for adjusting the nip pressure between the plate cylinder and the blanket cylinder in the printing unit M is computed from the desired nip pressure between the plate cylinder and the blanket cylinder in the printing unit M, and stored into the address position for the printing unit M in the memory M86.

Then, in Step P131, a normal rotation command is outputted to the driver 115 for the motor for adjusting the nip pressure between the plate cylinder and the blanket cylinder in the printing unit M. Then, in Step P132, the output of the A/D converter 117 connected to the potentiometer 118 for the motor for adjusting the nip pressure between the plate cylinder and the blanket cylinder in the printing unit M is loaded, and stored into the memory M83.

Then, in Step P133, it is determined whether the loaded output of the A/D converter 117 connected to the potentiometer 118 for the motor for adjusting the nip pressure between the plate cylinder and the blanket cylinder in the printing unit M is equal to the desired output of the A/D converter 117 connected to the potentiometer 118 for the motor for adjusting the nip pressure between the plate cylinder and the blanket cylinder in the printing unit M. If the answer is Y, the outputting of the normal rotation command to the driver 115 for the motor for adjusting the nip pressure between the plate cylinder and the blanket cylinder in the printing unit M is stopped in Step P134. Then, the program shifts to Step P141 to be described later. If the answer is N, the program returns to Step P132.

If the answer is N in the aforementioned Step P128, on the other hand, Step P135 is executed to add the correction amount of the nip pressure between the plate cylinder and the blanket cylinder in the printing unit M to the current nip pressure between the plate cylinder and the blanket cylinder in the printing unit M to compute the desired nip pressure between the plate cylinder and the blanket cylinder in the printing unit M, and store the desired nip pressure into the address position for the printing unit M in the memory M85. Then, in Step P136, the desired output of the A/D converter 117 connected to the potentiometer 118 for the motor for adjusting the nip pressure between the plate cylinder and the blanket cylinder in the printing unit M is computed from the desired nip pressure between the plate cylinder and the blanket cylinder in the printing unit M, and stored into the address position for the printing unit M in the memory M86.

Then, in Step P137, a reverse rotation command is outputted to the driver 115 for the motor for adjusting the nip pressure between the plate cylinder and the blanket cylinder in the printing unit M. Then, in Step P138, the output of the A/D converter 117 connected to the potentiometer 118 for the motor for adjusting the nip pressure between the plate cylinder and the blanket cylinder in the printing unit M is loaded, and stored into the memory M83.

Then, in Step P139, it is determined whether the loaded output of the A/D converter 117 connected to the potentiometer 118 for the motor for adjusting the nip pressure between the plate cylinder and the blanket cylinder in the printing unit M is equal to the desired output of the A/D converter 117 connected to the potentiometer 118 for the motor for adjusting the nip pressure between the plate cylinder and the blanket cylinder in the printing unit M. If the answer is Y, the outputting of the reverse rotation command to the driver 115 for the motor for adjusting the nip pressure between the plate cylinder and the blanket cylinder in the printing unit M is stopped in Step P140. Then, the program shifts to Step P141 to be described later. If the answer is N, the program returns to Step P138.

Then, in Step P141, the output of the A/D converter 121 connected to the potentiometer 122 for the motor for adjusting the printing pressure between the blanket cylinder and the impression cylinder in the printing unit M is loaded, and stored into the memory M87. Then, in Step P142, the current printing pressure between the blanket cylinder and the impression cylinder is computed from the output of the A/D converter 121 connected to the potentiometer 122 for the motor for adjusting the printing pressure between the blanket cylinder and the impression cylinder in the printing unit M, and the computed value is stored into the memory M88.

Then, in Step P143, the correction amount of the printing pressure between the blanket cylinder and the impression cylinder is loaded from the address position for the printing unit M in the memory M78. Then, in Step P144, it is determined whether the correction amount of the printing pressure between the blanket cylinder and the impression cylinder in the printing unit M is unequal to zero. If the answer is Y, in Step P145, it is determined whether the correction amount of the printing pressure between the blanket cylinder and the impression cylinder in the printing unit M is larger than zero. If the answer is N in Step P144, the program shifts to Step P152 to be described later.

If the answer is Y in the above Step P145, Step P146 is executed to add the correction amount of the printing pressure between the blanket cylinder and the impression cylinder to the current printing pressure between the blanket cylinder and the impression cylinder in the printing unit M to compute the desired printing pressure between the blanket cylinder and the impression cylinder in the printing unit M, and store the desired printing pressure into the address position for the printing unit M in the memory M89. Then, in Step P147, the desired output of the A/D converter 121 connected to the potentiometer 122 for the motor for adjusting the printing pressure between the blanket cylinder and the impression cylinder in the printingunit M is computed from the desiredprintingpressure between the blanket cylinder and the impression cylinder in the printing unit M, and stored into the address position for the printing unit M in the memory M90.

Then, in Step P148, a normal rotation command is outputted to the driver 119 for the motor for adjusting the printing pressure between the blanket cylinder and the impression cylinder in the printing unit M. Then, in Step P149, the output of the A/D converter 121 connected to the potentiometer 122 for the motor for adjusting the printing pressure between the blanket cylinder and the impression cylinder in the printing unit M is loaded, and stored into the memory M87.

Then, in Step P150, it is determined whether the loaded output of the A/D converter 121 connected to the potentiometer 122 for the motor for adjusting the printing pressure between the blanket cylinder and the impression cylinder in the printing unit M is equal to the desired output of the A/D converter 121 connected to the potentiometer 122 for the motor for adjusting the printing pressure between the blanket cylinder and the impression cylinder in the printing unit M. If the answer is Y, the outputting of the normal rotation command to the driver 119 for the motor for adjusting the printing pressure between the blanket cylinder and the impression cylinder in the printing unit M is stopped in Step P151. Then, the program shifts to Step P152 to be described later. If the answer is N, the program returns to Step P149.

If the answer is N in the aforementioned Step P145, on the other hand, Step P155 is executed to add the correction amount of the printing pressure between the blanket cylinder and the impression cylinder in the printing unit M to the current printing pressure between the blanket cylinder and the impression cylinder in the printing unit M to compute the desired printing pressure between the blanket cylinder and the impression cylinder in the printing unit M, and store the desired printing pressure into the address position for the printing unit M in the memory M89. Then, in Step P156, the desired output of the A/D converter 121 connected to the potentiometer 122 for the motor for adjusting the printing pressure between the blanket cylinder and the impression cylinder in the printingunit M is computed from the desiredprintingpressure between the blanket cylinder and the impression cylinder in the printing unit M, and stored into the address position for the printing unit M in the memory M90.

Then, in Step P157, a reverse rotation command is outputted to the driver 119 for the motor for adjusting the printing pressure between the blanket cylinder and the impression cylinder in the printing unit M. Then, in Step P158, the output of the A/D converter 121 connected to the potentiometer 122 for the motor for adjusting the printing pressure between the blanket cylinder and the impression cylinder in the printing unit M is loaded, and stored into the memory M87.

Then, in Step P159, it is determined whether the loaded output of the A/D converter 121 connected to the potentiometer 122 for the motor for adjusting the printing pressure between the blanket cylinder and the impression cylinder in the printing unit M is equal to the desired output of the A/D converter 121 connected to the potentiometer 122 for the motor for adjusting the printing pressure between the blanket cylinder and the impression cylinder in the printing unit M. If the answer is Y, the outputting of the reverse rotation command to the driver 119 for the motor for adjusting the printing pressure between the blanket cylinder and the impression cylinder in the printing unit M is stopped in Step P160. Then, the program shifts to Step P152 to be described later. If the answer is N, the program returns to Step P158.

Then, in Step P152, 1 is added to the count value M of the memory M15 for overwriting. Then, in Step P153, the total number Mmax of the printing units is loaded from the memory M17A. Then, in Step P154, it is determined whether the count value M is larger than the total number Mmax of the printing units. If the answer is Y, the program shifts to Step P1. If the answer is N, the program returns to Step P107.

In accordance with the above steps, the actual nip pressure of the respective portions and the actual printing pressure are corrected in response to the obtained correction amounts of the nip pressure between the ink form roller and the plate cylinder, the nip pressure between the plate cylinder and the blanket cylinder, and the printing pressure between the blanket cylinder and the impression cylinder, in each printing unit.

According to the present embodiment described above, in the relief printing press, the ink film thickness of the printed sheet W is measured using the face side distance measuring instrument 50. In accordance with the measured ink film thickness, the aforementioned motors 112, 116 and 120 are drivingly controlled, whereby the nip pressure between the ink form roller and the plate cylinder, the nip pressure between the plate cylinder and the blanket cylinder, and the printing pressure between the blanket cylinder and the impression cylinder in eachprintingunit are automaticallyadjusted.

Thus, printing troubles due to misadjustment of the nip pressure orprintingpressure owing to the operator' s manual operation can be avoided. Consequently, burden on the operator canbe lessened, and the ink film thickness can be controlled with high accuracy to decrease defective printing products (wasted sheets).

While the present invention has been described by the above embodiments, it is to be understood that the invention is not limited to these embodiments, but may be varied in many other ways. For example, the invention can be applied to a printing press different in cylinder arrangement, and structural changes in the nip pressure adjusting means or the printing press adjusting means in the respective portions can be made. Such variations are not to be regarded as a departure from the spirit and scope of the invention, and all such modifications as would be obvious to one skilled in the art are intended to be included within the scope of the appended claims.

## Claims

1. A printing quality control method for a printing press, which is an intaglio printing press including
an intaglio cylinder (14) which is supplied with ink,
an impression cylinder (13) opposing the intaglio cylinder, and holding a member (W) to be printed which is supplied with the ink from the intaglio cylinder, and
printing pressure adjusting means (41 to 49) for adjusting a printing pressure between the intaglio cylinder and the impression cylinder,
the printing quality control method, comprising:
providing emboss amount measuring means (50, 51) for measuring an emboss amount (EQm) of a printing product (W) of printing by the intaglio printing press;
measuring the emboss amount of the printingproduct of printing by the intaglio printing press; and
controlling the printing pressure adjusting means based on the emboss amount measured.

2. A printing quality control method for a printing press, which is an intaglio printing press or a relief printing press including
afirstrotatingpart (17a, 17b, 16, 15, 14) which is supplied with ink,
a second rotating part (17b, 16, 15, 14, 13) which is supplied with the ink from the first rotating part, and
contact pressure adjusting means (21 to 25; 26 to 32; 33 to 38; 41 to 49) for adjusting a contact pressure between the first rotating part and the second rotating part,
the printing quality control method, comprising:
providing ink film thickness measuring means (50, 51) for measuring an ink film thickness (IFTm) of a printing product (W) of printing by the intaglio printing press or the relief printing press;
measuring the ink film thickness of the printing product of printing by the intaglio printing press or the relief printing press; and
controlling the contact pressure adjusting means based on the ink film thickness measured.

3. A printing quality control method for a printing press, which is an intaglio printing press or a relief printing press including
a first rotating part (17a, 16A, 14; 132) which is supplied with ink,
a second rotating part (16A, 14 , 13; 133) opposing the first rotatingpart, and holding a member (W) to be printed which is supplied with the ink from the first rotating part, and
printing pressure adjusting means (41 to 49; 134, 135, 136, 120) for adjusting a printing pressure between the first rotating part and the second rotating part,
the printing quality control method, comprising:
providing ink film thickness measuring means (50, 51) for measuring an ink film thickness (IFTm) of a printing product (W) of printing by the intaglio printing press or the relief printing press;
measuring the ink film thickness of the printing product of printing by the intaglio printing press or the relief printing press; and
controlling the printing pressure adjusting means based on the ink film thickness measured.

4. A printing quality control apparatus for a printing press, which is an intaglio printing press including
an intaglio cylinder (14) which is supplied with ink,
an impression cylinder (13) opposing the intaglio cylinder, and holding a member (W) to be printed which is supplied with the ink from the intaglio cylinder, and
printing pressure adjusting means (41 to 49) for adjusting a printing pressure between the intaglio cylinder and the impression cylinder,
the printing quality control apparatus, comprising:
emboss amount measuring means (50, 51) for measuring an emboss amount (EQm) of a printing product (W) of printing by the intaglio printing press; and
control means (60) for controlling the printing pressure adjusting means based on the emboss amount measured by the emboss amount measuring means.

5. A printing quality control apparatus for a printing press, which is an intaglio printing press or a relief printing press including
a first rotating part (17a, 17b, 16, 15, 14) which is supplied with ink,
a second rotating part (17b, 16, 15, 14, 13) which is supplied with the ink from the first rotating part, and
contact pressure adjusting means (21 to 15; 26 to 32; 33 to 38; 41 to 49) for adjusting a contact pressure between the first rotating part and the second rotating part,
the printing quality control apparatus, comprising:
ink film thickness measuring means (50, 51) for measuring an ink film thickness (IFTm) of a printing product (W) of printing by the intaglio printing press or the relief printing press; and
control means (60) for controlling the contact pressure adjusting means based on the ink film thickness measured by the ink film thickness measuring means.

6. A printing quality control apparatus for a printing press, which is an intaglio printing press or a relief printing press including
a first rotating part (17a, 16A, 14; 132) which is supplied with ink,
a second rotating part (16A, 14, 13 ; 133) opposing the first rotatingpart, andholdingamember (W) to be printed which is supplied with the ink from the first rotating part, and
printing pressure adjusting means (41 to 49; 134, 135, 136, 120) for adjusting a printing pressure between the first rotating part and the second rotating part,
the printing quality control apparatus, comprising:
ink film thickness measuring means (50, 51) for measuring an ink film thickness (IFTm) of a printing product (W) of printing by the intaglio printing press or the relief printing press; and
control means (60) for controlling the printing pressure adjusting means based on the ink film thickness measured by the ink film thickness measuring means.
